# EUROPÄISCHE PATENTANMELDUNG

(11) **EP 4 600 019 A1**
(43) Veröffentlichungstag der Anmeldung: **13.08.2025**
(21) Anmeldenummer: 24156427.7
(22) Anmeldetag: 07.02.2024
(51) Int. Cl.: B29C 64/10, B29C 64/20, B29C 64/236, B29C 64/245, B29C 64/205, B29C 64/321, B22F 10/10, B22F 12/33, B22F 12/86, B22F 12/88, B33Y 10/00, B33Y 30/00, A61J 3/00

(54) **VORRICHTUNG ZUR HERSTELLUNG VON DREIDIMENSIONALEN SIEBDRUCKWERKSTÜCKEN**

(71) Anmelder: Exentis Knowledge GmbH, 5608 Stetten AG (CH)
(72) Erfinder: CLOOTS, Michael, 9008 St. Gallen (CH); WEINGART, Andreas, 79567 Weil am Rhein (DE); REICHENBACH, Michael, 79183 Waldkirch (DE); MATTMÜLLER, Mark, 79241 Ihringen (DE)
(74) Vertreter: Wenzel Nemetzade Warthmüller Patentanwälte Part mbB

(57) **Zusammenfassung**

Vorrichtung zur Herstellung von dreidimensionalen Siebdruckwerkstücken, insbesondere 3D-Siebdruckanlage, mit einem Drucksieb und mit einer Rakelvorrichtung zum Fluten des Drucksiebs mit einer Druckmasse und/oder zum Pressen von Druckmasse durch das Drucksieb, wobei die Rakelvorrichtung wenigstens ein Rakelwerkzeug, eine Sensoreinrichtung zur Erfassung von auf das Rakelwerkzeug wirkenden Rakelkräften sowie eine Steuereinrichtung zur Auswertung und/oder Speicherung von Sensordaten der Sensoreinrichtung aufweist, wobei die Steuereinrichtung dazu ausgebildet ist, mittels der Sensoreinrichtung und/oder aus erfassten und/oder abgespeicherten Sensordaten der Sensoreinrichtung eine Siebrückstellkraft und/oder Siebspannung des Drucksiebs zu ermitteln

## Beschreibung

Die vorliegende Erfindung betrifft eine Vorrichtung zur Herstellung von Siebdruckwerkstücken, insbesondere von dreidimensionalen Siebdruckwerkstücken. Ferner betrifft die vorliegende Erfindung eine Rakelvorrichtung, insbesondere für eine solche Vorrichtung. Ebenso betrifft die vorliegende Erfindung ein Verfahren zur Herstellung von Siebdruckwerkstücken, insbesondere von dreidimensionalen Siebdruckwerkstücken.

Aus dem deutschen Gebrauchsmuster DE 20 2019 101 066 U1 ist eine Vorrichtung zum Bewegen eines Rakels bekannt. Dabei hat die Vorrichtung einen Rakelträger, an welchem das Rakel angeordnet ist. Ferner ist das Rakel über eine Schwenkachse, die zwischen dem Rakelträger und einer Rakelversatzplatte der Vorrichtungen angeordnet ist, mit der Rakelversatzplatte verbunden. Wirkt nun eine Kraft auf das Rakel, läuft diese von dem Rakel über die Schwenkachse hin zur Rakelversatzplatte. Ferner ist die Schwenkachse so angeordnet, dass sie senkrecht zur Längsrichtung und im Wesentlichen parallel zu einer Rakelbewegungsrichtung des Rakels während eines Rakelvorgangs ausgerichtet ist.

Ebenfalls zwischen dem Rakel und der Rakelversatzplatte beziehungsweise an der Schwenkachse kann eine Kraftmesszelle angeordnet sein. Diese misst eine Zug- sowie eine Druckkraft und somit eine Anpresskraft des Rakels auf ein Siebdruckgewebe. Somit kann eine auf das Rakel und damit auch auf die Schwenkachse wirkende Kraft erfasst werden. Die hierdurch gewonnen Informationen haben jedoch eine nur begrenzte Aussagekraft. Trotz einer solchen Kraftmessung kann es während der Durchführung von Druckvorgängen beziehungsweise Rakelbewegungen zu unzureichenden Druckergebnissen beziehungsweise auch zu Beschädigungen des Drucksiebs und/oder der jeweiligen Siebdruckwerkstücke und/oder des jeweiligen Rakels kommen. Bei ungünstigen Rakelbewegungen beziehungsweise bei wiederholt ungünstiger Kontaktierung des Drucksiebs durch das Rakel kann sich auch ein hoher Verschleiß der jeweiligen Vorrichtungskomponenten einstellen, insbesondere des Drucksiebs.

Vor dem oben dargelegten Hintergrund bestand die Aufgabe der vorliegenden Erfindung darin, eine Vorrichtung zur Herstellung von dreidimensionalen Siebdruckwerkstücken anzugeben, die eine erhöhte Betriebssicherheit und gleichzeitig eine verbesserte Überwachung und Einstellbarkeit von Druck- und/oder Rakelprozessen gewährleistet. Ebenso bestand die Aufgabe darin, eine Rakelvorrichtung sowie ein Verfahren zur Herstellung von dreidimensionalen Siebdruckwerkstücken anzugeben.

In Bezug auf die Vorrichtung ist diese Aufgabe durch den Gegenstand des Anspruchs 1 gelöst worden. Ebenso ist diese Aufgabe durch den Gegenstand des Anspruchs 13 gelöst worden. Eine erfindungsgemäße Rakelvorrichtung ist Gegenstand von Anspruch 14. Ein erfindungsgemäßes Verfahren ist Gegenstand von Anspruch 15. Vorteilhafte Ausgestaltungen sind Gegenstand der abhängigen Ansprüche und werden nachfolgend erläutert.

Erfindungsgemäß ist eine Vorrichtung zur Herstellung von dreidimensionalen Siebdruckwerkstücken vorgesehen. Bei einer derartigen Vorrichtung kann es sich beispielsweise um eine 3D-Siebdruckanlage, bevorzugt um eine automatisierte 3D-Siebdruckanlage, handeln.

Die erfindungsgemäße Vorrichtung ist mit einem Drucksieb und mit einer Rakelvorrichtung zum Fluten des Drucksiebs mit einer Druckmasse und/oder zum Pressen von Druckmasse durch das Drucksieb ausgestattet. Dabei weist die Rakelvorrichtung wenigstens ein Rakelwerkzeug, und eine Sensoreinrichtung zur Erfassung von auf das Rakelwerkzeug wirkenden Rakelkräften sowie eine Steuereinrichtung zur Auswertung und/oder Speicherung von Sensordaten der Sensoreinrichtung auf, wobei die Steuereinrichtung dazu eingerichtet und/oder ausgebildet ist, mittels der Sensoreinrichtung und/oder aus erfassten und/oder abgespeicherten Sensordaten der Sensoreinrichtung eine Siebrückstellkraft und/oder eine Siebspannung des Drucksiebs zu ermitteln.

Folglich können mithilfe der Steuereinrichtung besonders vorteilhaft auf die mechanischen Eigenschaften des Drucksiebs beziehungsweise auch auf den Verschleiß des Drucksiebs oder auf etwaige Beschädigungen oder Fertigungsmängel des Drucksiebs rückgeschlossen werden.

Bei einer verhältnismäßig geringen Siebrückstellkraft und/oder Siebspannung beziehungsweise bei nach Kontaktierung des Drucksiebs nur langsam ansteigenden Rakelkräften kann auf einen hohen Verschleiß des Drucksiebs geschlossen werden. Die Prozessführung kann auf Grundlage der ermittelten Siebrückstellkraft und/oder Siebspannung in geeigneter Weise angepasst beziehungsweise die Standzeiten des Drucksiebs lassen sich hierdurch vorteilhaft verbessern.

Zudem kann eine ermittelte Siebrückstellkraft und/oder eine Siebspannung für die Ermittlung und/oder Einstellung einer für den jeweiligen Druckvorgang geeigneten Rakelkraft herangezogen und genutzt werden. Die Druckpräzision lässt sich hierdurch insgesamt verbessern.

Die Kraftmessung beziehungsweise Siebrückstellkraftermittlung und/oder Siebspannungsermittlung mittels einer erfindungsgemäßen Sensoreinrichtung und/oder einer Steuereinrichtung ermöglicht damit eine besonders vorteilhafte Prozessführung, durch die eine erhöhte Betriebssicherheit bei gleichzeitig verbesserter beziehungsweise präziserer Ausführung von Druck- beziehungsweise Rakelbewegungen sowie auch erhöhten Standzeiten ermöglicht wird. Im Ergebnis können qualitativ verbesserte Druckergebnisse sowie auch eine verbesserte Prozessführung während der Durchführung von Druck- beziehungsweise Rakelvorgängen gewährleistet werden.

Unter dreidimensionalem Siebdruck kann vorliegend in besonders bevorzugter Weise ein additives Fertigungsverfahren verstanden werden, bei dem eine pulverbasierte Suspension mithilfe eines Rakels durch eine feste Druckmaske beziehungsweise ein Drucksieb auf ein Substrat, wie zum Beispiel auf einen Drucktisch oder auf einen Werkstückträger oder eine vorher aufgebrachte Schicht eines Siebdruckwerkstücks übertragen und getrocknet wird. Diese Vorgehensweise kann mehrmals wiederholt werden, bis die jeweils gewünschte Bauteilhöhe oder Bauteilform erreicht wird. Insbesondere können bei dreidimensionalem Siebdruck mindestens zwei oder mindestens drei Druckschichten aufeinander erzeugt werden. In einem abschließenden Prozessschritt kann das so erzeugte Bauteil gesintert werden. Hierdurch kann ein Siebdruckwerkstück entstehen.

Ebenso kann unter dreidimensionalem Siebdruck vorliegend in besonders bevorzugter Weise ein additives Fertigungsverfahren verstanden werden, bei dem eine pulverbasierte Suspension mithilfe eines Rakels durch eine feste Druckmaske beziehungsweise ein Drucksieb auf ein Substrat übertragen und getrocknet wird, wobei bereits durch einen einmaligen Druck die jeweils gewünschte Bauteilhöhe oder Bauteilform erreicht wird. In einem abschließenden Prozessschritt kann ein auf diese Weise erzeugtes Bauteil gesintert werden und ein Siebdruckwerkstück entstehen. Soweit vorliegend von mehreren Druckvorgängen die Rede ist, kann anstelle dessen bereits ein Druckvorgang ausreichend und geeignet sein.

Unter Siebdruckwerkstück kann vorliegend in bevorzugter Weise ein Werkstück beziehungsweise ein dreidimensionales Druckerzeugnis verstanden werden, das einem Sinterschritt zu unterziehen ist beziehungsweise unterzogen worden ist. Dies betrifft insbesondere Werkstücke aus einem Metall, einer Keramik, einem Glasmaterial und/oder einem Kunststoffmaterial. Insbesondere kommen hierzu Legierungen aus Stahl, Nickel, Kupfer, Titan und/oder Keramiklegierungen in Betracht.

Druckerzeugnisse aus Kunststoffmaterialien können durch die Bezeichnung "dreidimensionales Siebdruckwerkstück" ausgeschlossen oder mitumfasst sein. Insbesondere besteht auch die Möglichkeit, gedruckte Werkstücklagen aus Kunststoffmaterial einem Sinterschritt zu unterziehen.

Unter Siebdruckwerkstück kann vorliegend ebenfalls ein Werkstück beziehungsweise ein dreidimensionales Druckerzeugnis verstanden werden, das frei von einem Sinterschritt hergestellt worden ist beziehungsweise frei von einem Sinterschritt fertigstellbar ist oder fertiggestellt wird. Mithin kann eine abschließende Aushärtung von Druckschichten auch frei von Sinterschritten erfolgen. Die Aushärtung eines Siebdruckwerkstücks kann in vorteilhafter Weise auch durch UV-Härtung und/oder durch eine Polymerisationsreaktion und/oder durch Trocknung, insbesondere durch Konvektionstrocknung, erfolgen. Eine derartige Aushärtung kann insbesondere dann bevorzugt vorgenommen werden, wenn eine abschließende Aushärtung von Druckschichten frei von Sinterschritten erfolgen soll.

Unter Siebdruckwerkstück kann vorliegend zusätzlich oder alternativ ein Werkstück beziehungsweise ein dreidimensionales Druckerzeugnis verstanden werden, dass vollständig durch dreidimensionalen Siebdruck erzeugt worden ist.

Unter Siebdruckwerkstück kann vorliegend ebenso ein Werkstück beziehungsweise ein dreidimensionales Druckerzeugnis verstanden werden, dass zumindest teilweise oder abschnittsweise durch dreidimensionalen Siebdruck erzeugt worden ist. Mithin kann ein Siebdruckwerkstück durch Auftragen mindestens einer Druckschicht oder auch einer Mehrzahl von Druckschichten auf ein anderweitig bereitgestelltes Substrat erzeugt werden, wobei das Substrat einen Teil des fertigen Werkstücks bildet.

Bei einem Siebdruckwerkstück im Sinne der vorliegenden Erfindung kann es sich ferner um ein pharmazeutisches Erzeugnis und/oder um ein biologisches Erzeugnis handeln. Solche Siebdruckwerkstücke können unter anderem aus pharmazeutischen Pulvermaterialien und/oder Pulvergemischen und/oder Granulaten und/oder aus biologischen Materialien hergestellt sein. Insbesondere können pharmazeutische Erzeugnisse und/oder biologische Erzeugnisse frei von Sinterschritten fertiggestellt beziehungsweise für die jeweilige Anwendung ausreichend ausgehärtet werden.

Siebdruckwerkstücke hergestellt aus pharmazeutischen Pulvermaterialien und/oder Pulvergemischen und/oder Granulaten können Arzneistoffe, Wirkstoffe, Hilfsstoffe, insbesondere Füllmittel und/oder Bindemittel und/oder Sprengmittel und/oder Gleitmittel, aufweisen.

Gemäß einer bevorzugten Ausgestaltung der vorliegenden Erfindung kann die Vorrichtung zur Herstellung von dreidimensionalen Siebdruckwerkstücken für die Produktion unter Reinraumbedingungen ausgebildet und/oder eingerichtet sein. Insbesondere kann die Vorrichtung für die Produktion unter Reinraumbedingungen gemäß Reinraumklassen den A, B, C und/oder D nach EU-GMP ausgebildet und/oder eingerichtet sein.

Weiter bevorzugt kann eine erfindungsgemäße Vorrichtung zur Herstellung von dreidimensionalen Siebdruckwerkstücken für die Anwendung in der Medizintechnik, in der Optik- und/oder Lasertechnologie, in der Luft- und Raumfahrtechnik, in der Halbleitertechnik, in der Biotechnologie und/oder in der medizinischen und/oder in der pharmakologischen Forschung ausgebildet und/oder eingerichtet sein.

Ebenso kann die erfindungsgemäße Vorrichtung zur Herstellung von dreidimensionalen Siebdruckwerkstücken für den Einsatz und/die Anwendung als medizinische und/oder pharmazeutische Produkte, Implantate und/oder sterile Produkte und/oder Medikamente und/oder für den Einsatz und/die Anwendung als Tabletten zur Wirkstoffverabreichung ausgebildet und/oder eingerichtet sein.

Bei einem Siebdruckwerkstück kann es sich gemäß der vorliegenden Erfindung um ein Werkstück handeln, das durch dreidimensionalen Siebdruck in einem oder in mehreren Druckvorgängen auf einem Werkstückträger aufgebaut wird. Dabei handelt es sich bei dem Siebdruckwerkstück insbesondere um ein Werkstück, welches nach Abschluss des Druckvorgangs und/oder nach Abschluss eines sich an den Druckvorgang anschließenden Sintervorgangs wieder von dem jeweiligen Werkstückträger lösbar ist, insbesondere zerstörungsfrei lösbar ist.

Zwischen etwaigen Druckvorgängen für ein Siebdruckwerkstück kann der jeweilige Werkstückträger von dem Drucktisch beziehungsweise von der Drucktischplatte gelöst werden beziehungsweise von dieser lösbar sein. Die einzelnen Schichten eines Siebdruckwerkstücks - bei mehrschichtigem Aufbau - können zwischen zwei aufeinanderfolgenden Druckvorgängen in einer von dem Drucktisch beziehungsweise von der Drucktischplatte entfernten Stellung getrocknet werden.

Gemäß einer bevorzugten Ausgestaltung kann die Steuereinrichtung dazu ausgebildet sein, mittels der Sensoreinrichtung und/oder aus erfassten und/oder abgespeicherten Sensordaten der Sensoreinrichtung eine relative Siebrückstellkraft und/oder relative Siebspannung des Drucksiebs zu ermitteln. Eine relative Siebrückstellkraft und/oder relative Siebspannung kann Siebspannungsunterschiede und/oder Siebrückstellkraftunterschiede an unterschiedlichen Abschnitten des jeweiligen Drucksiebs spezifizieren. Ebenso kann durch eine relative Siebspannung ein Siebspannungsunterschied zwischen zwei unterschiedlichen Zuständen, insbesondere Verschleißzuständen und/oder Alterungszuständen, eines Drucksiebs spezifiziert sein. Eine relative Siebrückstellkraft kann Siebrückstellkraftunterschiede an unterschiedlichen Abschnitten des jeweiligen Drucksiebs und/oder Siebrückstellkraftunterschiede zwischen zwei unterschiedlichen Zuständen, insbesondere Verschleißzuständen und/oder Alterungszuständen, spezifizieren.

Gemäß einer bevorzugten Ausgestaltung kann die Steuereinrichtung dazu ausgebildet sein, mittels der Sensoreinrichtung und/oder aus erfassten und/oder abgespeicherten Sensordaten der Sensoreinrichtung und/oder auf Grundlage einer Siebrückstellkraft und/oder Siebspannung oder mehrerer Siebrückstellkräfte und/oder mehrere Siebspannungen einen Siebverschleiß und/oder eine Siebalterung zu ermitteln. Eine solche Ermittlung kann mit verhältnismäßig geringem Rechenaufwand und mit gleichzeitig hoher Sicherheit vorgenommen werden.

Gemäß einer noch weiter bevorzugten Ausgestaltung kann die Steuereinrichtung dazu ausgebildet sein, eine Bestimmung der Siebrückstellkraft und/oder der Siebspannung zwischen Druckvorgängen vorzunehmen und/oder periodisch zu wiederholen und/oder eine Bestimmung des Siebverschleißes und/oder der Siebalterung periodisch zu wiederholen. Somit ist gemäß vorbestimmbarer oder vorbestimmter Prozessabläufe von der Steuereinrichtung der Siebverschleiß oder die Siebalterung bestimmbar. Anhand des jeweiligen Ergebnisses kann mit hoher Sicherheit eine Mindestdruckqualität der Vorrichtung sichergestellt werden.

Weiter bevorzugt kann die Steuereinrichtung dazu ausgebildet sein, eine Bestimmung der Siebrückstellkraft und/oder Siebspannung und/oder eine Bestimmung der Siebrückstellkraftänderung und/oder der Siebspannungsänderung während der Durchführung eines Druckvorgangs vorzunehmen. Die hierdurch zu schaffende Informationsdichte beziehungsweise Datengrundlage kann mithin verbessert oder erweitert werden.

Gemäß einer noch weiter bevorzugten Ausgestaltung kann die Steuereinrichtung dazu ausgebildet sein, die Höhenposition und/oder Ausrichtung und/oder Neigungslage des Drucksiebs nach Abschluss eines Druckvorganges und/oder vor Beginn eines Druckvorganges zu steuern und/oder zu regeln. Auf diese Weise ist die Steuereinrichtung in der Lage, das Drucksieb in seiner räumlichen Ausrichtung dahingehend einzustellen, dass beispielsweise ein konstanter Druck der Rakelvorrichtung beziehungsweise deren Rakelwerkzeugs gewährleistbar ist. Die Ausrichtung des Drucksiebs kann auf die Ausrichtung des Rakels angepasst werden oder eine Steuerung und/oder Regelung kann unter Berücksichtigung der Ausrichtung des Drucksiebs und des Rakelwerkzeugs erfolgen. Ein hochqualitatives Druckbild über das gesamte Drucklayout eines Drucksiebs kann hierdurch mit weiter verbesserter Sicherheit erreicht werden.

Gemäß einer noch weiter bevorzugten Ausgestaltung kann die Steuereinrichtung dazu ausgebildet sein, die Höhenposition und/oder Ausrichtung und/oder Neigungslage des Drucksiebs in Abhängigkeit von gespeicherten und/oder verarbeiteten Messdaten der Sensoreinrichtung und/oder einzelner Kraftmesssensoren der Sensoreinrichtung und/oder in Abhängigkeit einer ermittelten Siebspannung und/oder Siebrückstellkraft und/oder Auftragskraft und/oder Siebalterung zu steuern und/oder zu regeln. Demzufolge ist es möglich, über die Höhenposition, Ausrichtung und/oder Neigungslage des Drucksiebs anhand von Messdaten der Sensoreinrichtung die räumliche Orientierung des Drucksiebes zu steuern und/oder zu regeln. Über Rückmeldung der Sensoreinrichtung kann beispielsweise die räumliche Ausrichtung des Drucksiebes so angepasst werden, dass eine Rakelkraft auf das Drucksieb und über das gesamte Drucklayout oder die gesamte Fläche des Drucksiebs konstant ist oder - je nach gewünschter Prozessführung oder gewünschten Prozessparametern - Abweichungen aufweist.

Gemäß einer noch weiter bevorzugten Ausgestaltung kann die Steuereinrichtung dazu ausgebildet sein, die Höhenposition und/oder Ausrichtung und/oder Neigungslage des Drucksiebs während der Durchführung eines Druckvorganges kraftbasiert zu steuern und/oder zu regeln. Auf diese Weise ist die Steuereinrichtung in der Lage, die räumliche Ausrichtung des Drucksiebs anhand von gemessenen Kräften, die beispielsweise auf die Rakelvorrichtung beziehungsweise auf das Rakelwerkzeug einwirken, flexibel während eines Druck- beziehungsweise Rakelvorgangs anzupassen beziehungsweise einzustellen. Die Fertigungsgenauigkeit und -flexibilität kann hierdurch weiter verbessert werden.

Gemäß einer noch weiter bevorzugten Ausgestaltung kann die Steuereinrichtung dazu ausgebildet sein, die Höhenposition und/oder Ausrichtung und/oder Neigungslage des Drucksiebs in Abhängigkeit von Messdaten fortlaufender und/oder wiederkehrender Erfassungen der Sensoreinrichtung und/oder einzelner Kraftmesssensoren und/oder in Abhängigkeit einer ermittelten Siebspannung und/oder Siebrückstellkraft und/oder Auftragskraft während einer mittels der Rakelbewegungseinrichtung erfolgenden Bewegung der Rakelvorrichtung entlang der Rakelbewegungseinrichtung und/oder während eines Druckvorganges zu steuern und/oder zu regeln. Durch eine solche Ausgestaltung der Steuereinrichtung kann mithin während des Betriebs der Vorrichtung beziehungsweise während einer Bewegung der Rakelvorrichtung mithilfe einer Rakelbewegungseinrichtung die räumliche Lage und/oder Ausrichtung des Drucksiebs anhand erfasster Messdaten der Sensoreinrichtung angepasst und/oder gesteuert und/oder geregelt werden. Die Präzision eines Druckvorgangs kann auf diese Weise noch weiter verbessert werden.

Gemäß einer noch weiter bevorzugten Ausgestaltung kann die Sensoreinrichtung zur Erfassung einer Rakelkraftabweichung entlang einer Längserstreckung des Rakelwerkzeugs ausgebildet sein. Somit also die auf das Rakelwerkzeug wirkenden Rakelkräfte entlang der Längserstreckung des Rakelwerkzeugs beziehungsweise unterschiede der Rakelkräfte entlang der Längserstreckung erfasst werden. Dadurch kann die Gleichmäßigkeit oder eben auch eine Ungleichmäßigkeit der Krafteinwirkung vom Rakelwerkzeug auf das Drucksieb in die Prozessführung bei der Ausführung von Druck- beziehungsweise Rakelvorgängen einfließen. Einer Ungleichmäßigkeit der Krafteinwirkung kann dabei entweder durch die Prozessführung beziehungsweise durch die Anpassung der Vorrichtungseinstellungen entgegengewirkt werden oder eine Ungleichmäßigkeit der Krafteinwirkung kann gewollt sein oder gezielt erzeugt werden.

Insgesamt kann hierdurch in besonders vorteilhafter Weise ein korrektes und gleichmäßiges Anliegen des Rakels auf einem Siebdruckgewebe beziehungsweise auf einem Drucksieb ermöglicht werden. Ebenso wird hierdurch ermöglicht, dass ein prozessbedingt und/oder verschleißbedingt angepasstes beziehungsweise auch gewollt ungleichmäßiges Anliegen des Rakels auf einem Siebdruckgewebe beziehungsweise auf einem Drucksieb umgesetzt wird.

Ein zunächst ungleichmäßiges Anliegen des Rakels auf einem Siebdruckgewebe kann, beispielsweise bei ungleichmäßigem Verschleiß des Drucksiebs, während der Ausführung einer Druck- beziehungsweise Rakelbewegung wiederum gleichmäßige Rakelkräfte erzeugen. Mithin kann erfindungsgemäß eine vorteilhafte Anpassung an die vorherrschenden Verschleißbedingungen erfolgen und die Standzeiten lassen sich erhöhen. Ferner kann mit einer solchen Sensoreinrichtung in vorteilhafter Weise auch der Verschleiß von Vorrichtungskomponenten verringern oder der Verschleißfortschritt verlangsamt werden.

Schließlich lässt sich mit einer erfindungsgemäßen Sensoreinrichtung eine verhältnismäßig sichere und überwachbare, räumliche Ausrichtung des Rakelwerkzeugs während der Durchführung von Druck- beziehungsweise Rakelvorgängen realisieren. Im Ergebnis können qualitativ weiter verbesserte Druckergebnisse sowie auch eine verbesserte Prozessführung während der Durchführung von Druckbeziehungsweise Rakelvorgängen gewährleistet werden.

Gemäß einer bevorzugten Ausgestaltung kann die Vorrichtung zur Herstellung von dreidimensionalen Siebdruckwerkstücken eine zumindest das Drucksieb und/oder die Rakelvorrichtung aufweisende Druckeinrichtung für die schichtweise Erzeugung zumindest eines Siebdruckwerkstücks in mehreren Siebdruckvorgängen aufweisen. Ergänzend oder alternativ kann die Vorrichtung zur Herstellung von dreidimensionalen Siebdruckwerkstücken eine zumindest das Drucksieb und/oder die Rakelvorrichtung aufweisende Druckeinrichtung für den Schichtauftrag auf ein Werkstück in zumindest einem Siebdruckvorgang aufweisen. Mithilfe der Druckeinrichtung ist also ein Siebdruckwerkstück erzeugbar, nämlich auf besonders zuverlässige Weise und mit hoher Produktivität. Bei einem solchen Siebdruckwerkstück kann es sich beispielsweise um ein Bauteil aus dem Fahrzeugbau oder um personalisierte Medikamente, in Form von Tabletten, handeln.

Dabei kann die Druckeinrichtung zumindest einen Drucktisch für die Positionierung eines Werkstückträgers und/oder eines Werkstücks unterhalb des Drucksiebs und/oder unterhalb der Rakelvorrichtung aufweisen. Dies gewährleistet in vorteilhafter Weise eine sichere und stabile Positionierung des jeweiligen Werkstückträgers und/oder des jeweiligen Werkstücks und ermöglicht damit einen sicheren und präzisen Druckprozess.

Weiter bevorzugt kann die Druckeinrichtung zumindest eine Siebaufnahme zur Aufnahme des Drucksiebs aufweisen und/oder die Siebaufnahme kann zur Justierung der Höhenposition und/oder der Ausrichtung und/oder der Neigungslage des Drucksiebs ausgebildet sein. Hierdurch kann eine sichere Positionierung des Drucksiebs und auch eine einfache und zuverlässige Anpassung der Lage des Drucksiebs gewährleistet werden.

Außerdem ist es gemäß einer weiter bevorzugten Ausgestaltung möglich, dass die Sensoreinrichtung zumindest einen Kraftmesssensor oder zumindest zwei Kraftmesssensoren aufweist, insbesondere zwei parallel geschaltete Kraftmesssensoren. Mithilfe dieser Ausgestaltung ist es möglich, wirkende Rakelkräfte und/oder Rakelkraftabweichungen entlang der Längserstreckung des Rakelwerkzeugs mit hoher Sicherheit zu erfassen. Zudem ist eine solche Ausgestaltung kostengünstig und mit einem nur begrenzten Konstruktionsaufwand zu bewerkstelligen.

Ferner können die Kraftmesssensoren entlang einer Längserstreckung des Rakelwerkzeugs zueinander beabstandet angeordnet sein. Diese Ausgestaltung erlaubt es, mithilfe der Kraftmesssensoren an zueinander beabstandeten Punkten des Rakelwerkzeugs beziehungsweise an zueinander beabstandeten Messstellen Kräfte zu erfassen. Dadurch kann sichergestellt werden, dass die Krafteinwirkung des Rakelwerkzeugs auf das Drucksieb und/oder auf einen Drucktisch beispielsweise gleichmäßig ist oder - je nach gewünschter Prozessführung - gezielt ungleichmäßig eingestellt werden kann.

Ebenso begünstigt eine solche Ausgestaltung die Erzeugung besonders genauer Schichtdicken beziehungsweise einen besonders genauen Schichtauftrag auf ein Werkstück beziehungsweise auf einen Werkstückträger oder auf eine Druckunterlage. Die jeweilige Schichtdicke kann im Betrieb unter Nutzung einer solchen Sensoreinrichtung besonders gut reproduzierbar und auch konstant über mehrere Druckvorgänge eingehalten werden.

Ferner kann durch eine solche Ausgestaltung an unterschiedlichen Druckstellen eines Drucklayouts, das durch ein Drucksieb definiert wird, ein bewusst ungleicher Schichtauftrag realisiert werden, beispielsweise für den Ausgleich von vorangegangenen Fertigungsungenauigkeiten.

Schließlich kann mithilfe der Kraftmesssensoren die räumliche Ausrichtung beziehungsweise Orientierung des Rakelwerkzeugs durch Vergleich der durch die Kraftmesssensoren erfassten Kräfte besonders zuverlässig überprüft oder gegebenenfalls gezielt beeinflusst werden.

In weiter bevorzugter Ausgestaltung können die Kraftmesssensoren zur gleichzeitigen Messung von absoluten Rakelkräften an voneinander entlang der Längserstreckung des Rakelwerkzeugs beabstandeten Messstellen ausgebildet sein. Die gleichzeitige Messung von absoluten Rakelkräften an voneinander beabstandeten Messstellen erlaubt den direkten Vergleich der erfassten beziehungsweise gemessenen Rakelkräfte der Kraftmesssensoren miteinander. Dies ermöglicht zudem eine zeitgleiche Verarbeitung der erfassten Messdaten und somit die Implementierung besonders sicherer und zuverlässiger Regelkreise.

Außerdem können die Kraftmesssensoren zur Erfassung von relativen Rakelkraftabweichungen an entlang der Längserstreckung des Rakelwerkzeugs beabstandeten Messstellen ausgebildet sein. Diese Ausgestaltung ermöglicht es, beispielsweise während eines Druckvorganges, in welchem das Rakelwerkzeug über ein Drucksieb streicht, die Rakelkräfte entlang einer Rakelbewegungsrichtung des Rakelwerkzeugs beziehungsweise während des Verfahrens des Rakelwerkzeugs zu erfassen und mit nur geringem Aufwand eine relative Rakelkraftabweichung zu ermitteln. Somit kann beispielsweise für nachfolgende Druckprozesse und/oder für einen noch laufenden Druckprozess Einfluss auf etwaige Druckparameter genommen werden. Es kann insbesondere sichergestellt werden, dass das Aufliegen des Rakelwerkzeugs auf dem Drucksieb innerhalb gewünschter Parameter erfolgt oder eine Kontaktierung des Drucksiebs durch das Rakelwerkzeugs innerhalb vorbestimmter und/oder angepasster Parameter erfolgt, wodurch mit hoher Präzision Einfluss auf die Schichtdicken pro Druckschicht und/oder an unterschiedlichen Stellen eines Drucklayouts genommen werden kann. Eine insgesamt hohe Druckqualität ist dadurch erzielbar.

Es können mit einer Sensoreinrichtung mithin in vorteilhafter Weise absolute Rakelkräfte und/oder relative Rakelkraftabweichungen erfassbar sein. Beispielsweise können absolute Rakelkräfte nach dem Aufsetzen des Rakelwerkzeugs auf dem Drucksieb oder auf dem Drucktisch erfasst werden. Hingegen können relative Rakelkraftabweichungen während einer Bewegung des Rakelwerkzeugs auf dem Drucksieb oder auf einem Drucktisch erfasst werden.

Des Weiteren kann in Draufsicht auf die Rakelvorrichtung der zumindest eine Kraftmesssensor oder die Kraftmesssensoren oberhalb einer Aufstandslinie des Rakelwerkzeugs angeordnet sein. Ergänzend oder alternativ kann in Draufsicht auf die Rakelvorrichtung der zumindest eine Kraftmesssensor oder die Kraftmesssensoren mit einer Aufstandslinie des Rakelwerkzeugs ausgerichtet sein. Bei der Aufstandslinie handelt es sich um die Kontaktlinie, entlang welcher das Rakelwerkzeug das Drucksieb oder den Drucktisch kontaktiert. Somit können mithilfe dieser Ausgestaltung einwirkende Momente, die eine Kraftmessung durch die Sensoreinrichtung auf das Drucksieb beziehungsweise auf das Rakelwerkzeug verfälschen oder ungünstig beeinflussen können, bestmöglich vermieden werden.

Gemäß einer noch weiter bevorzugten Ausgestaltung kann vorgesehen sein, dass die Rakelvorrichtung eine Justiereinrichtung zur Neigungsjustierung des Rakelwerkzeugs aufweist. Mithilfe der Justiereinrichtung kann die Neigung des Rakelwerkzeugs justiert werden. Bei Justierung der Neigung des Rakelwerkzeugs kann gleichzeitig die Kraftverteilung, mit welcher das Rakelwerkzeug zum Beispiel entlang seiner Aufstandslinie oder beispielsweise entlang der Längserstreckung auf das Drucksieb oder auf den Drucktisch einwirkt, justiert werden. Somit kann mithilfe einer solchen Justiereinrichtung eine gleichmäßige oder auch gewollt ungleichmäßige beziehungsweise angepasste auf das Drucksieb und/oder die jeweilige Druckunterlage einwirkende Kraftverteilung erreicht werden.

Des Weiteren kann die Justiereinrichtung zur Neigungsjustierung einer entlang der Längserstreckung des Rakelwerkzeugs verlaufenden Werkzeuglängsachse relativ zum Drucksieb und/oder relativ zu einem Drucktisch und/oder relativ zu einer Horizontalebene ausgebildet sein. Somit kann die Justiereinrichtung eine Neigungsjustierung des Rakelwerkzeugs derart vornehmen, dass eine sich in Längserstreckung des Rakelwerkzeugs verlaufende Werkzeuglängsachse geneigt wird. Eine solche Neigung kann relativ zum Drucksieb und/oder relativ zu einem Drucktisch und/oder relativ zu einer Horizontalebene erfolgen und eine etwaige Ausrichtung kann auf diese Weise mit nur geringem Aufwand vorgenommen werden. Somit kann in besonders vorteilhafter Weise Einfluss auf die entlang der Werkzeuglängsachse des Rakelwerkzeugs vorliegende Kraftverteilung zwischen dem Rakelwerkzeug und dem Drucksieb beziehungsweise der jeweiligen Druckunterlage genommen werden. Dies kann die Qualität der zu erzeugenden Siebdruckwerkstücke beziehungsweise die Genauigkeit der zu erzeugenden Schichten verbessern.

Weiterhin kann die Justiereinrichtung zur Neigungsjustierung einer Rakelunterkante relativ zum Drucksieb und/oder relativ zu einem Drucktisch und/oder relativ zu einer Horizontalebene ausgebildet sein. Im Ergebnis ist die Justiereinrichtung in der Lage, die Rakelunterkante entlang seiner Längserstreckung relativ zum Drucksieb und/oder relativ zu einem Drucktisch und/oder relativ zu einer Horizontalebene auszurichten beziehungsweise zu neigen und hierdurch kann gezielt Einfluss auf die daraus resultierenden Prozessparameter genommen werden. Insbesondere kann eine gleichmäßige oder auch ungleichmäßige Kraftverteilung zwischen der Rakelunterkante und dem Drucksieb und/oder der jeweiligen Druckunterlagen entlang der Werkzeuglängsachse erreicht werden. Folglich kann die Qualität der zu erstellenden Siebdrucke mit weiter erhöhter Sicherheit verbessert werden. Es können hierdurch auch gezielt Anpassungen beziehungsweise Einstellungen der Rakelvorrichtung im Hinblick auf den jeweils vorliegenden Verschleiß des Drucksiebs vorgenommen werden.

Ferner kann die Justiereinrichtung zur Neigungsjustierung des Rakelwerkzeugs um eine Neigungsachse ausgebildet sein. Hierbei kann sich die Neigungsachse entlang einer Rakelbewegungsrichtung und/oder unter einem Winkel zu einer durch eine Rakelunterkante verlaufende Vertikalebene erstrecken. Diese Ausbildung erlaubt es in vorteilhafter Weise, zwischen dem Rakelwerkzeug und einem Drucksieb beziehungsweise der jeweiligen Druckunterlage entlang der gesamten Länge des Rakelwerkzeugs eine konstante Kraft sicherzustellen oder - je nach gewünschter Prozessführung - auch ungleiche Kräfte beziehungsweise entlang der Länge des Rakelwerkzeugs konstant zunehmende oder konstant abnehmende Kräfte zu erzeugen. Verschleißbedingte Ungenauigkeiten oder Abweichungen der Siebrückstellkraft und/oder der Siebspannungen entlang des Drucklayouts lassen sich hierdurch gezielt ausgleichen.

Des Weiteren kann die Justiereinrichtung zur translatorischen Justierbewegung des Rakelwerkzeugs entlang einer Vertikalrichtung ausgebildet sein. Somit ist es möglich, den vor der Kontaktierung vorliegenden Abstand zwischen dem Rakelwerkzeug und dem Drucksieb gezielt einzustellen und Einfluss auf die im Wege einer Absenkbewegung des Rakelwerkzeugs auf das Drucksieb erzeugte oder ansteigende Rakelkraft zu nehmen. Auf diese Weise ist die Rakelkraft, mit der das Rakelwerkzeug auf das Drucksieb beziehungsweise auch auf die Druckunterlage einwirkt, einstellbar.

Ferner kann vorgesehen sein, dass die Justiereinrichtung zumindest eine Justierschraube oder mehrere Justierschrauben zur Neigungsjustierung aufweist. Dabei kann die zumindest eine Justierschraube als Mikrometerschraube ausgebildet sein. Eine derartige Ausbildung erlaubt es, eine feine und exakte Einstellung der Neigung des Rakelwerkzeugs vorzunehmen. Über eine solche Justierschraube eines solche Mikrometerschraube kann eine vorgenommene Justierung zudem besonders sicher und mit geringem Aufwand aufrechterhalten werden. Zudem gestattet vorgenannte Ausbildung eine robuste und kostengünstige Konstruktion sowie eine hohe Betriebssicherheit.

Gemäß einer noch weiter bevorzugten Ausgestaltung kann die Rakelvorrichtung eine Rakellagerung aufweisen. Die Rakellagerung kann eine mittels der Justiereinrichtung vorgenommene Neigungsjustierung des Rakelwerkzeugs um eine Neigungsachse und/oder eine translatorische Justierbewegung des Rakelwerkzeugs erlauben. Somit ist es möglich, das Rakelwerkzeug unabhängig von weiteren Baugruppen und/oder Einrichtungen und/oder relativ zu den Baugruppen und/oder Einrichtungen zu justieren beziehungsweise einzustellen. Eine Neigungsjustierung kann hierdurch auf kontrollierte und sichere Weise vorgenommen werden.

Zudem kann die Rakellagerung zumindest eine Federlagerung oder mehrere Federlagerungen aufweisen. Insbesondere kann die Rakellagerung eine Blattfederlagerung oder mehrere Blattfederlagerungen aufweisen. Auch kann die zumindest eine Federlagerung eine gegen die zumindest eine Justierschraube wirkende Federkraft ausüben. Diese Ausbildung kann sicherstellen, dass bei einer manuellen und/oder automatisierten Neigungsjustierung eine permanente Federkraft gegen die jeweilige Justierschraube ausgeübt wird und die Justierschraube durch die Einstellung der jeweiligen Justierschraube vorgegebene Neigungsjustierung selbsttätig aufrechterhalten bleibt. Die Gefahr einer unerwünschten Relativbewegung der durch die Justierschraube zueinander beweglich angeordneten Komponenten lässt sich folglich verringern. Dadurch ist eine manuelle und/oder eine automatisierte Einstellbarkeit vereinfacht vorzunehmen.

Ferner kann die Rakellagerung zumindest eine Langlochführung aufweisen, wobei die Langlochführung bevorzugt spielbehaftet sein kann. Somit kann die relative Bewegung zweier Bauteile, die an die zumindest eine Federlagerung angrenzen und/oder die durch die Justiereinrichtung beziehungsweise Justierschraube zueinander bewegbar sind, auf einfache Weise ermöglicht werden.

Gemäß einer noch weiter bevorzugten Ausgestaltung kann die Rakelvorrichtung zumindest eine Fixiereinrichtung zur Fixierung einer durch die Justiereinrichtung justierten Neigungslage des Rakelwerkzeugs und/oder zur Fixierung einer durch die Justiereinrichtung justierten translatorischen Justierlage aufweisen. Hierdurch ist die Neigungslage des Rakelwerkzeugs, die mithilfe der Justiereinrichtung vorab eingestellt beziehungsweise justiert werden kann, auf einfache und sichere Weise fixierbar. Eine fein eingestellte Neigungsjustierlage für den Betrieb der Vorrichtung kann mithin fixiert werden, so dass eine Veränderung der räumlichen Lage des Rakelwerkzeugs beziehungsweise der Rakelvorrichtung effektiv verhindert werden kann. Gleiches gilt für die translatorische Justierlage, bei welcher ebenfalls mithilfe der Fixiereinrichtung die räumlich über die Justiereinrichtung voreingestellte Lage des Rakelwerkzeugs fixiert beziehungsweise sicher festlegt werden kann.

Außerdem kann die zumindest eine Fixiereinrichtung zumindest eine Fixierschraube oder mehrere Fixierschrauben aufweisen. Mithilfe dieser Ausgestaltung ist es auf einfache Weise möglich, eine sichere Fixierung zu realisieren, bei gleichzeitig einfachem und verhältnismäßig kostengünstigem Aufbau.

Zudem kann die Fixierschraube in einer Langlochführung der Rakellagerung geführt sein, insbesondere spielbehaftet geführt sein. Eine Langlochführung ermöglicht eine gut definierte Veränderung der relativen Position zwischen den jeweils zueinander beweglich angeordneten Komponenten. Gleichzeitig kann die Führung der jeweiligen Fixierschraube in einer Langlochführung eine sichere Fixierung der relativen Beweglichkeit gewährleisten. Somit ist es also der Fixiereinrichtung beziehungsweise der Fixierschraube möglich, nachdem beispielsweise über die Justiereinrichtung die Neigungslage oder die räumliche Ausrichtung des Rakelwerkzeugs relativ zum Drucksieb oder Drucktisch eingestellt wurde, eben diese relative Position sicher und mit geringem Handhabungsaufwand zu fixieren. Die Langlochführung erlaubt dabei auf einfache Weise eine Bewegung des Rakelwerkzeugs relativ zu einer Tragstruktur der Rakelvorrichtung. Über die Fixierschrauben kann die eingenommene Lage fixiert werden, sodass die relative Position zwischen Rakelwerkzeug und Drucksieb oder Drucktisch fest eingestellt wird.

Des Weiteren kann die Rakelvorrichtung eine Justierhalterung und eine mit der Justierhalterung gekoppelte Tragstruktur aufweisen. Dabei kann die Relativposition und/oder Relativausrichtung zwischen der Justierhalterung und der Tragstruktur über die Justiereinrichtung veränderbar sein. Somit kann also die Justiereinrichtung ermögliche, die relative Position und/oder die relative Ausrichtung zwischen der Justierhalterung und der Tragstruktur einzustellen.

Des Weiteren kann die Rakellagerung zwischen der Justierhalterung und der Tragstruktur ausgebildet sein. Somit kann also die Justierhalterung über die Rakellagerung an der Tragstruktur angeordnet beziehungsweise mit dieser gekoppelt sein. Alternativ oder ergänzend kann die zumindest eine Fixiereinrichtung zur Fixierung der Relativposition und/oder Relativausrichtung zwischen der Justierhalterung und der Tragstruktur ausgebildet sein. Somit kann eine relative Bewegung zwischen der Justierhalterung und der Tragstruktur beispielsweise mittels der Fixiereinrichtung verhindert werden, insbesondere nachdem eine Einstellung der relativen Position vorgenommen worden ist.

Des Weiteren kann die Justiereinrichtung und/oder die zumindest eine Justierschraube an der Justierhalterung angeordnet sein und in Wirkkontakt mit der Tragstruktur stehen und/oder in Wirkkontakt mit der Tragstruktur bringbar sein. Somit kann die Justiereinrichtung beziehungsweise die Justierschraube ausgehend von der Justierhalterung auf die Tragstruktur wirken und für eine Justierung erforderliche Stellkräfte aufbringen.

Ergänzend oder alternativ kann die Justiereinrichtung und/oder die zumindest eine Justierschraube zur Erzeugung einer Relativbewegung zwischen der Justierhalterung und der Tragstruktur ausgebildet sein. Somit kann es möglich sein, dass die Justiereinrichtung beziehungsweise die zumindest eine Justierschraube im Zusammenwirken zwischen Justierhalterung und der Tragstruktur eine räumliche Lage vorgeben kann, entlang welcher sich die Tragstruktur ausrichtet.

Gemäß einer weiter bevorzugten Ausgestaltung kann die zumindest eine Federlagerung, insbesondere die Blattfederlagerung, an der Justierhalterung und/oder an der Tragstruktur eingespannt sein. Auf diese Weise kann die zumindest eine Federlagerung, insbesondere die Blattfederlagerung, die Justierhalterung und/oder die Tragstruktur federelastisch einspannen und damit in Position halten beziehungsweise relativ die Justierhalterung und die Tragstruktur relativ zueinander in Position oder in Anlage zueinander halten.

Alternativ oder ergänzend ist es möglich, dass die zumindest eine Federlagerung, insbesondere die Blattfederlagerung, eine Vorspannung der Tragstruktur gegen die Justierhalterung und/oder gegen die an der Justierhalterung angeordnete Justiereinrichtung erzeugt. Diese Vorspannung kann die selbsttätige und sichere Aufrechterhaltung einer räumlichen Ausrichtung beziehungsweise Position des Rakelwerkzeugs, das an der Tragstruktur angeordnet sein kann, relativ zur Justierhaltung begünstigen, wobei die Justiereinrichtung wiederum eine Feineinstellung der räumlichen Ausrichtung oder Positionierung des Rakelwerkzeugs, insbesondere über die Tragstruktur, ermöglicht.

Es ist bei einer solchen Ausgestaltung demnach möglich, dass die zumindest eine Federlagerung auf die Tragstruktur dauerhaft eine Kraft ausübt, die die Tragstruktur gegen die Justierhaltung beziehungsweise gegen die zumindest eine Justiereinschraube drückt. Dabei kann durch die Justiereinrichtung eine Neigungsjustierung und/oder eine translatorische Justierbewegung des Rakelwerkzeugs entgegen der durch die Federlagerung aufgebrachten Federkraft oder in Kraftrichtung der durch die Federlagerung aufgebrachten Federkraft erfolgen.

Gemäß einer weiter bevorzugten Ausgestaltung kann die zumindest eine Federlagerung, insbesondere die Blattfederlagerung, innerhalb einer Ausnehmung der Tragstruktur angeordnet sein und/oder entlang der Ausnehmung der Tragstruktur verlaufend angeordnet sein. Zusätzlich kann die zumindest eine Federlagerung beziehungsweise die Blattfederlagerung an einem Ende der Ausnehmung an der Tragstruktur eingespannt sein.

Ferner kann die zumindest eine Federlagerung, insbesondere die zumindest eine Blattfederlagerung, auch an einem Lagerstift abgestützt sein, der mit der Justierhalterung in Verbindung steht und/oder relativ zur Justierhalterung vorragt. Insbesondere kann der Lagerstift mit der Justierhalterung in Verbindung stehen und bis in die Ausnehmung der Tragstruktur vorragen, sodass eine Abstützung Federlagerung beziehungsweise der Blattfederlagerung auf dem Lagerstift ermöglicht wird.

Zusätzlich oder alternativ kann die Federlagerung auch eine Spiralfeder und/oder ein Gasdruckfeder aufweisen und/oder als Spiralfeder und/oder Gasdruckfeder ausgebildet sein.

Gemäß einer noch weiter bevorzugten Ausgestaltung kann die Rakelvorrichtung ein Befestigungssystem zur Befestigung und/oder zum Einspannen des Rakelwerkzeugs aufweisen. Dabei kann das Befestigungssystem bevorzugt als Spannsystem und/oder Klemmsystem und/oder als Schnellwechselklemm- und/oder als Schnellwechselspannsystem ausgebildet sein. Vorgenannte Systeme dienen dem unkomplizierten, einfachen und/oder schnellen Wechsel eines Rakelwerkzeugs sowie einer korrekten und sicheren Fixierung des Rakelwerkzeugs zur Ausführung der jeweiligen Druck- beziehungsweise Rakelvorgänge.

Das Befestigungssystem kann werkzeugfrei und/oder durch zumindest eine Knebelschraube oder durch mehrere Knebelschrauben betätigbar sein, insbesondere zum Einspannen und/oder zum Einklemmen und/oder zum Lösen eines Rakelwerkzeugs. Somit dient also das Befestigungssystem zum schnellen und einfachen Wechseln des Rakelwerkzeugs, insbesondere mit nur geringem Handhabungsaufwand.

Ferner kann das Befestigungssystem an der Tragstruktur angeordnet und/oder kann zumindest zum Teil durch die Tragstruktur gebildet sein. Auf diese Weise können Funktionen zusammengeführt werden und die Ausgestaltung der Vorrichtung vereinfacht und kompakt ausgebildet werden.

Gemäß einer noch weiter bevorzugten Ausgestaltung ist es möglich, dass das Rakelwerkzeug ein Rakelblatt aufweist und/oder dass ein Rakelblatt des Rakelwerkzeugs zumindest abschnittsweise aus einem Kunststoffmaterial und/oder aus einem Blechmaterial gefertigt ist. Mithilfe der Ausgestaltung des Rakelwerkzeugs als Rakelblatt und/oder in Kombination mit der Ausbildung aus einem Kunststoffmaterial und/oder aus einem Blechmaterial kann eine hohe Betriebssicherheit sowie eine ein hohes Maß an Funktionalität gewährleistet werden. Derartige Rakelblätter können zum Beispiel in vorteilhafter Weise im Hinblick auf die Elastizität eingestellt werden und weisen eine hohe Medienbeständigkeit auf. Zudem können Rakelblätter auch in begrenzten Bauräumen untergebracht werden und ermöglichen eine besonders genau definierte Kraftbeaufschlagung des jeweiligen Drucksiebs.

Auch kann gemäß einer weiter bevorzugten Ausgestaltung vorgesehen sein, dass das Rakelwerkzeug eine Rakelaufnahme aufweist und/oder dass das Rakelblatt an einer Rakelaufnahme des Rakelwerkzeugs montiert und/oder in oder an einer Rakelaufnahme eingespannt ist. Somit ist also ein Rakelblatt des Rakelwerkzeugs an oder in der Rakelaufnahme mit hoher Sicherheit anordenbar und/oder fixierbar.

Außerdem kann das Rakelblatt wenigstens eine Rakelseitenfläche aufweisen, die zwischen den Seitenrändern des Rakelblatts verläuft. Dabei kann durch die Rakelaufnahme ein zwischen der Rakelseitenfläche und einer Horizontalebene und/oder zwischen der Rakelseitenfläche und dem Drucksieb und/oder zwischen der Rakelseitenfläche und einem Drucktisch ausgebildeter Rakelwinkel vorgegeben und/oder festgelegt sein. Somit kann durch die Ausbildung des Rakelblatts beziehungsweise durch die Ausbildung der Rakelaufnahme der Rakelwinkel dahingehend optimiert oder gewählt werden, dass von dem Rakelblatt die jeweilige Druckmasse bestmöglich durch das Drucksieb hindurchpressbar ist und gleichzeitig die Gefahr der Beschädigung des Drucksiebs, beispielsweise aufgrund einer Verkantung, geringgehalten werden kann.

Des Weiteren kann das Rakelwerkzeug zumindest einen an der Rakelaufnahme ausgebildeten und/oder mit der Rakelaufnahme verbundenen Kopplungsabschnitt zur Verbindung mit dem Befestigungssystem und/oder zum Einspannen oder Einklemmen in dem Befestigungssystem aufweisen. Somit erlaubt es der Kopplungsabschnitt, das Rakelwerkzeug mit dem Befestigungssystem sicher zu verbinden und/oder in dem Befestigungssystem einzuspannen oder einzuklemmen. Dabei kann der Kopplungsabschnitt beispielsweise als Nut oder als Formabschnitt zum formschlüssigen Hintergreifen durch das Befestigungssystem ausgebildet sein.

Gemäß einer weiter bevorzugten Ausgestaltung kann das Rakelwerkzeug als Wechselwerkzeug ausgebildet sein. Zusätzlich oder alternativ kann durch Austausch des Rakelwerkzeugs der Rakelwinkel zwischen einer Rakelseitenfläche und einer Horizontalebene und/oder dem Drucksieb und/oder einem Drucktisch veränderbar sein. Durch Ausbildung des Rakelwerkzeugs als Wechselwerkzeug ist das Rakelwerkzeug einfach und schnell im Hinblick auf unterschiedliche Betriebs- und Prozessanforderungen auswechselbar. Die Vorrichtung kann mithin schnell an unterschiedliche Betriebs- und Prozessanforderungen angepasst und beispielsweise der Druck unterschiedlicher Materialien oder die Nutzung unterschiedlicher Drucksiebe und/oder Drucklayouts kann mit nur geringem Aufwand bewerkstelligt werden. Durch die Veränderung des Rakelwinkels ist es möglich, mit ein und derselben Vorrichtung beispielsweise unterschiedliche Werkstoffe zu drucken beziehungsweise unterschiedliche Druckergebnisse oder Druckauftragsstärken zu erzielen.

Gemäß einer noch weiter bevorzugten Ausgestaltung kann die Rakelvorrichtung eine Stelleinrichtung zur Bewegung des Rakelwerkzeugs zwischen einer angehobenen Ausgangsstellung und zumindest einer abgesenkten Betriebsstellung aufweisen. Somit ist also mithilfe der Stelleinrichtung die Rakelvorrichtung beispielsweise hin oder weg von einem Drucktisch und/oder hin oder weg von einem Drucksieb verfahrbar, insbesondere mit einem nur geringem oder ohne Bedienaufwand durch das jeweilige Bedienpersonal.

Außerdem kann die Stelleinrichtung zumindest einen Linearantrieb oder eine Mehrzahl von Linearantrieben aufweisen. Somit ist also die Stelleinrichtung in der Lage, eine Linearbewegung mit hoher Sicherheit und einem verhältnismäßig hohen Automationsgrad auszuführen.

Zudem kann die Stelleinrichtung eine Mehrzahl in Reihe geschalteter Linearantriebe aufweisen. Auf diese Weise ist es möglich, den Hub der Stelleinrichtung zu vergrößern beziehungsweise unterschiedliche Linearantriebe für unterschiedliche Stellfunktionalitäten zu nutzen.

Zumindest ein Linearantrieb der Stelleinrichtung kann als elektrischer oder elektromechanischer Linearantrieb und/oder als elektrischer Spindelantrieb und/oder als Elektrozylinder und/oder als Linearaktor ausgebildet sein. Durch einen solchen Linearantrieb kann der jeweils erforderliche Hub zuverlässig bereitgestellt werden und lässt sich auch auf geringem Bauraum anordnen. Zudem können derartige Linearantrieb vorteilhaft miteinander kombiniert werden.

Ferner kann vorgesehen sein, dass zumindest ein Linearantrieb der Stelleinrichtung als pneumatischer Linearantrieb oder Linearzylinder ausgebildet ist. Somit ist also die Stelleinrichtung in der Lage, eine Linearbewegung mithilfe von druckbeaufschlagtem Gas auszuführen. Durch eine solchen pneumatischen Linearantrieb oder Linearzylinder kann dabei in vorteilhafter eine rückfedernde Kontaktierung des Drucksiebs durch das jeweilige Rakel bewerkstelligt werden, sodass die Gefahr von Beschädigungen von Vorrichtungskomponenten verringert werden kann.

Dabei kann der pneumatische Linearantrieb im Kraftfluss zwischen dem elektrischen oder elektromechanischen Linearantrieb und dem Rakelwerkzeug angeordnet sein. Somit kann der Hub der Stelleinrichtung über eine Betätigung des pneumatischen Linearantrieb schnell variiert beziehungsweise vergrößert oder verkleinert werden. Zudem kann durch eine solche Anordnung bei Betätigung des pneumatischen Linearantriebs in vorteilhafter Weise ein rückfederndes Verhalten zwischen dem elektrischen oder elektromechanischen Linearantrieb und dem Rakelwerkzeug bereitgestellt werden.

Des Weiteren kann die Sensoreinrichtung im Kraftfluss zwischen der Stelleinrichtung und dem Rakelwerkzeug angeordnet sein. Somit kann also eine Kraft, die auf das Rakelwerkzeug einwirkt, nah am Entstehungsort erfasst werden. Zudem wird die über die Sensoreinrichtung auch diejenige Kraft erfasst, die durch die Stelleinrichtung erzeugt wird. Dadurch können genaue Messergebnisse erzielt werden, die für die weitere oder spätere Prozessführung in vorteilhafter Weise genutzt werden können.

Außerdem kann die Sensoreinrichtung im Kraftfluss zwischen der Stelleinrichtung und der Rakellagerung und/oder im Kraftfluss zwischen der Stelleinrichtung und der Justiereinrichtung und/oder im Kraftfluss zwischen der Stelleinrichtung und der Justierhalterung angeordnet sein. Diese Ausgestaltung hat den Vorteil, dass die Sensoreinrichtung die durch die Stelleinrichtung bei der Kontaktierung eines Drucksiebs durch das Rakelwerkzeugs erzeugten Kräfte nah an der Stelleinrichtung selbst erfasst. Hierdurch können besonders exakte Messergebnisse erhalten werden.

Ferner kann die Sensoreinrichtung, insbesondere die Kraftmesssensoren der Sensoreinrichtung, fest zwischen der Justierhalterung und einer mit der Stelleinrichtung verbundenen Sensorhalterung angeordnet sein. Eine solcher Aufbau ist besonders robust und weist eine nur geringe Störanfälligkeit auf. Die jeweils erzielten Messergebnisse einer derart angeordneten Sensoreinrichtung weisen eine mithin nur geringe Fehleranfälligkeit auf.

Gemäß einer noch weiter bevorzugten Ausgestaltung kann die Vorrichtung zur Herstellung von dreidimensionalen Siebdruckwerkstücken eine Rakelbewegungseinrichtung zur Bewegung der Rakelvorrichtung und/oder des Rakelwerkzeugs entlang einer in Horizontalrichtung verlaufenden Rakelbewegungsrichtung aufweisen. Somit ist es möglich, ein Rakelwerkzeug beziehungsweise die Rakelvorrichtung entlang einer in Horizontalrichtung verlaufenden Rakelbewegungsrichtung zu verfahren. Hierdurch kann beispielsweise eine Druckmasse von der Rakelvorrichtung und/oder des Rakelwerkzeugs auf dem Drucksieb verteilt und durch dieses hindurchgedrückt werden, um einen schichtweisen Aufbau des jeweils gewünschten Werkzeugs vorzunehmen.

Dabei kann die Rakelbewegungseinrichtung wenigstens einen Linearantrieb zur Bewegung der Rakelvorrichtung und/oder des Rakelwerkzeugs aufweisen. Somit kann also die Rakelvorrichtung und/oder das Rakelwerkzeug linear in einer Richtung hin und her beziehungsweise vorwärts und rückwärts bewegbar sein. Folglich sind mehrere aufeinanderfolgende Druckdurchgänge mit der Vorrichtung zur Herstellung von dreidimensionalen Siebdruckwerkstücken in vorteilhafter Weise realisierbar. Ebenso kann hierdurch bei einer Vorwärtsbewegung ein Fluten des Drucksiebs durch ein Flutrakel und bei einer Rückwärtsbewegung ein Drucken durch ein Druckrakel erfolgen.

Gemäß einer weiter bevorzugten Ausgestaltung kann die Rakelbewegungseinrichtung ein Portalsystem mit Linearführungen und/oder einem Querträger und/oder einer Stützeinrichtung zur Abstützung des Querträgers auf den Linearführungen aufweisen. Somit ist es also möglich, das Rakelwerkzeug beziehungsweise die Rakelvorrichtung schwebend oberhalb eines Drucktisches und/oder schwebend oberhalb eines Drucksiebs zu verfahren, beispielsweise linear zu verfahren. Somit kann eine sichere Abfolge aufeinanderfolgender Druckdurchgänge mit der Vorrichtung zur Herstellung von dreidimensionalen Siebdruckwerkstücken gewährleistet werden. Ein solches Portalsystem beziehungsweise Portalachsensystem ist insbesondere im Hinblick auf die Bauraumanforderungen einer Druckeinrichtung besonders geeignet. Das jeweilige Drucksieb und/oder ein Drucktisch kann in vorteilhafter Weise unterhalb des Portalsystems positioniert sein und durch die jeweils erzeugte Bewegung kann mit hoher Betriebssicherheit ein Drucken von Druckmasse durch das Drucksieb ermöglicht werden. Ein solches Portalsystem erlaubt zudem die Bewegung eines verhältnismäßig schweren Rakelsystems mit einer hohen Bewegungspräzision.

Hierbei ist es möglich, dass die Linearführungen entlang der Rakelbewegungsrichtung verlaufen. Somit ist das Portalsystem beziehungsweise die Rakelvorrichtung und/oder das Rakelwerkzeug entlang der Rakelbewegungsrichtung verfahrbar. Ergänzend oder alternativ ist es möglich, dass der Querträger in einer Draufsicht zwischen den Linearführungen und/oder quer zu den Linearführungen verläuft. Somit kann also der Querträger die Linearführungen verbinden und auch gemeinsam mit den Linearführungen die Rakelvorrichtung verfahren. Es kann hierdurch eine hohe Gesamtstabilität und damit auch eine weiter verbesserte Bewegungspräzision gewährleistet werden.

Des Weiteren kann die Rakelvorrichtung und/oder die Stelleinrichtung der Rakelvorrichtung an dem Querträger des Portalsystems befestigt sein. Somit bedingt also eine Bewegung des Querträgers eine Bewegung der Rakelvorrichtung beziehungsweise des Rakelwerkzeugs. Die Stelleinrichtung wiederum ermöglicht auf diese Weise eine Relativbewegung des Rakelwerkzeugs zum Querträger des Portalsystems.

Gemäß einer noch weiter bevorzugten Ausgestaltung kann die Rakelvorrichtung entlang einer Längserstreckung des Querträgers unbeweglich angeordnet sein. Eine solche Beweglichkeit ist für die Ausführung von Rakelbewegungen nicht erforderlich und eine Unbeweglichkeit entlang einer Längserstreckung des Querträgers vereinfacht den Gesamtaufbau und kann die Stabilität beziehungsweise Steifigkeit des Portalsystems verbessern.

Gemäß einer noch weiter bevorzugten Ausgestaltung kann der zumindest eine Linearantrieb der Rakelbewegungseinrichtung mit dem Querträger des Portalsystems gekoppelt sein. Somit verursacht eine Bewegung des Linearantriebs also eine Bewegung des Querträgers, mit welchem beispielsweise dann auch eine Bewegung der Rakelvorrichtung beziehungsweise des Rakelwerkzeugs einhergeht. Ein solcher Aufbau kann konstruktiv einfach und robust bewerkstelligt werden.

Des Weiteren kann die Vorrichtung zur Herstellung von dreidimensionalen Siebdruckwerkstücken zwei Rakelvorrichtungen aufweisen. Dabei kann eine Rakelvorrichtung als Flutrakelvorrichtung und eine weitere Rakelvorrichtung als Druckrakelvorrichtung ausgebildet sein. Ergänzend oder alternativ können beide Rakelvorrichtungen an der Rakelbewegungseinrichtung, insbesondere an dem Querträger der Rakelbewegungseinrichtung, angeordnet sein. Dementsprechend verursacht eine Bewegung der Rakelbewegungseinrichtung eine Bewegung der jeweiligen Rakelvorrichtung beziehungsweise des jeweiligen Rakelwerkzeugs. Mithin kann hierdurch in vorteilhafter Weise gewährleistet werden, dass zwei Rakelvorrichtungen von der Rakelbewegungseinrichtung gemeinsam bewegt werden.

Gemäß einer noch weiter bevorzugten Ausgestaltung können die Rakelvorrichtung oder die Rakelvorrichtungen und die Rakelbewegungseinrichtung ein Rakelsystem bilden. Ein solches Rakelsystem kann als Gesamtbaugruppe oberhalb eines Drucksiebs beziehungsweise eines Drucktischs angeordnet sein und eine Rakelbewegung mit hoher Bewegungspräzision bereitstellen.

Gemäß einer noch weiter bevorzugten Ausgestaltung kann vorgesehen sein, dass die Rakelvorrichtung für den Druck in einem Positionsmodus ausgebildet ist. In dem Positionsmodus kann ein pneumatischer Linearantrieb der Stelleinrichtung eingefahren und/oder ein elektrischer oder elektromechanischer Linearantrieb der Stelleinrichtung zumindest teilweise ausgefahren oder abgesenkt sein. Mit anderen Worten ausgedrückt kann der pneumatische Linearantrieb deaktiviert sein, hingegen der elektrische oder elektromechanische Linearantrieb in Betrieb sein.

Mit einem elektrischen oder elektromechanischen Linearantrieb kann eine bestimmte Position sehr genau anfahrbar sein. Dabei kann durch eine Deaktivierung des pneumatischen Linearantriebs eine federelastische Rückstellbewegung vermieden oder verringert werden, sodass eine gewünschte Hubposition sehr genau aufrechterhalten werden kann.

Gemäß einer noch weiter bevorzugten Ausgestaltung kann die Rakelvorrichtung für den Druck in einem Kraftmodus ausgebildet sein. In dem Kraftmodus kann ein pneumatischer Linearantrieb der Stelleinrichtung teilweise oder vollständig ausgefahren und/oder abgesenkt sein. Im Kraftmodus ist es somit möglich, mithilfe des pneumatischen Linearantriebs eine große Kraft und einen großen Hub auf einfache Weise schnell beziehungsweise in einer kleinen Zeitspanne zu erzeugen. Gleichzeitig kann in einem Kraftmodus ein federelastisches Verhalten des pneumatischen Linearantriebs für das verhältnismäßig genaue Aufrechterhalten einer gewünschten Rakelkraft beitragen. Sprunghafte Veränderungen der Rakelkraft lassen sich in einem solchen Kraftmodus vermeiden.

Gemäß einer noch weiter bevorzugten Ausgestaltung kann in einem Kraftmodus ein elektrischer oder elektromechanischer Linearantrieb der Stelleinrichtung eingefahren oder nur zumindest teilweise ausgefahren oder abgesenkt sein. Mithin kann der elektrische oder elektromechanische Linearantrieb auch in einem Kraftmodus für die Erzeugung eines Hubs eingesetzt werden. Ebenso kann der elektrische oder elektromechanische Linearantrieb in einem Kraftmodus deaktiviert bleiben.

Gemäß einer noch weiter bevorzugten Ausgestaltung kann in einem Kraftmodus der pneumatische Linearantrieb der Stelleinrichtung als Gas-Feder betrieben werden. Dies ist eine einfache und kostengünstige Ausgestaltung des Linearantriebs und hierdurch kann ein genaues Aufrechterhalten einer gewünschten Rakelkraft auch bei schwankenden Rückstellbewegungen des Rakelwerkzeugs gewährleistet werden.

Gemäß einer noch weiter bevorzugten Ausgestaltung kann der pneumatische Linearantrieb der Stelleinrichtung für den Betrieb als Gas-Feder ein Proportionalventil aufweisen. Bei einem Proportionalventil kann es sich um ein elektromagnetisches oder medium-gesteuertes Ventil handeln, das beliebige Zwischenstellungen zwischen einer offenen und geschlossenen Stellung annehmen kann. Somit kann die Durchflussmenge an Gas durch das Proportionalventil geregelt und/oder gesteuert sein. Die genaue Einstellbarkeit und Aufrechterhaltung einer gewünschten Rakelkraft kann hierdurch weiter verbessert werden.

Gemäß einer noch weiter bevorzugten Ausgestaltung kann die Vorrichtung zur Herstellung von dreidimensionalen Siebdruckwerkstücken eine Steuereinrichtung zur Steuerung und/oder Regelung der Stelleinrichtung und/oder der Rakelbewegungsvorrichtung und/oder der Justiereinrichtung und/oder zur Verarbeitung und/oder zur Auswertung und/oder zur Speicherung und/oder zum Vergleich von Sensordaten der Sensoreinrichtung aufweisen. Somit kann die Steuereinrichtung die vorgenannten Einrichtungen und deren Daten in vorteilhafte Weise steuern beziehungsweise regeln und/oder verarbeiten. Hierdurch kann ein hohes Maß an Produktivität, Wiederholgenauigkeit sowie Betriebssicherheit gewährleistet und auch eine hohe Informations- und Datendichte betreffend die jeweiligen Produktionsprozesse erzeugt werden.

Gemäß einer noch weiter bevorzugten Ausgestaltung kann die Steuereinrichtung dazu ausgebildet sein, bei Krafteinwirkung des Rakelwerkzeugs unmittelbar auf einen Drucktisch und/oder in einer siebfreien Anordnung über die Sensoreinrichtung eine Rakelkraft zu erfassen und/oder auszuwerten. Hierdurch lassen sich Einflüsse des Drucksiebs, insbesondere Rückstellkräfte des Drucksiebs, auf die Entstehung der Rakelkraft ausschließen. Es lassen sich hierdurch in vorteilhafter Weise Rückschlüsse über die Elastizität des Rakelwerkzeugs und/oder der Stelleinrichtung und/oder der gesamten Rakelvorrichtung ziehen und die derart ermittelten Rakelkräfte können für spätere Druckvorgänge berücksichtigt werden. In einer solchen Anordnung wird die Rakelkraft maßgeblich durch die Elastizität des Rakelwerkzeugs und/oder der Stelleinrichtung und/oder der gesamten Rakelvorrichtung bedingt, da der Drucktisch regelmäßig eine hohe Steifigkeit beziehungsweise geringe Nachgiebigkeit aufweist.

Gemäß einer noch weiter bevorzugten Ausgestaltung kann die Steuereinrichtung dazu ausgebildet sein, bei Krafteinwirkung des Rakelwerkzeugs auf ein Drucksieb, in einer mit dem Drucksieb auf einem Drucktisch und/oder einer festen Druckunterlage aufliegenden Betriebsstellung, über die Sensoreinrichtung eine Rakelkraft zu erfassen und/oder auszuwerten. Insbesondere kann in einer solchen Stellung das Drucksieb vollständig und/oder flach auf dem jeweiligen Drucktisch und/oder der jeweiligen Druckunterlage aufliegen. In einer solchen Stellung liegt mithin bereits ein flächiger Kontakt zwischen dem Drucksieb und dem Drucktisch beziehungsweise der Druckunterlage vor, sodass ein solche Kontaktierung nicht erst durch eine Abwärtsbewegung des Rakelwerkzeugs erzeugt werden muss. Daher kommt es bei einer Krafteinwirkung des Rakelwerkzeugs auf das Drucksiebs hierbei zu keiner oder einer nur vernachlässigbaren elastischen Verformung des Drucksiebs. Hierdurch lassen sich wiederum Einflüsse des Drucksiebs, insbesondere Rückstellkräfte des Drucksiebs aufgrund nennenswerter elastischer Verformung, auf die Entstehung der Rakelkraft weitgehend ausschließen. Es lassen sich hierdurch wiederum Rückschlüsse über die Elastizität des Rakelwerkzeugs und/oder der Stelleinrichtung und/oder der gesamten Rakelvorrichtung ziehen und die derart ermittelten Rakelkräfte können für spätere Druckvorgänge und/oder Messvorgänge berücksichtigt werden. Gleichzeitig kann eine vollständige Entfernung des Drucksiebs aus dem Druckbereich vermieden werden.

Gemäß einer noch weiter bevorzugten Ausgestaltung kann die Steuereinrichtung dazu ausgebildet sein, bei Krafteinwirkung des Rakelwerkzeugs auf ein Drucksieb, frei von einer Kontaktierung zwischen dem Drucksieb und einem Drucktisch und/oder einer Druckunterlage und/oder zumindest einem Siebruckwerkstück, über die Sensoreinrichtung eine Rakelkraft zu erfassen und/oder auszuwerten. Bei einer solchen Krafteinwirkung entspricht die Rakelkraft einer Rückstellkraft des Drucksiebs, die sich aufgrund einer elastischen Verformung des Drucksiebs einstellt. Hierdurch kann ein Rückschluss auf das mechanische Verhalten des Drucksiebs beziehungsweise auf dessen Zustand beziehungsweise auf die Rakelkräfte im Zusammenwirken zwischen der Rakelvorrichtung und dem Drucksieb gezogen werden. Es lassen sich mithin Rückschlüsse über die Elastizität des Drucksiebs ziehen und die derart ermittelten Rakelkräfte können für spätere Druckvorgänge und/oder Messvorgänge berücksichtigt werden.

Gemäß einer noch weiter bevorzugten Ausgestaltung kann die Steuereinrichtung dazu ausgebildet sein, bei Krafteinwirkung des Rakelwerkzeugs auf ein Drucksieb und bei einer durch die Krafteinwirkung auf das Drucksieb erzeugten Kontaktierung eines Drucktisches und/oder einer Druckunterlage und/oder zumindest eines Siebruckwerkstücks durch das Drucksieb, insbesondere bei elastischer Verformung des Drucksiebs, über die Sensoreinrichtung eine Rakelkraft zu erfassen und/oder auszuwerten. Mithin kann in einer solchen Betriebsstellung zunächst eine Krafteinwirkung des Rakelwerkzeugs auf das Drucksieb erfolgen und durch diese Krafteinwirkung kann eine elastische Verformung des Drucksiebs erzeugt werden, aufgrund derer das Drucksieb in Kontakt mit einem darunter befindlichen Drucktisch und/oder einer Druckunterlage und/oder zumindest einem Siebdruckwerkstück gelangt. Die hierbei erzeugte Rakelkraft wird sowohl durch die Rückstellkraft des Drucksiebs aufgrund der sich jeweils einstellenden elastischen Verformung als auch durch die Rückstellkraft des Drucktisches und/oder einer Druckunterlage und/oder des zumindest einen Siebdruckwerkstücks bedingt. Die Rakelkräfte im Zusammenwirken zwischen der Rakelvorrichtung, dem Drucksieb sowie auch dem Drucktisch beziehungsweise der Druckunterlage und/oder den jeweils erzeugten Siebdruckwerkstücken unterhalb des Drucksiebs können auf diese Weise ermittelt werden.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs über die Sensoreinrichtung eine Rakelkraftzunahme zu erfassen und/oder auszuwerten. Somit kann die Steuereinrichtung also in der Lage sein, mithilfe der Sensoreinrichtung die Zunahme von Rakelkräften zu erfassen und/oder auszuwerten. Dies ermöglicht in vorteilhafter Weise, die Absenkbewegung in Abhängigkeit der erfassten Rakelkräfte zu beeinflussen und/oder die bei der Absenkbewegung entstehenden Rakelkräfte zu erfassen und/oder für spätere Auswertevorgänge zu speichern.

Gemäß einer noch weiter bevorzugten Ausgestaltung kann die Steuereinrichtung dazu ausgebildet sein, während einer mittels der Stelleinrichtung ausschließlich auf das Drucksieb erfolgenden Absenkbewegung des Rakelwerkzeugs, insbesondere frei von einer Kontaktierung eines Drucktischs und/oder einer Druckunterlage und/oder zumindest eines Siebdruckwerkstücks durch das Drucksieb, über die Sensoreinrichtung eine Rakelkraftzunahme zu erfassen und/oder auszuwerten. Hierdurch können Einflüsse der elastischen Verformung des Drucksiebs auf die Rakelkraftzunahme während einer Absenkbewegung des Rakelwerkzeugs isoliert erfasst werden.

Gemäß einer noch weiter bevorzugten Ausgestaltung kann die Steuereinrichtung dazu ausgebildet sein, während einer mittels der Stelleinrichtung auf das Drucksieb erfolgenden Absenkbewegung des Rakelwerkzeugs, in einer mit dem Drucksieb auf einem Drucktisch aufliegenden Betriebsstellung, über die Sensoreinrichtung eine Rakelkraftzunahme zu erfassen und/oder auszuwerten. Hierdurch können Einflüsse der elastischen Verformung des Rakelwerkezugs und/oder der Stelleinrichtung und/oder der Rakelvorrichtung insgesamt auf die Rakelkraftzunahme während einer Absenkbewegung des Rakelwerkzeugs isoliert erfasst werden.

Gemäß einer noch weiter bevorzugten Ausgestaltung kann die Steuereinrichtung dazu ausgebildet sein, während einer mittels der Stelleinrichtung auf einem Drucktisch und/oder auf eine Druckunterlage, insbesondere in einer siebfreien Anordnung, über die Sensoreinrichtung eine Rakelkraftzunahme zu erfassen und/oder auszuwerten. Auch hierdurch können Einflüsse der elastischen Verformung des Rakelwerkezugs und/oder der Stelleinrichtung und/oder der Rakelvorrichtung insgesamt auf die Rakelkraftzunahme während einer Absenkbewegung des Rakelwerkzeugs isoliert erfasst werden.

Gemäß einer noch weiter bevorzugten Ausgestaltung kann die Steuereinrichtung dazu ausgebildet sein, während einer mittels der Stelleinrichtung auf das Drucksieb erfolgenden Absenkbewegung des Rakelwerkzeugs und bei einer durch die Krafteinwirkung auf das Drucksieb erzeugten Kontaktierung eines Drucktisches und/oder einer Druckunterlage und/oder zumindest eines Siebruckwerkstücks durch das Drucksieb, insbesondere bei elastischer Verformung des Drucksiebs, über die Sensoreinrichtung eine Rakelkraftzunahme zu erfassen und/oder auszuwerten. Hierdurch können Einflüsse des Drucktisches und/oder der Druckunterlage und/oder des zumindest einen Siebdruckwerkstücks unterhalb des Drucksiebs auf die Rakelkraftzunahme während einer Absenkbewegung des Rakelwerkzeugs erfasst werden.

Gemäß einer noch weiter bevorzugten Ausgestaltung kann die Steuereinrichtung dazu ausgebildet sein, bei einem mittels der Sensoreinrichtung erfassten Beginn einer Rakelkraftzunahme während der Absenkung des Rakelwerkzeugs eine Absenkbewegung durch die Stelleinrichtung zu beenden. Somit kann die Steuereinrichtung dazu dienen, bei Erreichen einer bestimmten oder einer vorbestimmten Rakelkraft während der Absenkung des Rakelwerkzeugs eben diese Absenkung zu beenden. Dies dient sowohl der Schonung des Rakelwerkzeugs beziehungsweise der Rakelvorrichtung als auch des Drucksiebs und/oder des Drucktisches.

Gemäß einer noch weiter bevorzugten Ausgestaltung kann die Steuereinrichtung dazu ausgebildet sein, bei einem mittels der Sensoreinrichtung erfassten Beginn einer Rakelkraftzunahme während der Absenkung des Rakelwerkzeugs eine Rakelhöhe automatisch oder teilautomatisch zu referenzieren. Das kann bedeuten, dass die Steuereinrichtung anhand einer beginnenden Rakelkraftzunahme beziehungsweise anhand der beginnenden Zunahme der Rakelkraft während der Absenkung des Rakelwerkzeugs eine etwaige Rakelhöhe, beispielsweise eine SollHöhe oder Sollposition des Rakelwerkzeugs, als Referenz festlegt, die wiederum für nachfolgende Prozesse als Referenz dienen kann. Die Reproduzierbarkeit der jeweiligen Prozesse lässt sich hierdurch weiter verbessern.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs über die Sensoreinrichtung eine Rakelkraftabweichung entlang einer Längserstreckung des Rakelwerkzeugs zu erfassen und/oder auszuwerten. Dementsprechend kann die Steuereinrichtung entlang der Längserstreckung des Rakelwerkzeugs Rakelkräfte erfassen, miteinander vergleichen und/oder auswerten. Dadurch ist es zum Beispiel möglich, mithilfe der Steuereinrichtung auf eine gleichmäßige Kraftverteilung entlang einer Längserstreckung des Rakelwerkzeugs hinzuwirken, so dass der Druck beziehungsweise die Kraft des Rakelwerkzeugs auf das Drucksieb entlang der Längserstreckung des Rakelwerkzeugs gleichbleibend beziehungsweise konstant eingestellt und/oder konstant gehalten werden kann. Ebenso können gewollte Rakelkraftabweichungen entlang der Längserstreckung eingestellt und/oder aufrechterhalten werden.

Gemäß einer noch weiter bevorzugten Ausgestaltung kann die Steuereinrichtung dazu ausgebildet sein, bei einer mittels der Sensoreinrichtung erfassten Rakelkraftabweichung entlang einer Längserstreckung des Rakelwerkzeugs automatisch oder teilautomatisch eine Neigungsjustierung mittels der Justiereinrichtung auszuführen. Auf diese Weise kann mit nur geringem Handhabungsaufwand mithilfe der Justiereinrichtung und mithilfe der Sensoreinrichtung die räumliche Ausrichtung des Rakelwerkzeugs gezielt eingestellt und/oder korrigiert werden, sodass die jeweils gewünschte Rakelkraft beziehungsweise Rakelkraftverteilung entlang einer Längserstreckung des Rakelwerkzeugs und/oder entlang der gesamten Länge des Rakelwerkzeugs eingestellt werden kann. Dadurch, dass diese Einstellung beziehungsweise Neigungsjustierung und/oder Korrektur automatisch oder teilautomatisch erfolgen kann, lässt sich ein personalintensiver Betrieb vermeiden und die Produktivität erhöhen.

Gemäß einer noch weiter bevorzugten Ausgestaltung kann die Steuereinrichtung dazu ausgebildet sein, bei Erfassung einer entlang einer Längserstreckung des Rakelwerkzeugs gleichmäßigen und/oder innerhalb einer Toleranz befindlichen Rakelkraftverteilung die Neigungslage des Rakelwerkzeugs zu referenzieren. Folglich kann die Steuereinrichtung eine derart vorgenommene Referenzierung für nachfolgende Druck- beziehungsweise Rakelvorgänge nutzen. Insbesondere kann ausgehend von einer Referenzierten Neigungslage entweder kein weiterer Einstellaufwand oder ein verringerter Einstellaufwand erforderlich sein, da die gewünschte Rakelkraftverteilung bereits vorliegt oder mit geringem Einstellaufwand erzielt werden kann.

Weiterhin kann die Steuereinrichtung dazu ausgebildet sein, bei Erfassung einer entlang einer Längserstreckung des Rakelwerkzeugs gleichmäßigen und/oder innerhalb einer Toleranz befindlichen Rakelkraftverteilung die Neigungslage des Rakelwerkzeugs automatisch oder teilautomatisch zu fixieren. Folglich kann die Steuereinrichtung dazu ausgebildet sein, beispielsweise zumindest eine Fixiereinrichtung der Rakelvorrichtung zur Fixierung einer durch die Justiereinrichtung justierten Neigungslage des Rakelwerkzeugs und/oder zur Justierung einer durch die Justiereinrichtung justierten translatorischen Justierlage zu aktivieren und/oder dergestalt zu betätigen, dass die zumindest eine Fixiereinrichtung eine Neigungslage des Rakelwerkzeugs oder eine translatorische Justierlage arretiert beziehungsweise fixiert. Dadurch, dass diese Fixierung automatisch oder teilautomatisch erfolgen kann, können menschliche Bedienfehler zumindest verringert und auch ein etwaiger Handhabungsaufwand geringgehalten werden.

Weiterhin kann die Steuereinrichtung dazu ausgebildet sein, während einer mittels der Rakelbewegungsvorrichtung erfolgenden Bewegung der Rakelvorrichtung entlang einer in Horizontalrichtung verlaufenden Rakelbewegungsrichtung über die Sensoreinrichtung eine Rakelkraft und/oder eine Rakelkraftabweichung in Längsrichtung des Rakelwerkzeugs zu erfassen und/oder auszuwerten. Somit kann die Steuereinrichtung während der Bewegung der Rakelvorrichtung mithilfe der Sensoreinrichtung eine Rakelkraft und/oder eine Rakelkraftabweichung in Längsrichtung des Rakelwerkzeugs erkennen und die daraus gewonnen Informationen und/oder Daten können in die weitere oder nachfolgende Prozessführung einflie-βen oder als Einflussparameter für eine etwaige Steuerung und/oder Regelung durch die Steuereinrichtung genutzt werden. Dies kann insgesamt eine Verbesserung der Druckergebnisse gewährleisten.

Eine voranstehend und auch nachfolgend beschriebene Erfassung und/oder Auswertung durch die Steuereinrichtung kann bei ausschließlicher Krafteinwirkung des Rakelwerkzeugs auf das Drucksieb und/oder bei einer durch die Krafteinwirkung des Rakelwerkzeugs auf das Drucksieb erzeugten Kontaktierung eines Drucktisches und/oder einer Druckunterlage und/oder zumindest eines Siebruckwerkstücks durch das Drucksieb erfolgen.

Des Weiteren kann die Steuereinrichtung dazu ausgebildet sein, während einer mittels der Rakelbewegungseinrichtung erfolgenden Bewegung der Rakelvorrichtung entlang einer in Horizontalrichtung verlaufenden Rakelbewegungsrichtung über die Sensoreinrichtung eine Rakelkraftveränderung in Abhängigkeit der Rakelposition entlang der Rakelbewegungsrichtung zu erfassen und/oder auszuwerten. Die Steuereinrichtung kann mithin während des Verschiebens und/oder Verfahrens der Rakelvorrichtung beziehungsweise während des Verschiebens und/oder Verfahrens des Rakelwerkzeugs Veränderungen der Rakelkraft in Abhängigkeit der Rakelposition oberhalb des Drucksiebes beziehungsweise des Drucktisches erkennen und/oder auswerten. Die derart gewonnenen Informationen und/oder Daten können in die weitere oder nachfolgende Prozessführung einfließen oder als Einflussparameter für eine etwaige Steuerung und/oder Regelung durch die Steuereinrichtung genutzt werden. Somit können Rakelkraftveränderungen während des Verschiebens und/oder Verfahrens des Rakelwerkzeugs oberhalb des Drucksiebes beziehungsweise des Drucktisches in geeigneter Weise berücksichtigt und die Druckergebnisse verbessert werden.

Gemäß einer noch weiter bevorzugten Ausgestaltung kann die Steuereinrichtung dazu ausgebildet sein, während einer mittels der Rakelbewegungseinrichtung erfolgenden Bewegung der Rakelvorrichtung entlang einer in Horizontalrichtung verlaufenden Rakelbewegungsrichtung über die Sensoreinrichtung eine Veränderung der Rakelkraftabweichung in Längsrichtung des Rakelwerkzeugs in Abhängigkeit der Rakelposition entlang der Rakelbewegungsrichtung zu erfassen und/oder auszuwerten. Folglich kann die Steuereinrichtung während der Bewegung der Rakelvorrichtung mithilfe der Sensoreinrichtung Veränderungen in der Rakelkraftabweichung in Längsrichtung des Rakelwerkzeugs in Abhängigkeit der Rakelposition erkennen und/oder auswerten. Beispielsweise kann eine Vergrößerung und/oder eine Verkleinerung und/oder eine gleichbleibende der Rakelkraftabweichung in Längsrichtung des Rakelwerkzeugs in geeigneter Weise während einer Rakelbewegung entlang einer Rakelbewegungsrichtung in Horizontalrichtung erfasst werden. Die hierdurch gewonnenen Informationen und/oder Daten können in die weitere oder nachfolgende Prozessführung einfließen oder als Einflussparameter für eine etwaige Steuerung und/oder Regelung durch die Steuereinrichtung genutzt werden. Somit können Veränderungen der Rakelkraftverteilung entlang einer Längserstreckung des Rakelwerkzeugs während des Verschiebens und/oder Verfahrens des Rakelwerkzeugs in besonders vorteilhafter Weise berücksichtigt werden. Die Druckergebnisse lassen sich hierdurch noch weiter verbessern.

Gemäß einer noch weiter bevorzugten Ausgestaltung kann die Steuereinrichtung dazu ausgebildet sein, während einer mittels der Rakelbewegungseinrichtung erfolgenden Bewegung der Rakelvorrichtung entlang der Rakelbewegungsrichtung und/oder während eines Siebdruckvorgangs eine fortlaufende und/oder wiederkehrende Erfassung von Rakelkräften und/oder von Rakelkraftabweichungen in Längsrichtung des Rakelwerkzeugs vorzunehmen. Somit kann eine kontinuierliche Überwachung von Rakelkräften und/oder von Rakelkraftabweichungen während einer Bewegung der Rakelvorrichtung mithilfe der Steuereinrichtung realisiert und eine weiter verbesserte Datenbasis für die nachfolgende Prozessführung, weitere Siebdruckvorgänge und/oder nachfolgend vorzunehmende Justierungen der Ausrichtung und/oder Neigungslage des Rakelwerkzeugs geschaffen werden.

Gemäß einer noch weiter bevorzugten Ausgestaltung kann die Steuereinrichtung dazu ausgebildet sein, Messdaten von fortlaufenden und/oder wiederkehrenden Erfassungen während einer mittels der Rakelbewegungseinrichtung erfolgenden Bewegung der Rakelvorrichtung entlang der Rakelbewegungsrichtung und/oder während eines Druckvorganges zu speichern und/oder auszuwerten. Somit kann die Steuereinrichtung Messdaten für eine weitere Verarbeitung speichern und/oder diese auswerten. Insbesondere bei Messdaten von fortlaufenden und/oder wiederkehrenden Erfassungen können weitere Erkenntnisse, wie zum Beispiel der Verschleiß des Drucksiebs und/oder des Rakelwerkzeugs beziehungsweise der Rakelvorrichtung, ermittelt werden. Anhand derartiger Daten können geeignete Maßnahmen für nachfolgende Druckvorgänge initiiert werden, um die Druckqualität zu verbessern oder aufrecht zu erhalten.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs, in einer siebfreien Anordnung und/oder bei Krafteinwirkung des Rakelwerkzeugs unmittelbar auf einen Drucktisch und/oder in einer mit dem Drucksieb auf einem Drucktisch aufliegenden Anordnung, über die Sensoreinrichtung den Verlauf einer Rakelkraftzunahme in Abhängigkeit eines Absenkweges zu erfassen und/oder auszuwerten. Durch eine solche Ausgestaltung kann die Kraftzunahme beziehungsweise das Verhalten des Rakelwerkzeugs im Zuge der Zunahme der Rakelkraft frei von Einflüssen eines Drucksiebs ermittelt werden. Die daraus gewonnenen Erkenntnisse und Informationen können in vorteilhafter Weise für die Einstellung der Neigungslage des Rakelwerkzeugs und/oder für die Steuerung einer Absenkbewegung bei Vorhandensein eines Drucksiebs und/oder für Druckvorgänge beziehungsweise Rakelbewegungen genutzt werden.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs auf das Drucksieb, frei von einer Kontaktierung eines Drucktisches und/oder einer Druckunterlage und/oder eines Siebdruckwerkstücks durch das Drucksieb, über die Sensoreinrichtung den Verlauf einer Rakelkraftzunahme in Abhängigkeit eines Absenkweges zu erfassen und/oder auszuwerten. Hierdurch kann der Verlauf einer Rakelkraftzunahme aufgrund der elastischen Verformung des Drucksiebs während einer Absenkbewegung des Rakelwerkzeugs erfasst werden.

Gemäß einer noch weiter bevorzugten Ausgestaltung kann die Steuereinrichtung dazu ausgebildet sein, während einer mittels der Stelleinrichtung erfolgenden Absenkbewegung des Rakelwerkzeugs den Beginn einer Rakelkraftzunahme zu erfassen und/oder den bei Beginn der Rakelkraftzunahme vorliegenden Absenkweg des Rakelwerkzeugs als Messreferenzstartpunkt für die Erfassung einer weiteren Rakelkraftzunahme und/oder für die Erfassung einer Siebrückstellkraft und/oder einer Siebspannung und/oder einer Referenzsiebrückstellkraft und/oder einer Referenzsiebspannung und/oder einer Siebalterung festzulegen. Somit kann also durch Erfassung des Beginns der Rakelkraftzunahme auf einen ersten Kontakt mit dem Drucksieb oder mit einem Drucktisch rückgeschlossen werden. Ein solcher Kontaktpunkt kann in vorteilhafter als Messreferenzstartpunkt genutzt werden und es kann auf diese Weise eine besonders präzise Referenzmessung oder auch Überwachungsmessung vorgenommen werden. Beispielsweise kann die Position, ab welcher die Rakelkraftzunahme beginnt, als Messreferenzstartpunkt für die Erfassung Referenzsiebspannung und/oder Referenzsiebrückstellkraft festgelegt und/oder als Messreferenzstartpunkt für Messungen der Siebspannung und/oder Siebrückstellkraft im Laufe der Lebensdauer eines Drucksiebs festgelegt werden.

Gemäß einer noch weiter bevorzugten Ausgestaltung kann die Steuereinrichtung dazu ausgebildet sein, ausgehend von dem Messreferenzstartpunkt das Rakelwerkzeug mittels der Stelleinrichtung weiter abzusenken und eine weitere Rakelkraftzunahme in Abhängigkeit des Absenkwegs zu erfassen und auf Grundlage der weiteren Rakelkraftzunahme eine Siebrückstellkraft und/oder Siebspannung und/oder eine Referenzsiebrückstellkraft und/oder eine Referenzsiebspannung und/oder eine Siebalterung zu ermitteln. Mithin kann die Steuereinrichtung ausgehend von dem Messreferenzstartpunkt und bei einem weiteren Absenken der Stelleinrichtung anhand der Zunahme der Rakelkraft die Siebrückstellkraft und/oder Siebspannung und/oder die Elastizität des Drucksiebes ermitteln.

Eine bei einem intakten Sieb ab dem Messreferenzstartpunkt erfolgte Erfassung der Siebrückstellkraft und/oder Siebspannung beziehungsweise der Rakelkraftzunahme in Abhängigkeit des weiteren Absenkwegs kann dabei als Referenzerfassung dienen und für spätere Auswertungen und/oder Vergleiche mit erneuten Siebrückstellkraftmessungen und/oder Siebspannungsmessungen herangezogen werden. Während der Nutzungsdauer des jeweiligen Drucksiebs kann hierdurch in vorteilhafter Weise der Verschleiß beziehungsweis die Alterung des Drucksiebs überwacht werden.

Gemäß einer noch weiter bevorzugten Ausgestaltung kann die Steuereinrichtung dazu ausgebildet sein, eine Bestimmung der Siebrückstellkraft und/oder der Siebspannung des Drucksiebs an mehreren Positionen entlang einer in Horizontalrichtung verlaufenden Rakelbewegungsrichtung vorzunehmen, insbesondere in oder im Bereich einer Mitte des Drucksiebs und/oder angrenzend an einen Drucksiebrand oder an den Drucksiebrändern. Dementsprechend kann über die gesamte Fläche des Drucksiebes oder über verhältnismäßig weit Verteilte Punkt auf dem Drucksieb der Verschleiß des Drucksiebes erfasst werden. Mithin können mehrere Messpunkte für die Siebrückstellkraft und/oder Siebspannung des Drucksiebs ermittelt beziehungsweise verwendet werden, anhand welcher auf den Zustand des Drucksiebs Rückschlüsse gezogen werden können, und zwar hinsichtlich des Verschleißes des Drucksiebs. Die Erfassungssicherheit und Erfassungsgenauigkeit lässt sich hierdurch weiter verbessern.

Gemäß einer noch weiter bevorzugten Ausgestaltung kann die Steuereinrichtung dazu ausgebildet sein, eine Bestimmung der Siebrückstellkraft und/oder Siebspannung mittels der Sensoreinrichtung und unter Einbeziehung einer Absprunghöhe zwischen dem Drucksieb und einem Drucktisch und/oder einer Druckunterlage und/oder zumindest einem Siebdruckwerkstück und/oder unter Einbeziehung eines Absenkweges der Stelleinrichtung und/oder des Rakelwerkzeugs mittels der Stelleinrichtung zu ermitteln. Die Genauigkeit der Erfassung einer Siebrückstellkraft und/oder Siebspannung kann auf diese Weise weiter präzisiert beziehungsweise in Abhängigkeit unterschiedlicher Betriebsstellungen in geeigneter Weise präzisiert werden.

Gemäß einer noch weiter bevorzugten Ausgestaltung kann die Steuereinrichtung dazu ausgebildet ist, mittels der Sensoreinrichtung und/oder aus erfassten und/oder abgespeicherten Sensordaten der Sensoreinrichtung eine Auftragskraft, die von dem Rakelwerkzeug über das Drucksieb wirksam auf einen Drucktisch und/oder auf eine Druckunterlage und/oder auf zumindest ein Siebdruckwerkstück übertragen wird, zu ermitteln.

Bei der Auftragskraft kann es sich mithin um diejenige Kraft handeln, die ausgehend von dem Rakelwerkzeug über das Drucksieb auf den Drucktisch und/oder auf die jeweilige Druckunterlage und/oder auf zumindest ein Siebdruckwerkstück unterhalb des Drucksiebs wirkt beziehungsweise übertragen wird. Der Auftragskraft gegengerichtet ist eine Stützkraft des Drucktisches und/oder der jeweiligen Druckunterlage und/oder des zumindest einen Siebdruckwerkstücks.

Die Auftragskraft kann die Qualität und/oder die Kontrollierbarkeit des jeweiligen Druckprozesses nennenswert beeinflussen. Insbesondere kann die Auftragskraft als Prozessparameter Einfluss auf die Menge der über das Drucksieb auf den Drucktisch und/oder auf eine Druckunterlage und/oder auf zumindest ein Siebdruckwerkstück aufgetragene Druckmasse haben. Gleichzeitig kann die Auftragskraft wesentlichen Einfluss auf die mechanische Belastung von bereits gedruckten Siebdruckwerkstücken beziehungsweise von bereits aufgebauten Druckschichten eines Siebdruckwerkstücks haben.

Bei einer zu geringen Auftragskraft ein geeignetes Auspressen von Druckmasse durch das Drucksieb beziehungsweise ein geeignetes Auftragen von Druckmasse auf die Druckunterlage und/oder das zumindest eine Siebdruckwerkstück nicht sichergestellt werden. Bei einer zu hohen Auftragskraft können bereits gedruckte Siebdruckwerkstücke beziehungsweise bereits aufgebauten Druckschichten eines Siebdruckwerkstücks beschädigt werden. Eine genaue Einstellbarkeit und/oder Kontrollierbarkeit der Auftragskraft kann mithin wesentlich zu einer sicheren Prozessführung beitragen.

Gemäß einer noch weiter bevorzugten Ausgestaltung kann die Steuereinrichtung dazu ausgebildet sein, die Auftragskraft aus einer Differenz der durch die Sensoreinrichtung erfassten Rakelkraft sowie einer vorbekannten und/oder ermittelten Siebrückstellkraft des Drucksiebs zu ermitteln. Die Siebrückstellkraft beziehungsweise die aus der Siebspannung resultierende Siebrückstellkraft ist gegengerichtet zur Wirkrichtung der Stelleinrichtung bei einer Absenkbewegung des Rakelwerkzeugs. Somit kann die wirksame Auftragskraft in vorteilhafter Weise als Differenz zwischen der Rakelkraft und der Siebdrückstellkraft beziehungsweise der aus der Siebspannung resultierenden Siebdrückstellkraft ermittelt werden.

Gemäß einer noch weiter bevorzugten Ausgestaltung kann die Steuereinrichtung dazu ausgebildet sein, die Auftragskraft aus einer Differenz der durch die Sensoreinrichtung erfassten Rakelkraft sowie einer vorbekannten und/oder ermittelten Siebrückstellkraft des Drucksiebs sowie eine Druckmassenrückstellkraft, die sich aufgrund des Druckpressens von Druckmasse durch das Drucksieb einstellt, zu ermitteln. Mithin kann die Siebrückstellkraft mit der Druckmassenrückstellkraft addiert werden und die Summe kann von der Rakelkraft in Abzug gebracht werden. Somit kann die wirksame Auftragskraft in vorteilhafter Weise und mit weiter verbesserter Präzision ermittelt werden.

Eine Druckmassenrückstellkraft kann ermittelt werden, in dem Rakelbewegungen mit und ohne Druckmasse auf dem Drucksieb vorgenommen werden und die jeweils erfassten Rakelkräfte miteinander verglichen werden.

Gemäß einer noch weiter bevorzugten Ausgestaltung kann die Steuereinrichtung dazu ausgebildet sein, die Auftragskraft während der Durchführung eines Druckvorgangs konstant zu halten. Es kann auf diese Weise während eines Druckvorgangs ein besonders gleichmäßiger Schichtauftrag gewährleistet werden.

Gemäß einer noch weiter bevorzugten Ausgestaltung kann die Steuereinrichtung dazu ausgebildet sein, mehrere Druckvorgänge mit gleichen Auftragskräften durchzuführen und/oder Abweichungen der Auftragskräfte zwischen mehreren Druckvorgängen unterhalb eines vordefinierten Grenzwertes zu halten. Unterschiedliche Druckschichten beziehungsweise aufeinander aufgebaute Druckschichten können mithin eine identische oder im Wesentlichen identische Schichtdicke aufweisen, wodurch die Werkstückqualität weiter verbessert werden kann.

Gemäß einer noch weiter bevorzugten Ausgestaltung kann die Steuereinrichtung dazu ausgebildet ist, eine Auftragskraftabweichung entlang einer Längserstreckung des Rakelwerkzeugs zu erfassen und/oder auszuwerten. Auf diese Weise können Ungleichmäßigkeiten der Auftragskraft erfasst und beispielsweise durch Justierung der Neigung des Rakelwerkzeugs und/oder durch Justierung der Siebstellung ausgeglichen werden.

Gemäß einer noch weiter bevorzugten Ausgestaltung kann die Steuereinrichtung dazu ausgebildet ist, eine Bestimmung der Auftragskraft mittels der Sensoreinrichtung und unter Einbeziehung einer Absprunghöhe zwischen dem Drucksieb und einem Drucktisch und/oder einer Druckunterlage und/oder zumindest einem Siebdruckwerkstück und/oder unter Einbeziehung eines Absenkweges der Stelleinrichtung und/oder des Rakelwerkzeugs mittels der Stelleinrichtung vorzunehmen.

Die Absprunghöhe zwischen dem Drucksieb einerseits und einem Drucktisch und/oder einer Druckunterlage und/oder zumindest einem Siebdruckwerkstück andererseits ist entscheidend dafür, um welches Maß das Drucksieb bei einer Krafteinwirkung durch das Rakelwerkzeugs heruntergedrückt wird, insbesondere aufgrund eines linienförmigen Kontakts durch das Rakelwerkzeug heruntergedrückt wird. Bei Kenntnis von Siebrückstellkraftverläufen, die zuvor ermittelt und/oder abgespeichert werden können, kann mittels der Absprunghöhe ein Rückschluss auf die jeweils vorliegende Siebrückstellkraft gezogen werden. Ein Absenkweg der Stelleinrichtung und/oder des Rakelwerkzeugs mittels der Stelleinrichtung kann Rückschlüsse auf die elastische Verformung des Rakelwerkzeugs beziehungsweise auch der Stelleinrichtung und/oder der Rakelvorrichtung insgesamt liefern. Die Ermittlung der Auftragskraft kann hierdurch insgesamt mit erhöhter Genauigkeit vorgenommen werden.

Gemäß einer noch weiter bevorzugten Ausgestaltung kann die Steuereinrichtung und/oder die Stelleinrichtung dazu ausgebildet sein, das Rakelwerkzeug während der Durchführung eines Druckvorganges auf einer festgelegten Höhenposition zu halten. Durch Halten einer festgelegten Höhenposition kann ein kontinuierliches, gleichbleibendes beziehungsweise gleichmäßiges Druckbild gewährleistet werden.

Alternativ oder ergänzend ist es möglich, dass eine festgelegte Höhenposition während der Durchführung eines Druckvorganges mittels der Stelleinrichtung und/oder der Steuereinrichtung fixiert und/oder unverändert aufrechterhalten bleibt. Auf diese Weise kann ein kontinuierliches, gleichbleibendes beziehungsweise gleichmäßiges Druckbild über das gesamte Drucklayout eines Drucksiebs mit erhöhter Sicherheit gewährleistet werden.

Gemäß einer noch weiter bevorzugten Ausgestaltung kann die Steuereinrichtung dazu ausgebildet sein, die Höhenposition des Rakelwerkzeugs während der Durchführung eines Druckvorganges kraftbasiert zu steuern und/oder zu regeln. Eine kraftbasierte Steuerung und/oder Regelung kann den Vorteil gewährleisten, dass Druckmasse mit einer entlang der Rakelrichtung gleichbleibenden Kraft oder einem gleichbleibenden Druck durch das Drucksieb hindurchgepresst wird. Kraftschwankungen können ausgeglichen werden. Es lässt sich damit vermeiden, dass beispielsweise lokal eine zu große Menge oder auch zu geringe Menge an Druckmasse durch das Drucksieb gepresst wird.

Gemäß einer noch weiter bevorzugten Ausgestaltung kann die Steuereinrichtung und/oder die Stelleinrichtung dazu ausgebildet sein, eine festgelegte Rakelkraft und/oder eine festgelegte und wirksame Auftragskraft während der Durchführung eines Druckvorganges zu halten. Dies hat den Vorteil, dass mit weiter erhöhter Sicherheit über das gesamte Drucklayout des Drucksiebs eine konstant bleibende Kraft ausgeübt werden kann und ein damit ein besonders gleichmäßiges Druckbild erzeugt werden kann. Schwankungen in der Rakelkraft können somit in besonders vorteilhafter Weise ausgeglichen werden. Hierdurch kann eine besonders hohe Druckqualität gewährleistet werden.

Gemäß einer noch weiter bevorzugten Ausgestaltung kann die Steuereinrichtung und/oder die Stelleinrichtung dazu ausgebildet sein, eine festgelegte und/oder vordefinierte Siebrückstellkraft und/oder Siebspannung während der Durchführung eines Druckvorgangs aufrecht zu erhalten. Etwaige Ungleichmäßigkeiten des Drucksiebs lassen sich hierdurch geeignet ausgleichen.

Gemäß einer noch weiter bevorzugten Ausgestaltung kann die Steuereinrichtung dazu ausgebildet sein, Messdaten von fortlaufenden und/oder wiederkehrenden Erfassungen der Sensoreinrichtung während einer mittels der Rakelbewegungseinrichtung erfolgenden Bewegung der Rakelvorrichtung entlang der Rakelbewegungsrichtung und/oder während eines Druckvorganges in Mittelwerte umzurechnen und/oder abzuspeichern und/oder zu verarbeiten. Mithilfe der Umrechnung und/oder Abspeicherung und/oder Verarbeitung von erfassten Messdaten in Mittelwerte kann in vorteilhafter Weise eine geeignete Datenbasis für nachfolgende Steuer- und Regelprozesse geschaffen werden und ein insgesamt geringer Rechenaufwand wird gewährleistet. Intensive Rechenvorgänge der Steuereinrichtung sind hierdurch reduzierbar und zum anderen kann ein besonders gleichmäßiges Druckbild weiter begünstigt werden. Zudem kann auf diese Weise Speicherplatz für Messwerte und Messdaten eingespart werden.

Gemäß einer noch weiter bevorzugten Ausgestaltung kann die Steuereinrichtung dazu ausgebildet sein, Messdaten von fortlaufenden und/oder wiederkehrenden Erfassungen von einzelnen Kraftmesssensoren während einer mittels der Rakelbewegungseinrichtung erfolgenden Bewegung der Rakelvorrichtung entlang der Rakelbewegungsrichtung und/oder während eines Druckvorganges in Mittelwerte umzurechnen und/oder abzuspeichern und/oder zu verarbeiten. Die Informationsgüte durch die Differenzierung von Daten einzelner Kraftmesssensoren kann auf diese Weise verbessert werden. Gleichzeitig kann die zu verarbeitende Datenmenge reduziert und die Verarbeitung, Speicherung und Umrechnung von Daten beziehungsweise Messwerten beschleunigt werden.

Gemäß einer noch weiter bevorzugten Ausgestaltung kann die Steuereinrichtung dazu ausgebildet sein, eine Rakelkraft und/oder Auftragskraft mittels der Stelleinrichtung in Abhängigkeit einer Bauteilhöhe und/oder in Abhängigkeit der Schichtanzahl bereits gedruckter Bauteilschichten einzustellen. Die Höhe eines bereits erfolgten Druckaufbaus beziehungsweise Werkstücks und/oder die Schichtanzahl bereits gedruckter Bauteilschichten kann auf diese Weise vorteilhaft für die weitere Prozessführung genutzt werden. Soweit die bereits aufgebaute Bauteilhöhe einen nennenswerten Einfluss auf den Druck weiterer Druckschichten beziehungsweise auf den Druckmassenauftrag durch das Drucksieb hat, kann dies durch Einstellung der Rakelkraft und/oder Auftragskraft mittels der Stelleinrichtung in geeigneter Weise ausgeglichen werden. Beschädigungen der bereits gedruckten Bauteilschichten lassen sich hierdurch wirksam vermeiden.

Gemäß einer noch weiter bevorzugten Ausgestaltung kann die Steuereinrichtung dazu ausgebildet sein, eine Rakelkraft und/oder Auftragskraft ausgehend von einer Start-Rakelkraft und/oder Start-Auftragskraft schichtweise und proportional abzusenken bis zu einer Grenzschicht und/oder mit Erreichen einer Grenzschicht die Rakelkraft und/oder Auftragskraft für den Druck weiterer Druckschichten unverändert aufrechtzuerhalten. Auf diese Weise kann sichergestellt werden, dass Siebdruckbauteile entlang der gesamten Höhe im Wesentlichen gleichbleibende Schichtdicken aufweisen. Die Druckpräzision kann auf diese Weise noch weiter verbessert werden. Zudem kann auf diese Weise eine Elastizität der bereits gedruckten Bauteilschichten vorteilhaft berücksichtigt werden.

Gemäß einer noch weiter bevorzugten Ausgestaltung kann die Steuereinrichtung dazu ausgebildet sein, auf Grundlage einer ermittelten Siebrückstellkraftkurve und/oder Siebspannungskurve, einer ermittelten Rakelblattflexibilität, einer ermittelten Rakelkraft über den Druckverlauf in Rakelbewegungsrichtung, einer Absprunghöhe zwischen Drucksieb und einem Drucktisch oder einer Bauteiloberfläche und/oder einer Höhe des Drucksiebs eine Auftragskraft auf die unterhalb des Drucksiebs befindlichen Siebdruckwerkstücke zu ermitteln, insbesondere als Liniendruck zu ermitteln. Eine solche Ermittlung kann in vorteilhafter Weise dazu dienen, qualitativ hochwertige Siebdruckbauteile zu erstellen, bei denen eine kontinuierliche beziehungsweise gleichbleibende Druckschichtdicke von Schicht zu Schicht gewährleistet wird. Die Gewährleistung gleichbleibender Druckschichtdicken kann zu einer verbesserten Bauteilpräzision führen.

Gemäß einer noch weiter bevorzugten Ausgestaltung kann vorgesehen sein, dass die Steuereinrichtung dazu ausgebildet ist, auf Grundlage eines mittels der Sensoreinrichtung erfassten IST-Kräfteverlaufs während eines Siebdruckvorgangs eine gesteuerte und/oder geregelte Anpassung der Auftragskraft und/oder Rakelkraft und/oder der Rakelgeschwindigkeit entlang einer Rakelbewegungsrichtung und/oder einer Absprunghöhe und/oder einer Siebliftfunktionalität vorzunehmen. Die Anpassung der Rakelkraft und/oder der Rakelgeschwindigkeit mittels eines erfassten IST-Kräfteverlaufs dient dazu, die Prozessparameter für einen laufenden Druckvorgang und/oder für zumindest einen nachfolgenden Druckvorgang geeignet anzupassen. Die Erzeugung hochpräziser Siebdruckbauteile kann auf diese Weise mit weiter erhöhten Sicherheit erfolgen. Etwaige Druckschichten können besonders genaue Dicken aufweisen. Insbesondere bei einem erfassten IST-Kräfteverlauf kann in Echtzeit in den jeweiligen Druckvorgang eingegriffen werden und in der Folge lassen sich Einstellungen vornehmen, durch die das zu erstellende Siebdruckbauteil mit erhöhter Präzision gefertigt werden kann.

Zudem kann vorgesehen sein, dass die Steuereinrichtung dazu ausgebildet ist, auf Grundlage eines mittels der Sensoreinrichtung erfassten Ist-Kräfteverlaufs während eines Siebdruckvorgangs und/oder einer erfassten Auftragskraft und/oder Siebrückstellkraft und/oder Siebspannung eine gesteuerte und/oder geregelte Anpassung einer Sieblagenausrichtung und/oder Siebhöhenausrichtung vorzunehmen. Somit kann die Steuereinrichtung im Betrieb oder während des Betriebs der Vorrichtung durch beispielsweise eine Veränderung der räumlichen Lage des Drucksiebs eine zumindest abschnittsweise oder stellenweise Anpassung der Rakelkraft des Rakelwerkzeugs auf das Drucksieb gewährleisten. Somit kann die Fertigungspräzision erhöht und ein Ausgleich von Ungenauigkeiten vorangegangener Druckvorgänge sichergestellt werden. Im Ergebnis lassen sich hierdurch Siebdruckwerkstücke mit weiter erhöhter Genauigkeit herstellen.

Ein weiterer unabhängiger Aspekt der vorliegenden Erfindung betrifft eine Vorrichtung zur Herstellung von dreidimensionalen Siebdruckwerkstücken, insbesondere 3D-Siebdruckanlage, mit einem Drucksieb und mit einer Rakelvorrichtung zum Fluten des Drucksiebs mit einer Druckmasse und/oder zum Pressen von Druckmasse durch das Drucksieb, wobei die Rakelvorrichtung wenigstens ein Rakelwerkzeug, eine Sensoreinrichtung zur Erfassung von auf das Rakelwerkzeug wirkenden Rakelkräften sowie eine Steuereinrichtung zur Auswertung und/oder Speicherung von Sensordaten der Sensoreinrichtung aufweist, wobei die Steuereinrichtung dazu ausgebildet ist, mittels der Sensoreinrichtung und/oder aus erfassten und/oder abgespeicherten Sensordaten der Sensoreinrichtung eine Auftragskraft, die von dem Rakelwerkzeug über das Drucksieb wirksam auf einen Drucktisch und/oder auf eine Druckunterlage und/oder auf zumindest ein Siebdruckwerkstück übertragen wird, zu ermitteln.

Bei der Auftragskraft kann es sich erfindungsgemäß mithin um diejenige Kraft handeln, die ausgehend von dem Rakelwerkzeug über das Drucksieb auf den Drucktisch und/oder auf die jeweilige Druckunterlage und/oder auf zumindest ein Siebdruckwerkstück unterhalb des Drucksiebs wirkt beziehungsweise übertragen wird.

Der Auftragskraft gegengerichtet ist eine Stützkraft des Drucktisches und/oder der jeweiligen Druckunterlage und/oder des zumindest einen Siebdruckwerkstücks.

Die Auftragskraft kann die Qualität und/oder die Kontrollierbarkeit des jeweiligen Druckprozesses mithin nennenswert beeinflussen. Die kann Auftragskraft als Prozessparameter Einfluss auf die Menge der über das Drucksieb auf den Drucktisch und/oder auf eine Druckunterlage und/oder auf zumindest ein Siebdruckwerkstück aufgetragene Druckmasse haben. Gleichzeitig kann die Auftragskraft wesentlichen Einfluss auf die mechanische Belastung von bereits gedruckten Siebdruckwerkstücken beziehungsweise von bereits aufgebauten Druckschichten eines Siebdruckwerkstücks haben.

Bei einer zu geringen Auftragskraft ein geeignetes Auspressen von Druckmasse durch das Drucksieb beziehungsweise ein geeignetes Auftragen von Druckmasse auf die Druckunterlage und/oder das zumindest eine Siebdruckwerkstück nicht sichergestellt werden. Bei einer zu hohen Auftragskraft können bereits gedruckte Siebdruckwerkstücke beziehungsweise bereits aufgebauten Druckschichten eines Siebdruckwerkstücks beschädigt werden. Eine genaue Einstellbarkeit und/oder Kontrollierbarkeit der Auftragskraft kann mithin wesentlich zu einer sicheren Prozessführung beitragen.

Ein weiterer unabhängiger Aspekt der vorliegenden Erfindung betrifft eine Vorrichtung zur Herstellung von dreidimensionalen Siebdruckwerkstücken, insbesondere eine 3D-Siebdruckanlage und/oder eine automatisierte 3D-Siebdruckanlage, mit einem Drucksieb und mit einer Rakelvorrichtung zum Fluten des Drucksiebs mit einer Druckmasse und/oder zum Pressen von Druckmasse durch das Drucksieb ausgestattet, wobei die Rakelvorrichtung wenigstens ein Rakelwerkzeug und eine Sensoreinrichtung zur Erfassung von auf das Rakelwerkzeug wirkenden Rakelkräften aufweist, wobei die Sensoreinrichtung dabei zur Erfassung einer Rakelkraftabweichung entlang einer Längserstreckung des Rakelwerkzeugs ausgebildet ist.

Es können somit also die auf das Rakelwerkzeug wirkenden Rakelkräfte entlang der Längserstreckung des Rakelwerkzeugs beziehungsweise unterschiede der Rakelkräfte entlang der Längserstreckung erfasst werden. Dadurch kann die Gleichmäßigkeit oder eben auch eine Ungleichmäßigkeit der Krafteinwirkung vom Rakelwerkzeug auf das Drucksieb in die Prozessführung bei der Ausführung von Druck- beziehungsweise Rakelvorgängen einfließen. Einer Ungleichmäßigkeit der Krafteinwirkung kann dabei entweder durch die Prozessführung beziehungsweise durch die Anpassung der Vorrichtungseinstellungen entgegengewirkt werden oder eine Ungleichmäßigkeit der Krafteinwirkung kann gewollt sein oder gezielt erzeugt werden.

Ein weiterer unabhängiger Aspekt der vorliegenden Erfindung betrifft ebenfalls eine Vorrichtung zur Herstellung von dreidimensionalen Siebdruckwerkstücken, insbesondere eine 3D-Siebdruckanlage und/oder eine automatisierte 3D-Siebdruckanlage, mit einem Drucksieb und mit einer Rakelvorrichtung zum Fluten des Drucksiebs mit einer Druckmasse und/oder zum Pressen von Druckmasse durch das Drucksieb ausgestattet, wobei die Rakelvorrichtung wenigstens ein Rakelwerkzeug, eine Justiereinrichtung zur Neigungsjustierung des Rakelwerkzeugs und eine Rakellagerung aufweist, die eine Neigungsjustierung des Rakelwerkzeugs mittels der Justiereinrichtung um eine Neigungsachse erlaubt, wobei die Rakellagerung zumindest eine Federlagerung aufweist. Bevorzugt erlaubt die Rakellagerung auch eine translatorische Justierbewegung des Rakelwerkzeugs mittels der Justiereinrichtung. Die Rakellagerung kann bevorzugt auch eine translatorische Justierbewegung des Rakelwerkzeugs mittels der Justiereinrichtung erlauben.

Es wird darauf hingewiesen, dass die Merkmale der voranstehend beschriebenen Vorrichtung zur Herstellung von Siebdruckwerkstücken, wie sie weiter oben beschrieben worden sind, einzeln oder miteinander kombinierbar bei einer Vorrichtung zur Herstellung von Siebdruckwerkstücken gemäß den weiteren unabhängigen Aspekten der Erfindung, wie voranstehend dargelegt, Anwendung finden können.

Ein noch weiterer unabhängiger Aspekt der vorliegenden Erfindung betrifft eine Rakelvorrichtung. Erfindungsgemäß kann eine Rakelvorrichtung für eine Vorrichtung zur Herstellung von dreidimensionalen Siebdruckwerkstücken, wie weiter oben erwähnt, und/oder für eine 3D-Siebdruckanlage vorgesehen sein. Eine erfindungsgemäße Rakelvorrichtung kann ausgestattet sein mit wenigstens einem Rakelwerkzeug zum Fluten eines Drucksiebs mit einer Druckmasse und/oder zum Pressen von Druckmasse durch ein Drucksieb und mit einer Sensoreinrichtung zur Erfassung von auf das Rakelwerkzeug wirkenden Kräften. Dabei kann die Sensoreinrichtung zur Erfassung einer Siebrückstellkraft und/oder Siebspannung und/oder Siebalterung ausgebildet sein.

Ein noch weiterer unabhängiger Aspekt der vorliegenden Erfindung betrifft eine Rakelvorrichtung. Erfindungsgemäß kann eine Rakelvorrichtung für eine Vorrichtung zur Herstellung von dreidimensionalen Siebdruckwerkstücken, wie weiter oben erwähnt, und/oder für eine 3D-Siebdruckanlage vorgesehen sein. Eine erfindungsgemäße Rakelvorrichtung kann ausgestattet sein mit wenigstens einem Rakelwerkzeug zum Fluten eines Drucksiebs mit einer Druckmasse und/oder zum Pressen von Druckmasse durch ein Drucksieb und mit einer Sensoreinrichtung zur Erfassung von auf das Rakelwerkzeug wirkenden Kräften. Dabei kann die Sensoreinrichtung zur Erfassung einer Auftragskraft, die von dem Rakelwerkzeug über ein Drucksieb wirksam auf einen Drucktisch und/oder auf eine Druckunterlage und/oder auf zumindest ein Siebdruckwerkstück übertragen wird, eingerichtet sein.

Ein noch weiterer unabhängiger Aspekt der vorliegenden Erfindung betrifft ebenfalls eine Rakelvorrichtung. Erfindungsgemäß kann eine Rakelvorrichtung für eine Vorrichtung zur Herstellung von dreidimensionalen Siebdruckwerkstücken, wie weiter oben erwähnt, und/oder für eine 3D-Siebdruckanlage vorgesehen sein. Eine erfindungsgemäße Rakelvorrichtung kann ausgestattet sein mit wenigstens einem Rakelwerkzeug zum Fluten eines Drucksiebs mit einer Druckmasse und/oder zum Pressen von Druckmasse durch ein Drucksieb und mit einer Sensoreinrichtung zur Erfassung von auf das Rakelwerkzeug wirkenden Kräften. Dabei kann die Sensoreinrichtung zur Erfassung einer Rakelkraftabweichung entlang einer Längserstreckung des Rakelwerkzeugs ausgebildet sein.

Es wird darauf hingewiesen, dass die Merkmale und Vorteile der Vorrichtung zur Herstellung von dreidimensionalen Siebdruckwerkstücken, wie sie weiter oben beschrieben worden sind, einzeln oder miteinander kombinierbar auch bei einer Rakelvorrichtung gemäß den voranstehend beschriebenen unabhängigen Aspekten der vorliegenden Erfindung Anwendung finden können.

Ein weiterer unabhängiger Aspekt der vorliegenden Erfindung betrifft ein Verfahren zur Herstellung von Siebdruckwerkstücken, insbesondere mit einer voranstehend beschriebenen Vorrichtung zur Herstellung von dreidimensionalen Siebdruckwerkstücken und/oder einer 3D-Siebdruckanlage und/oder mit einer voranstehend beschriebenen Rakelvorrichtung. Bei einem Verfahren zur Herstellung von dreidimensionalen Siebdruckwerkstücken, insbesondere mit einer Vorrichtung zur Herstellung von dreidimensionalen Siebdruckwerkstücken und/oder einer 3D-Siebdruckanlage, wird mittels einer Rakelvorrichtung ein Drucksieb mit einer Druckmasse geflutet und/oder mittels einer Rakelvorrichtung Druckmasse durch ein Drucksieb gepresst. Mittels einer Sensoreinrichtung wird eine auf ein Rakelwerkzeug der Rakelvorrichtung wirkende Rakelkraft erfasst. Schließlich wird durch eine Steuereinrichtung aus erfassten und/oder abgespeicherten Sensordaten der Sensoreinrichtung eine Siebrückstellkraft und/oder Siebspannung des Drucksiebs ermittelt.

Ein weiterer unabhängiger Aspekt der vorliegenden Erfindung betrifft ebenfalls ein Verfahren zur Herstellung von Siebdruckwerkstücken, insbesondere mit einer voranstehend beschriebenen Vorrichtung zur Herstellung von dreidimensionalen Siebdruckwerkstücken und/oder einer 3D-Siebdruckanlage und/oder mit einer voranstehend beschriebenen Rakelvorrichtung. Bei einem Verfahren zur Herstellung von dreidimensionalen Siebdruckwerkstücken, insbesondere mit einer Vorrichtung zur Herstellung von dreidimensionalen Siebdruckwerkstücken und/oder einer 3D-Siebdruckanlage, wird mittels einer Rakelvorrichtung ein Drucksieb mit einer Druckmasse geflutet und/oder mittels einer Rakelvorrichtung Druckmasse durch ein Drucksieb gepresst. Mittels einer Sensoreinrichtung wird eine auf ein Rakelwerkzeug der Rakelvorrichtung wirkende Rakelkraft erfasst. Schließlich wird durch die Sensoreinrichtung eine Rakelkraftabweichung entlang einer Längserstreckung des Rakelwerkzeugs erfasst.

Die vorstehend in Bezug auf die Vorrichtung beschriebenen Einzelheiten und unabhängigen Aspekte, einschließlich der nebengeordneten Aspekte betreffend eine Vorrichtung, sowie auch die jeweils beschriebenen Vorteile gelten in gleicher Weise für die voranstehend beschriebenen erfindungsgemäßen Verfahren gemäß den weiteren unabhängigen Aspekten.

Nachfolgend wird die Erfindung beispielhaft anhand vorteilhafter Ausführungsformen unter Bezugnahme auf die beigefügten Figuren beschrieben.

Es zeigen jeweils schematisch:
- Fig. 1: eine perspektivische Darstellung einer Vorrichtung zur Herstellung von dreidimensionalen Siebdruckwerkstücken gemäß einem Ausführungsbeispiel der vorliegenden Erfindung,
- Fig. 2: eine Seitenansicht auf die Vorrichtung von Figur 1 in einem geöffneten Zustand;
- Fig. 3: eine perspektivische Detailansicht einer Druckeinrichtung der Vorrichtung von Figur 1 ;
- Fig. 4: eine perspektivische Ansicht einer Rakelvorrichtung sowie einer Rakelbewegungseinrichtung der Vorrichtung von Figur 1 ;
- Fig. 5: eine teilweise Vorderansicht auf eine Rakelvorrichtung von Figur 4;
- Fig. 6: eine Schnittdarstellung der Rakelvorrichtung von Figur 5;
- Fig. 7: eine vergrößerte Detailansicht der Rakelvorrichtung von Figur 6;
- Fig. 8: eine Vorderansicht auf die Rakelvorrichtung von Figur 5 ohne Rakelwerkzeug;
- Fig. 9: eine Seitenansicht auf die Rakelvorrichtung von Figur 8;
- Fig. 10: eine Schnittdarstellung entlang der Linie E-E aus Figur 9;
- Fig. 11: eine vergrößerte und teilweise Schnittdarstellung der Rakelvorrichtung von Figur 10;
- Fig. 12: eine Schnittdarstellung entlang der Linie B-B aus Figur 9;
- Fig. 13: eine Schnittdarstellung entlang der Linie C-C aus Figur 9;
- Fig. 14: eine Schnittdarstellung entlang der Linie D-D aus Figur 9;
- Fig. 15: eine Vorderansicht auf eine Rakelbewegungseinrichtung von Figur 4;
- Fig. 16: eine Schnittdarstellung der Rakelbewegungseinrichtung von Figur 15;
- Fig. 17: eine Draufsicht auf die Rakelbewegungseinrichtung von Figur 15;
- Fig. 18: eine Schnittdarstellung entlang der Linie A-A aus Figur 15; und
- Fig. 19: eine perspektivische Darstellung eines Rakelwerkzeugs der Rakelvorrichtung von Figur 18.

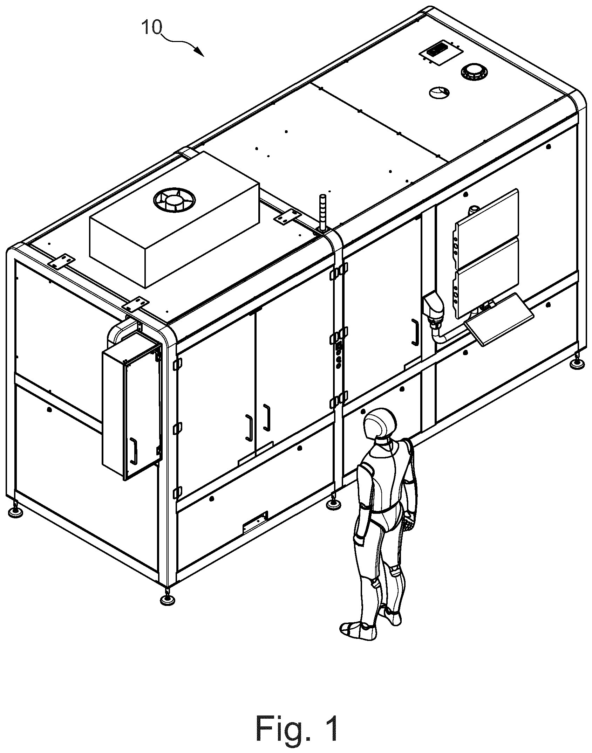

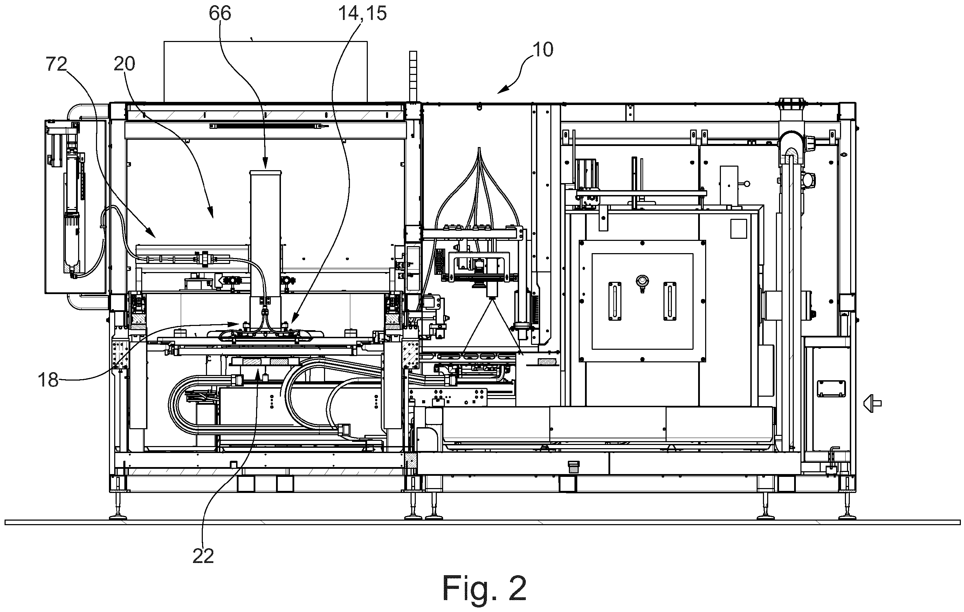

Figur 1 zeigt eine perspektivische Darstellung auf eine Vorrichtung 10 zur Herstellung von dreidimensionalen Siebdruckwerkstücken, wobei in Figur 2 eine Seitenansicht auf die Vorrichtung 10 aus Figur 1 in einem geöffneten Zustand, insbesondere ohne Einhausung, dargestellt ist.

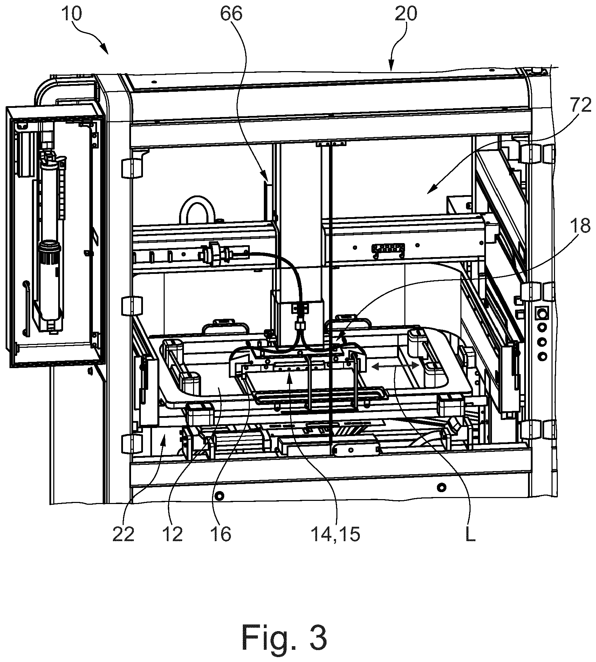

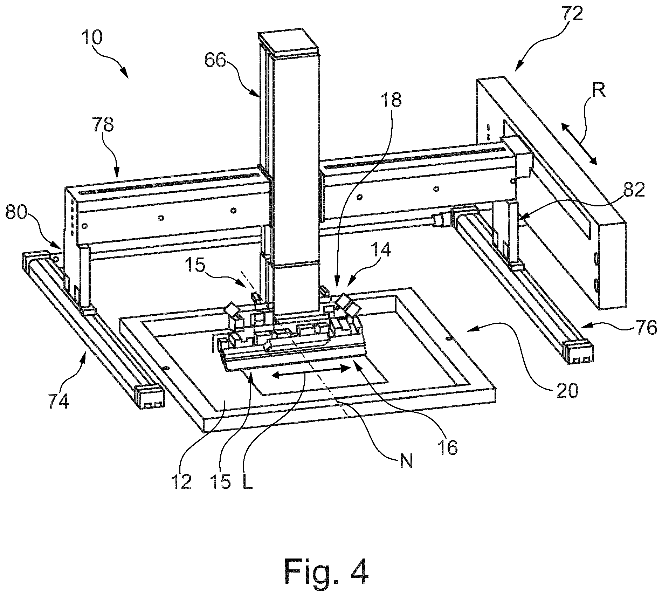

In Figur 3 ist eine perspektivische Darstellung einer Druckeinrichtung 20 der Vorrichtung 10 aus Figur 1 gezeigt, wobei Figur 4 eine perspektivische Darstellung auf eine Rakelbewegungseinrichtung 72 der Vorrichtung 10 aus Figur 1 zeigt.

Die genannten Figuren 1 bis 4 zeigen eine Vorrichtung 10 zur Herstellung von dreidimensionalen Siebdruckwerkstücken, insbesondere eine 3D-Siebdruckanlage. Bei der Vorrichtung 10 kann es sich in bevorzugter Weise um eine 3D-Siebdruckanlage handeln. Insbesondere kann es sich bei der Vorrichtung 10 um eine 3D-Siebdruckanlage für die Herstellung von Arzneimitteln handeln.

Dabei kann die Vorrichtung 10 mit einem Drucksieb 12 und mit einer Rakelvorrichtung 14 zum Fluten des Drucksiebs 12 mit einer Druckmasse und/oder zum Pressen von Druckmasse durch das Drucksieb 12 ausgestattet sein, wie näher in den Figuren 3 und 4 dargestellt ist.

Die Rakelvorrichtung 14 weist ferner ein Rakelwerkzeug 16 und eine Sensoreinrichtung 18 zur Erfassung von auf das Rakelwerkzeug 16 wirkenden Rakelkräften auf. Hierbei kann die Sensoreinrichtung 18 zur Erfassung einer Rakelkraftabweichung entlang einer Längserstreckung L des Rakelwerkzeugs 16 ausgebildet. Die Längserstreckung L des Rakelwerkzeugs 16 ist unter anderem näher in den Figu-ren 3 und 4 eingezeichnet. Durch eine solche Sensoreinrichtung 18 kann beispielsweise eine gleichmäßige Krafteinwirkung der Rakelvorrichtung entlang der Längserstreckung L des Rakelwerkzeugs 16 gewährleistet werden.

Mithin können also die auf das Rakelwerkzeug 16 wirkenden Rakelkräfte entlang der Längserstreckung L des Rakelwerkzeugs 16 erfasst werden. Eben dadurch kann eine gleichmäßige oder auch gezielt ungleichmäßige Krafteinwirkung vom Rakelwerkzeug 16 auf das Drucksieb 12 gewährleistet werden. Ferner ist auch die sichere und überwachbare, räumliche Ausrichtung des Rakelwerkzeugs 16 realisiert werden.

Wie in den Figuren 2 und 3 ferner dargestellt ist, kann die Vorrichtung 10 zudem eine zumindest das Drucksieb 12 und/oder die Rakelvorrichtung 14 aufweisende Druckeinrichtung 20 für die schichtweise Erzeugung zumindest eines Siebdruckwerkstücks in mehreren Siebdruckvorgängen und/oder für den Schichtauftrag auf ein nicht näher dargestelltes Werkstück in zumindest einem Siebdruckvorgang aufweisen. Die Druckeinrichtung 20 kann beispielsweise angrenzend zu weiteren Funktionsbereichen der Vorrichtung 10 angeordnet sein, beispielsweise zu einem Inspektionsbereich für Siebdruckwerkstücke und/oder zu einem Trocknungsbereich für Siebdruckwerkstücke. Die Abmessungen der Druckeinrichtung 20 können im Wesentlichen durch das Drucksieb 16 und/oder durch eine Rahmenhalterung und/oder Aufhängung für das Drucksieb 16 bedingt und/oder durch einen Drucktisch 22 begrenzt sein.

Die Druckeinrichtung 20 kann zumindest einen Drucktisch 22 für die Positionierung eines Werkstückträgers und/oder eines Werkstücks unterhalb des Drucksiebs 12 und/oder unterhalb der Rakelvorrichtung 14 aufweisen, wie näher in den Figuren 2, 3 und 4 gezeigt ist.

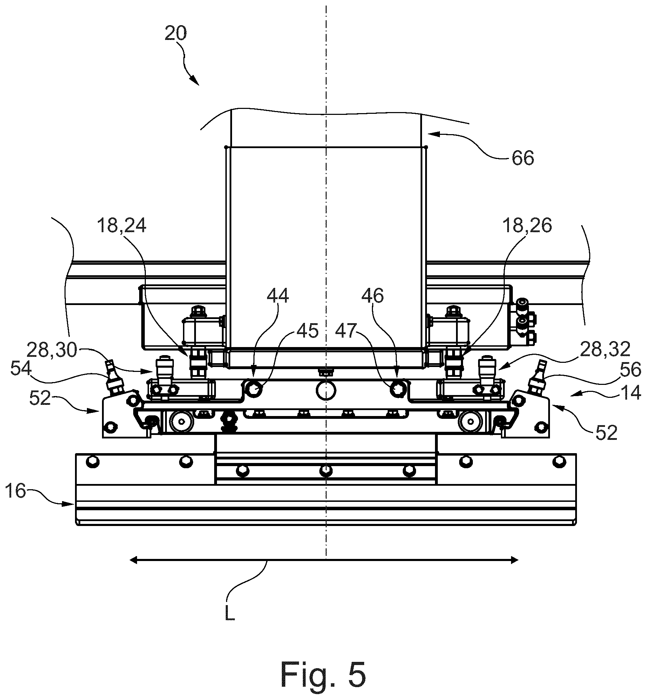

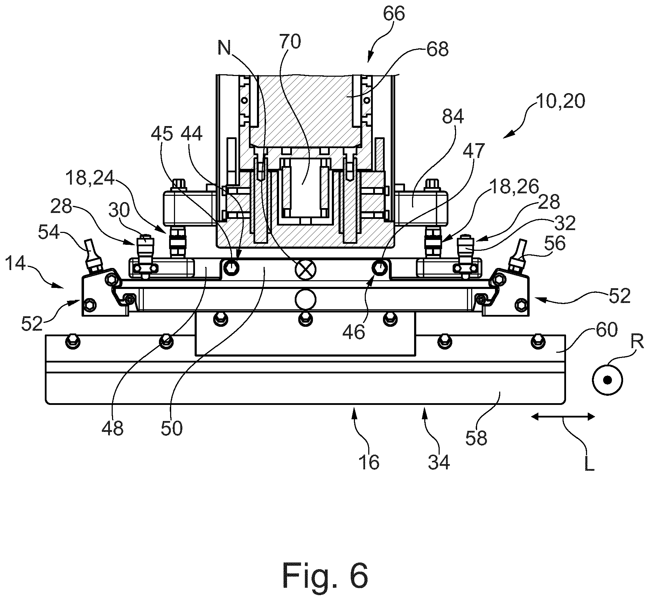

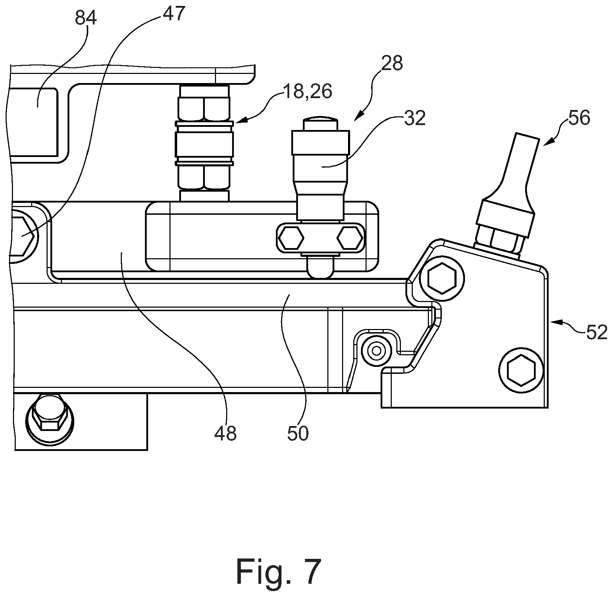

Figur 5 zeigt eine teilweise Vorderansicht auf die Rakelvorrichtung 14 gemäß dem Ausführungsbeispiel in den Figuren 1 bis 4, wobei Figur 6 eine Schnittdarstellung von Figur 5 zeigt. Schließlich ist in Figur 7 eine vergrößerte Detailansicht auf einen Teilbereich von Figur 6 dargestellt.

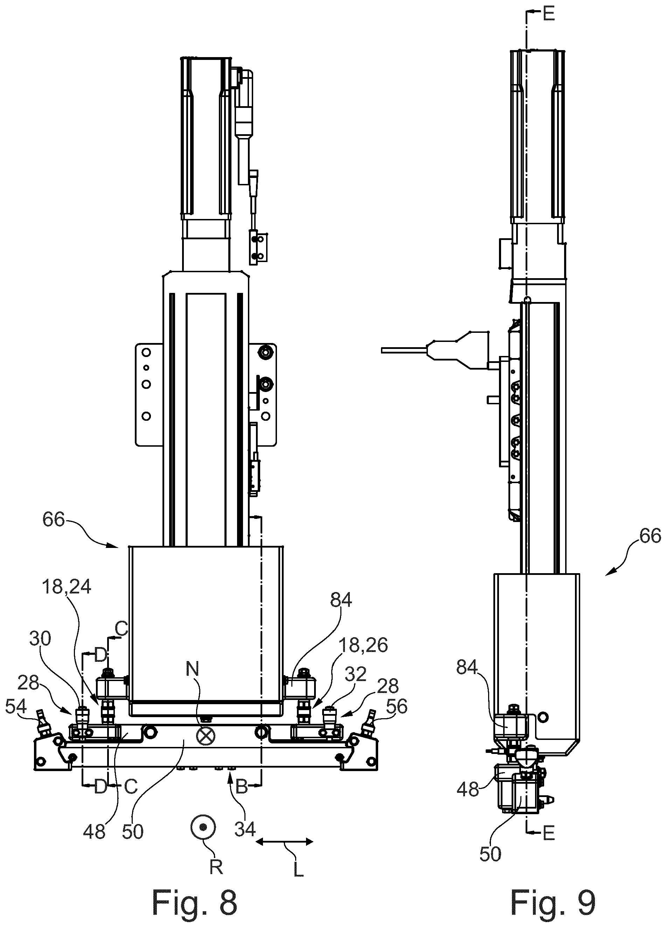

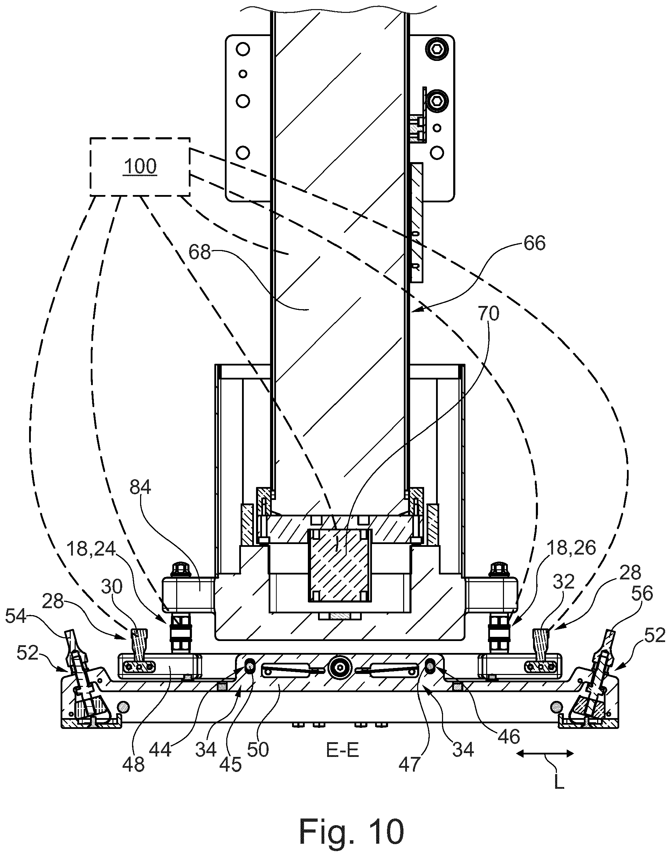

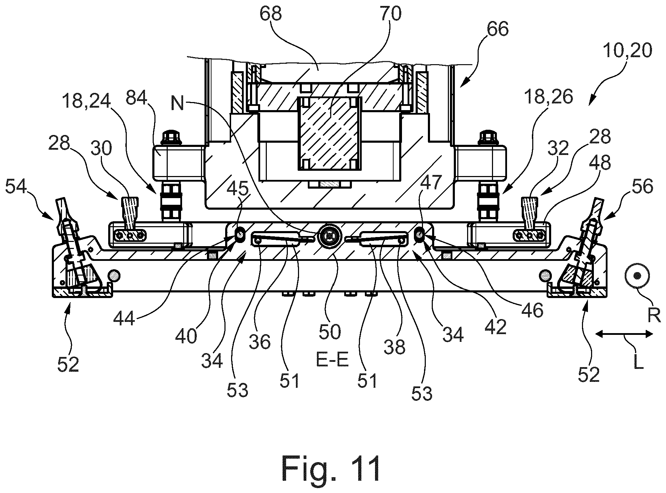

In Figur 8 ist eine Vorderansicht auf die Rakelvorrichtung 14 von Figur 5 gezeigt, wobei Figur 9 eine Seitenansicht auf die Rakelvorrichtung 14 von Figur 8 zeigt. Ferner ist Figur 10 eine Schnittdarstellung entlang der Linie E-E aus Figur 9 und in Figur 11 eine vergrößerte Ansicht auf einen Teilbereich von Figur 10 dargestellt.

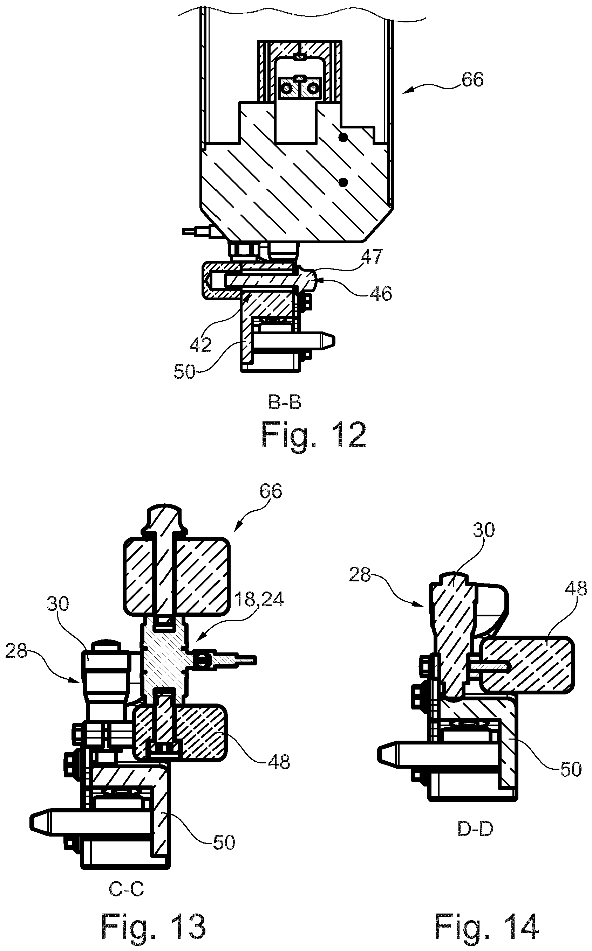

Außerdem zeigt Figur 12 eine Schnittdarstellung entlang der Linie B-B aus Figur 9, Figur 13 eine Schnittdarstellung entlang der Linie C-C aus Figur 9 und Figur 14 eine Schnittdarstellung entlang der Linie D-D aus Figur 9.

In den Figuren 5 bis 11 ist die Rakelvorrichtung 14 der Vorrichtung 10 zur Herstellung von dreidimensionalen Siebdruckwerkstücken gezeigt, wie bereits eingangs geschildert. Genannten Figuren ist ferner zu entnehmen, dass die Sensoreinrichtung 18 zumindest zwei Kraftmesssensoren 24, 26 aufweisen kann, wobei es sich um zwei parallel geschaltete Kraftmesssensoren 24, 26 handeln kann.

Die Kraftmesssensoren 24, 26 sind entlang einer Längserstreckung L des Rakelwerkzeugs 16 zueinander beabstandet angeordnet. Dadurch kann erfasst werden, ob die Krafteinwirkung des Rakelwerkzeugs 16 auf das Drucksieb 12 und/oder auf den Drucktisch 22 gleichmäßig ist oder nicht.

Hierdurch kann eine Schichtdicke beziehungsweise ein Schichtauftrag auf ein hier nicht näher dargestelltes Werkstück beziehungsweise auf einen hier nicht näher dargestellten Werkstückträger reproduzierbar und auch konstant über mehrere Druckvorgänge und/oder besonders gleichmäßig über das Drucklayout eines Drucksiebs gehalten werden. Zudem kann mithilfe der Kraftmesssensoren 25, 26 die räumliche Ausrichtung beziehungsweise Orientierung des Rakelwerkzeugs 16 durch Vergleich der durch die Kraftmesssensoren 25, 26 erfassten Kräfte überprüft werden.

Weiterhin können die Kraftmesssensoren 24, 26 zur gleichzeitigen Messung von absoluten Rakelkräften an voneinander entlang der Längserstreckung L des Rakelwerkzeugs 16 beabstandeten Messstellen ausgebildet sein. Dies erlaubt den direkten Vergleich der erfassten beziehungsweise gemessenen Rakelkräfte der Kraftmesssensoren 24, 26 miteinander und schafft mithin eine weiter verbesserte Informations- und Datengrundlage für nachfolgende und/oder laufende Druckvorgänge.

Alternativ oder zusätzlich können die Kraftmesssensoren 24, 26 zur Erfassung von relativen Rakelkraftabweichungen an entlang der Längserstreckung L des Rakelwerkzeugs 16 beabstandeten Messstellen ausgebildet sein. Erfasste Unterschiede beziehungsweise Abweichungen der Rakelkraft entlang der Längserstreckung L des Rakelwerkzeugs 16 können auf diese Weise vorteilhaft für die Steuerung und/oder Regelung nachfolgender und/oder laufender Druckvorgänge herangezogen werden. Somit kann sichergestellt werden, dass das Rakelwerkzeug 16 auf das jeweilige Drucksieb 12 mit einer Rakelkraft oder Rakelkräften innerhalb gewünschter Parameter aufliegt beziehungsweise dieses kontaktiert.

Des Weiteren kann den Figuren 5 bis 11 entnommen werden, dass in Draufsicht auf die Rakelvorrichtung 14 die Kraftmesssensoren 24, 26 oberhalb einer Aufstandslinie des Rakelwerkzeugs 16 angeordnet und/oder mit einer Aufstandslinie des Rakelwerkzeugs 16 ausgerichtet sein können. Somit können ungünstige Momente auf die Rakelvorrichtung 14 reduziert und gegebenenfalls das Messergebnis der Kraftmesssensoren 24, 26 verbessert werden.

Zudem ist in den Figuren 5 bis 11 dargestellt, dass die Rakelvorrichtung 14 eine Justiereinrichtung 28 zur Neigungsjustierung des Rakelwerkzeugs 16 aufweisen kann. Dabei kann die Justiereinrichtung 28 zur Neigungsjustierung einer entlang der Längserstreckung L des Rakelwerkzeugs 16 verlaufenden Werkzeuglängsachse relativ zum Drucksieb 12 und/oder relativ zu einem Drucktisch 22 und/oder relativ zu einer Horizontalebene ausgebildet sein.

Es ist schließlich möglich, die Justiereinrichtung 28 zur Neigungsjustierung einer Rakelunterkante relativ zum Drucksieb 12 und/oder relativ zum Drucktisch 22 und/oder relativ zu einer Horizontalebene auszubilden.

Bei einer Justierung der Neigung des Rakelwerkzeugs 16 und/einer der jeweiligen Rakelunterkante kann die Kraftverteilung, mit welcher das Rakelwerkzeug 16 beziehungsweise die Rakelunterkante entlang seiner Aufstandslinie und entlang der Längserstreckung L auf das Drucksieb 12 oder auf den Drucktisch 22 einwirkt, geeignet justiert werden. Somit kann also mithilfe der Justiereinrichtung 28 eine gleichmäßige oder auch gewollt ungleichmäßige Kraftverteilung der Rakelvorrichtung auf das Drucksieb 12 und/oder auf den Drucktisch 22 erreicht werden.

Außerdem zeigen die Figuren 5 bis 11, dass die Justiereinrichtung 28 zur Neigungsjustierung des Rakelwerkzeugs 16 um eine Neigungsachse N ausgebildet sein kann. Die Neigungsachse N erstreckt sich entlang einer Rakelbewegungsrichtung R und/oder unter einem Winkel zu einer durch eine Rakelunterkante verlaufende Vertikalebene. Vorgestellte Ausbildung erlaubt es, zwischen dem Rakelwerkzeug 16 und dem Drucksieb 12 und/oder dem Drucktisch 22 entlang der gesamten Länge des Rakelwerkzeugs 16 eine genaue Ausrichtung vorzunehmen. Auf diese Weise ist auch die Rakelkraft, mit der das Rakelwerkzeug 16 auf das jeweilige Drucksieb 12 wirkt, insbesondere an unterschiedlichen Stellen des Drucklayouts des Drucksiebs 12 wirkt, gezielt einstellbar.

Des Weiteren kann die Justiereinrichtung 28 zur translatorischen Justierbewegung des Rakelwerkzeugs 16 entlang einer Vertikalrichtung ausgebildet sein. Für die Neigungsjustierung kann die Justiereinrichtung 28 zwei Justierschrauben 30, 32 zur Neigungsjustierung aufweisen. Jede der Justierschrauben 30, 32 oder zumindest eine der Justierschrauben 30, 32 kann als Mikrometerschraube ausgebildet sein. Dies ermöglicht eine feine und exakte Einstellung der Neigung des Rakelwerkzeugs 16 sowie eine exakte Aufrechterhaltung der eingestellten Neigung des Rakelwerkzeugs 16.

Insbesondere in den Figuren 10 und 11 ist zu erkennen, dass die Rakelvorrichtung 14 eine Rakellagerung 34 aufweisen kann. Diese erlaubt zusammen mit der Justiereinrichtung 28 eine Neigungsjustierung des Rakelwerkzeugs 16 um eine Neigungsachse N und/oder eine translatorische Justierbewegung des Rakelwerkzeugs 16, insbesondere entlang einer Vertikalebene.

Dabei kann die Rakellagerung 34 mehrere Federlagerungen 36, 38 aufweisen, insbesondere mehrere Blattfederlagerungen. Jede Federlagerung 36, 38 übt jeweils eine gegen die entsprechend zugeordnete Justierschraube 30, 32 wirkende Federkraft aus. Somit wird über die Rakellagerung 34 das Rakelwerkzeug 16 gegen die Justierschrauben 30, 32 gedrückt, wodurch die räumliche Ausrichtung des Rakelwerkzeugs 16 definiert gehalten wird.

Des Weiteren zeigt Figur 11, dass die Rakellagerung 34 zwei Langlochführungen 40, 42 aufweisen kann, die bevorzugt spielbehaftet sind. Insbesondere können die nachfolgend noch näher beschriebenen zwei Fixiereinrichtungen 44, 46 spielbehaftet in den Langlochführungen 40, 42 geführt sein. Das Rakelwerkzeug 16 kann relativ zur Justiereinrichtung 28 in vorgegebenen oder begrenzten Bewegungsbahnen beziehungsweise in einem vorgegebenen Bereich, nämlich über die Länge der jeweiligen Langlochführung 40, 42, bewegt werden.

Figuren 10 bis 12 zeigen, dass die Rakelvorrichtung 14 zwei Fixiereinrichtungen 44, 46 zur Fixierung einer durch die Justiereinrichtung 28 justierten Neigungslage des Rakelwerkzeugs 16 und/oder zur Fixierung einer durch die Justiereinrichtung 28 justierten translatorischen Justierlage aufweisen kann. Dabei kann die jeweilige Fixiereinrichtung 44, 46 eine Fixierschraube 45, 47 aufweisen. Jede Fixierschraube 45, 47 kann in einer Langlochführung 40, 42 der Rakellagerung 34 geführt sein, insbesondere spielbehaftet geführt sein.

Die Neigungslage des Rakelwerkzeugs 16, die mithilfe der Justiereinrichtung 28 vorab eingestellt beziehungsweise justiert werden kann, lässt sich mittels der Fixiereinrichtungen 44, 46 beziehungsweise mittels der Fixierschraube 45, 47 fixiert werden. Ferner ist es den Fixiereinrichtungen 44, 46 beziehungsweise den Fixierschrauben 44, 46 möglich, nachdem beispielsweise über die Justiereinrichtung 28 die Neigungslage oder die räumliche Ausrichtung des Rakelwerkzeugs 16 relativ zum Drucksieb 12 oder relativ zum Drucktisch 22 eingestellt wurde, diese relative Position zuverlässig zu fixieren.

Ferner kann den Figuren 10 bis 12 entnommen werden, dass die Rakelvorrichtung 14 eine Justierhalterung 48 und eine mit der Justierhalterung 48 gekoppelte Tragstruktur 50 aufweisen kann. Dabei kann an der Tragstruktur 50 ein Rakelwerkzeug 16 angeordnet werden, wie beispielsweise in Figuren 5 und 6 gezeigt ist und nachfolgend noch beschrieben wird.

Die Langlochführungen 40, 42 können ferner an der Tragstruktur vorgesehen sein. Die Fixierschrauben 45, 47 können durch die Langlochführungen 40, 42 in der Tragstruktur 50 hindurchgeführt und in Gewindebohrungen der Justierhalterung 48 eingeschraubt und fixiert oder durch Einschrauben in die Justierhalterung 48 fixierbar sein.

Die Langlochführungen 40, 42 können mithin eine Bewegung des an der Tragstruktur 50 befestigten Rakelwerkzeugs 16 relativ zur Justierhalterung 48 ermöglichen, sodass im Ergebnis die relative Position zwischen dem Rakelwerkzeug 16 und dem Drucksieb 12 oder dem jeweiligen Drucktisch 22 eingestellt werden kann. Dabei kann die Relativposition und/oder Relativausrichtung zwischen der Justierhalterung 48 und der Tragstruktur 50 über die Justiereinrichtung 28 verändert werden. Insbesondere kann durch Nutzung der Justiereinrichtung 28 die Neigung der Tragstruktur 50 und damit auch des Rakelwerkzeugs 16 um die Neigungsachse N relativ zur Justierhalterung 48 geändert oder eingestellt werden.

Auch zeigen die Figuren 10 bis 12, dass die Rakellagerung 34 zwischen der Justierhalterung 48 und der Tragstruktur 50 ausgebildet und dass die Fixiereinrichtungen 44, 46 beziehungsweise die Fixierschrauben 45, 47 zur Fixierung der Relativposition und/oder Relativausrichtung zwischen der Justierhalterung 48 und der Tragstruktur 50 ausgebildet sein können.

Die Justiereinrichtung 28 beziehungsweise die Justierschrauben 30, 32 der Justiereinrichtung 28 können an der Justierhalterung 48 fest angeordnet sein und gleichzeitig in Wirkkontakt mit der Tragstruktur 50 stehen und/oder in Wirkkontakt mit der Tragstruktur 50 bringbar sein. Zudem kann die Justiereinrichtung 28 beziehungsweise können die Justierschrauben 30, 32 Justiereinrichtung 28 zur Erzeugung einer Relativbewegung zwischen der Justierhalterung 48 und der Tragstruktur 50 ausgebildet sein. Somit kann das Rakelwerkzeug 16 in geeigneter Weise in seiner räumlichen Ausrichtung eingestellt beziehungsweise positioniert werden.

Dabei können für eine Justierung über die Justiereinrichtung 28 zunächst die Fixierschrauben 45, 47 gelöst werden, sodass zwischen der Justierhalterung 48 und der Tragstruktur 50 eine Relativbewegung freigegeben wird. Anschließend kann über die Justierschrauben 30, 32 der Justiereinrichtung 28 die jeweils gewünschte Justierung beziehungsweise räumliche Ausrichtung vorgenommen werden, bevor die eingestellte Relativposition zwischen der Justierhalterung 48 und der Tragstruktur 50 wieder durch die Fixierschrauben 45, 47 fixiert wird.

Ferner zeigen die Figuren 10 bis 12, dass die Federlagerungen 36, 38 beziehungsweise die Blattfederlagerungen an der Tragstruktur 50 eingespannt sein können und/oder federelastisch an der Justierhalterung 48 und/oder an der Tragstruktur 50 abgestützt sein können.

Wie in Figuren 10 und 11 näher dargestellt ist, können die Federlagerungen 36, 38 beziehungsweise die Blattfederlagerungen jeweils innerhalb einer Ausnehmung 51 der Tragstruktur 50 angeordnet sein und/oder entlang der Ausnehmung 51 der Tragstruktur 50 verlaufend angeordnet sein. Dabei können die Federlagerungen 36, 38 beziehungsweise die Blattfederlagerungen jeweils an einem Ende der jeweiligen Ausnehmung 51 an der Tragstruktur 50 eingespannt sein.

Ferner können die Federlagerungen 36, 38 beziehungsweise die Blattfederlagerungen auch an Lagerstiften 53 abgestützt sein, die mit der Justierhalterung 48 in Verbindung stehen und/oder relativ zur Justierhalterung 48 vorragen. Insbesondere können die Lagerstifte 53 mit der Justierhalterung 48 in Verbindung stehen und bis in die Ausnehmung 51 der Tragstruktur vorragen, sodass eine Ab-stützung Federlagerungen 36, 38 beziehungsweise die Blattfederlagerungen auf den Lagerstiften 53 ermöglicht wird.

Jede der Federlagerungen 36, 38 kann eine Vorspannung der Tragstruktur 50 gegen die Justierhalterung 48 und/oder gegen die an der Justierhalterung 48 angeordnete Justiereinrichtung 28 erzeugen. Diese Vorspannung kann eine räumliche Ausrichtung des Rakelwerkzeugs 16, das an der Tragstruktur 50 angeordnet ist, vorgeben, nämlich auch bei gelösten Fixierschrauben 45, 47. Justierarbeiten können hierdurch nennenswert vereinfacht werden.

Des Weiteren ist in den Figuren 10 bis 12 dargestellt, dass die Rakelvorrichtung 14 ein Befestigungssystem 52 zur Befestigung und/oder zum Einspannen des Rakelwerkzeugs 16 aufweisen kann. Dabei ist das Befestigungssystem 52 bevorzugt als Spannsystem und/oder Klemmsystem und/oder als Schnellwechselklemm- und/oder als Schnellwechselspannsystem ausgebildet ist. Vorgenannte Systeme dienen dem unkomplizierten, einfachen und/oder schnellen Wechsel sowie einer korrekten Anordnung des Rakelwerkzeugs 16.

Gemäß den vorgenannten Figuren kann das Befestigungssystem 52 werkzeugfrei beziehungsweise durch mehrere Knebelschrauben 54, 56 betätigbar sein, insbesondere zum Einspannen und/oder zum Einklemmen und/oder zum Lösen eines Rakelwerkzeugs 16. Somit kann das jeweilige Rakelwerkzeug 16 schnell und einfach von einem Nutzer per manueller Betätigung ausgetauscht werden, womit die Rüstzeiten für den Austausch eines Rakelwerkzeugs verringert werden können.

Das Befestigungssystem 52 kann an der Tragstruktur 50 angeordnet sein und/oder kann zumindest zum Teil durch die Tragstruktur 50 gebildet sein. Dabei kann die Tragstruktur 50 beispielsweise ein Innengewinde aufweisen, das in das Außengewinde einer Knebelschraube 54, 56 eingreifen kann.

Wie den Figuren 2 bis 12 ferner zu entnehmen ist, kann die Rakelvorrichtung 14 eine Stelleinrichtung 66 zur Bewegung des Rakelwerkzeugs 16 zwischen einer angehobenen Ausgangsstellung und zumindest einer abgesenkten Betriebsstellung aufweisen. Dabei kann die Stelleinrichtung 66 eine Mehrzahl von Linearantrieben 68, 70 aufweisen, wie beispielsweise in Figuren 10 und 11 gezeigt ist. So kann die Stelleinrichtung 66 eine Mehrzahl in Reihe geschalteter Linearantriebe 68, 70 aufweisen. Somit ist also mittels der Stelleinrichtung 66 die Rakelvorrichtung 14 beispielsweise hin oder weg vom Drucktisch 22 und/oder hin oder weg vom Drucksieb 12 verfahrbar.

Ein Linearantrieb 68 der Stelleinrichtung 66 kann als elektrischer oder elektromechanischer Linearantrieb und/oder als elektrischer Spindelantrieb und/oder als Elektrozylinder und/oder als Linearaktor ausgebildet sein. Ferner kann ein Linearantrieb 70 der Stelleinrichtung 66 als pneumatischer Linearantrieb oder Linearzylinder ausgebildet sein. Somit ist also die Stelleinrichtung 66 in der Lage, eine Linearbewegung über den Linearantrieb 70 mithilfe von druckbeaufschlagtem Gas auszuführen. Der pneumatische Linearantrieb 70 kann gemäß Figuren 10 und 11 im Kraftfluss zwischen dem elektrischen oder elektromechanischen Linearantrieb 68 und dem Rakelwerkzeug 16 angeordnet sein, wie beispielsweise in den Figu-ren 6 und 10 gezeigt. Somit kann der Hub der Stelleinrichtung 66 zum Beispiel schnell variiert beziehungsweise vergrößert oder verkleinert werden.

Des Weiteren zeigen die Figuren 5 bis 7, dass die Sensoreinrichtung 18 im Kraftfluss zwischen der Stelleinrichtung 66 und dem Rakelwerkzeug 16 angeordnet sein kann. Insbesondere kann die Sensoreinrichtung 18 im Kraftfluss zwischen der Stelleinrichtung 66 und der Rakellagerung 34 und/oder im Kraftfluss zwischen der Stelleinrichtung 66 und der Justiereinrichtung 28 und/oder im Kraftfluss zwischen der Stelleinrichtung 66 und der Justierhalterung 48 angeordnet sein.

Den Figuren 6, 7, 8 und 10 ist ferner zu entnehmen, dass die Sensoreinrichtung 18, insbesondere die Kraftmesssensoren 24, 26 der Sensoreinrichtung 18, fest zwischen der Justierhalterung 48 und einer mit der Stelleinrichtung 66 verbundenen Sensorhalterung 84 angeordnet sein können.

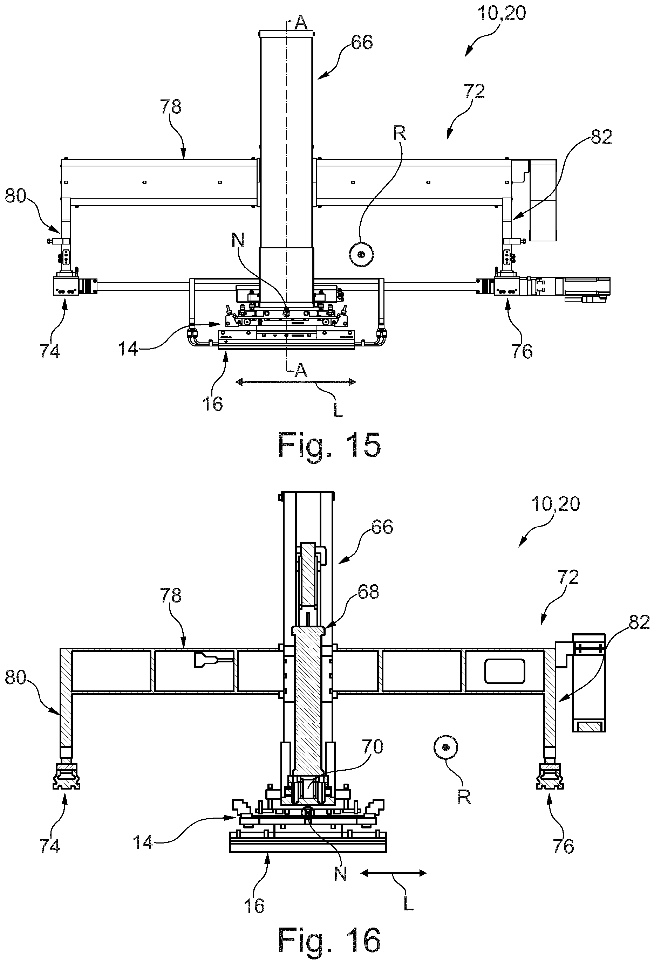

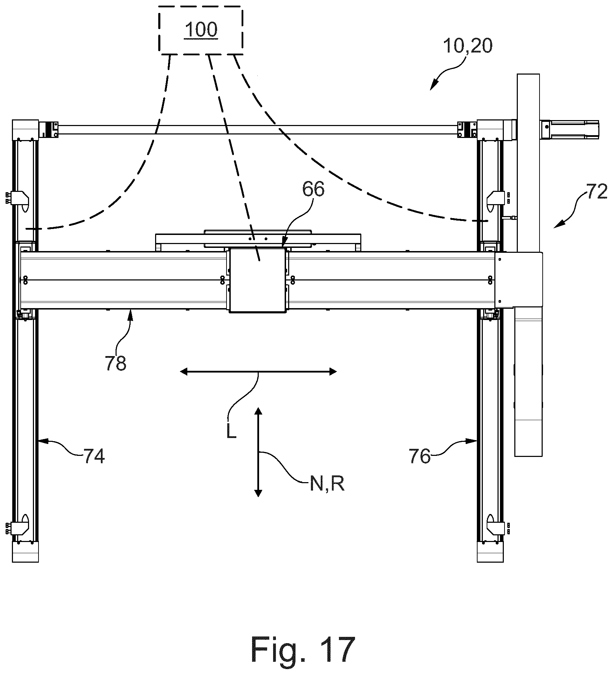

Die Figuren 15 bis 17 zeigen weiterhin, dass die Vorrichtung 10 eine Rakelbewegungseinrichtung 72 zur Bewegung der Rakelvorrichtung 14 und/oder des Rakelwerkzeugs 16 entlang einer in Horizontalrichtung verlaufenden Rakelbewegungsrichtung R aufweist. Dabei zeigt Figur 15 eine Vorderansicht auf eine Rakelbewegungseinrichtung 72 der Vorrichtung 10 aus Figur 1, wobei Figur 16 eine Schnittdarstellung von Figur 15 und Figur 17 eine Draufsicht auf die Rakelbewegungseinrichtung 72 aus Figur 15 zeigt.

Somit ist es möglich, das Rakelwerkzeug 16 beziehungsweise die Rakelvorrichtung 14 mittels der Rakelbewegungseinrichtung 72 entlang einer in Horizontalrichtung verlaufenden Rakelbewegungsrichtung R zu verfahren.

Die Rakelbewegungseinrichtung 72 kann mindestens einen Linearantrieb oder mehrere Linearantriebe zur Bewegung der Rakelvorrichtung 14 und/oder des Rakelwerkzeugs 16 aufweisen. Die Rakelvorrichtung 14 und/oder das Rakelwerkzeug 16 kann mithin linear in einer Richtung hin und her bewegbar sein.

Des Weiteren ist in den Figuren 15 bis 17 dargestellt, dass die Rakelbewegungseinrichtung 72 ein Portalsystem mit Linearführungen 74, 76 und einem Querträger 78 sowie Stützeinrichtungen 80, 82 zur Abstützung des Querträgers 78 auf den Linearführungen 74, 76 aufweisen kann. Dabei verlaufen die Linearführungen 74, 76 entlang der Rakelbewegungsrichtung R, wobei der Querträger 78 in einer Draufsicht zwischen den Linearführungen 74, 76 und quer zu den Linearführungen 74, 76 verlaufen kann. Somit ist es also möglich, das Rakelwerkzeug 16 beziehungsweise die Rakelvorrichtung 14 schwebend oberhalb des Drucktisches 22 und/oder schwebend oberhalb des Drucksiebs 12 zu halten und linear zu verfahren. Somit kann eine sichere Abfolge aufeinanderfolgender Druckdurchgänge mit der Vorrichtung 10 zur Herstellung von dreidimensionalen Siebdruckwerkstücken gewährleistet werden.

Zudem geht aus den Figuren 15 bis 17 hervor, dass die Rakelvorrichtung 14 und die Stelleinrichtung 66 der Rakelvorrichtung 14 an dem Querträger 78 des Portalsystems befestigt sein können. Somit bedingt also eine Bewegung des Querträgers 78 eine Bewegung der Rakelvorrichtung 14 beziehungsweise des Rakelwerkzeugs 16. Außerdem ist die Rakelvorrichtung 14 entlang einer Längserstreckung L des Querträgers 78 unbeweglich angeordnet. Somit können ungewollte Bewegungen entlang der Querträgers 78 vermieden werden und es ergibt sich ein insgesamt robuster Aufbau.

Die Rakelvorrichtung 14 kann ferner für den Druck in einem Positionsmodus ausgebildet sein, in dem ein pneumatischer Linearantrieb 70 der Stelleinrichtung 66 eingefahren und ein elektrischer oder elektromechanischer Linearantrieb 68 der Stelleinrichtung 66 zumindest teilweise ausgefahren oder abgesenkt sein kann. In einem Positionsmodus kann der pneumatische Linearantrieb 70 mithin deaktiviert sein, hingegen der elektrische oder elektromechanische Linearantrieb 68 in Betrieb sein. Mit dem elektrischen oder elektromechanischen Linearantrieb 68 kann eine bestimmte Position mit hoher Genauigkeit angefahren werden.

Ferner kann die Rakelvorrichtung 14 für den Druck in einem Kraftmodus ausgebildet sein, in dem ein pneumatischer Linearantrieb 70 der Stelleinrichtung 66 teilweise oder vollständig ausgefahren und/oder abgesenkt sein kann. Zudem kann in einem Kraftmodus ein elektrischer oder elektromechanischer Linearantrieb 68 der Stelleinrichtung 66 eingefahren oder nur zumindest teilweise ausgefahren oder abgesenkt sein. Ebenso kann auch in einem Kraftmodus ein elektrischer oder elektromechanischer Linearantrieb 68 der Stelleinrichtung 66 vollständig ausgefahren sein. Dabei kann in einem Kraftmodus der pneumatische Linearantrieb 70 der Stelleinrichtung 66 als Gas-Feder betrieben werden. Im Kraftmodus ist es möglich, dass die Stellung des Rakelwerkezugs 16 kraftbasiert gesteuert und/oder geregelt wird. Sprunghafte anstiege von Rakelkräften lassen sich in einem Kraftmodus vorteilhaft ausgleichen. Der pneumatische Linearantrieb 70 der Stelleinrichtung 66 kann für den Betrieb als Gas-Feder ein hier nicht näher dargestelltes Proportionalventil aufweisen, das die Durchflussmenge des jeweiligen Gases regeln oder steuern kann.

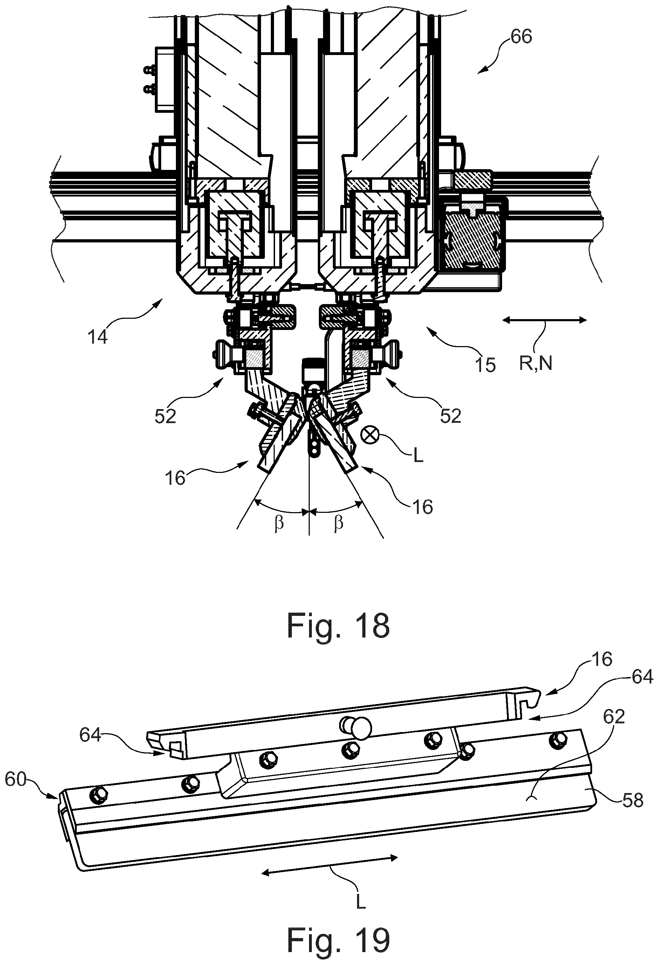

Figur 18 zeigt eine Schnittansicht entlang der Linie A-A aus Figur 15. In Figur 19 ist ferner eine perspektivische Darstellung eines Rakelwerkzeugs 16 der Rakelvorrichtung 14 aus Figur 18 gezeigt.

Mit Blick auf die Figuren 18 und 19 ist zu erkennen, dass das Rakelwerkzeug 16 ein Rakelblatt 58 aufweisen kann. Dabei kann das Rakelblatt 58 des Rakelwerkzeugs 16 zumindest abschnittsweise aus einem Kunststoffmaterial und/oder aus einem Blechmaterial gefertigt sein. Des Weiteren kann das Rakelwerkzeug 16 eine Rakelaufnahme 60 aufweisen. Zudem ist das Rakelblatt 58 an der Rakelaufnahme 60 des Rakelwerkzeugs 16 montiert und in oder an der Rakelaufnahme 60 eingespannt. Somit ist also ein Rakelblatt 58 des Rakelwerkzeugs 16 an der Rakelaufnahme 60 fest anordenbar.

Ferner zeigt Figuren 19, dass das Rakelwerkzeug 16 einen an der Rakelaufnahme 60 ausgebildeten und/oder mit der Rakelaufnahme 60 verbundenen Kopplungsabschnitt 64 zur Verbindung mit dem Befestigungssystem 52 und/oder zum Einspannen oder Einklemmen in dem Befestigungssystem 52 aufweisen kann. Dabei kann das Rakelwerkzeug 16 als Wechselwerkzeug ausgebildet sein. Durch Austausch des Rakelwerkzeugs 16 kann mithin der Rakelwinkel β zwischen einer Rakelseitenfläche 62 und einer Vertikalebene - wie in Figur 18 eingezeichnet - veränderbar sein. Hierüber kann mithin auch ein Rakelwinkel zwischen einer Rakelseitenfläche 62 und einer Horizontalebene und/oder dem Drucksieb 12 und/oder einem Drucktisch 22 veränderbar sein.

Gemäß Figur 18 kann das Rakelblatt 58 zwei Rakelseitenflächen 62 aufweisen, die zwischen den Seitenrändern des Rakelblatts 58 verlaufen, wobei durch die Rakelaufnahme 60 ein zwischen einer Rakelseitenfläche 62 und einer Vertikalebene ausgebildeter Rakelwinkel β und/oder ein zwischen einer Rakelseitenfläche 62 und einer Horizontalebene und/oder zwischen einer Rakelseitenfläche 62 und dem Drucksieb 12 und/oder zwischen einer Rakelseitenfläche 62 und dem Drucktisch 22 ausgebildeter Rakelwinkel vorgegeben oder festgelegt ist. Somit kann durch die Ausbildung des Rakelblatts 58 beziehungsweise durch die Ausbildung der Rakelaufnahme 60 ein etwaiger Rakelwinkel β dahingehend gewählt oder eingerichtet sein, dass durch das jeweilige Rakelblatt 58 das Drucksieb 12 in geeigneter Weise geflutet und/oder durch das Drucksieb 12 hindurchgepresst wird.

Schließlich zeigt Figur 18, dass die Vorrichtung 10 zwei Rakelvorrichtungen 14, 15 aufweisen kann. Dabei kann eine Rakelvorrichtung 14 als Flutrakelvorrichtung und eine weitere Rakelvorrichtung 15 als Druckrakelvorrichtung ausgebildet sein. Ebenso können beide Rakelvorrichtungen 14, 15 als Druckrakelvorrichtungen ausgebildet sein und/oder als Druckrakelvorrichtungen betrieben werden. Ferner können beide Rakelvorrichtungen 14, 15 an der Rakelbewegungseinrichtung 72, insbesondere an dem Querträger 78 der Rakelbewegungseinrichtung 72, angeordnet sein. So können die Rakelvorrichtung 14 oder die Rakelvorrichtungen 14, 15 und die Rakelbewegungseinrichtung 72 ein Rakelsystem bilden. Jeder der Rakelvorrichtungen 14, 15 kann entsprechend der voranstehenden Beschreibung beziehungsweise mit den voranstehenden Einzelheiten ausgebildet sein.

Nachfolgend wird die Betriebsweise einer vorstehend beschriebenen Vorrichtung 10 zur Herstellung von dreidimensionalen Siebdruckwerkstücken, insbesondere einer 3D-Siebdruckanlage, näher erläutert.

Wie beispielhaft in Figur 10 dargestellt ist, kann die Vorrichtung 10 eine Steuereinrichtung 100 zur Steuerung und/oder Regelung der Stelleinrichtung 66 und/oder der Rakelbewegungsvorrichtung 72 und/oder der Justiereinrichtung 28 und/oder zur Verarbeitung und/oder zur Auswertung und/oder zur Speicherung und/oder zum Vergleich von Sensordaten der Sensoreinrichtung 18 aufweisen. Somit ist die Steuereinrichtung 100 also in der Lage, die vorgenannten Einrichtungen und deren Daten zu steuern beziehungsweise zu regeln beziehungsweise zu verarbeiten.

Bei der Steuereinrichtung 100 kann es sich um eine sogenannte Maschinensteuerung und/oder Maschinenregelung handeln. Eine solche Steuereinrichtung 100 kann zudem mit einer hier nicht näher dargestellten Bedieneinheit für die Bedienung durch das Bedienpersonal ausgestattet und/oder mit einer solchen Bedieneinheit verbunden sein.

Die Steuereinrichtung 100 kann ferner dazu ausgebildet sein, bei Krafteinwirkung des Rakelwerkzeugs 16 unmittelbar auf einen Drucktisch 22 und/oder in einer siebfreien Anordnung über die Sensoreinrichtung 18 eine Rakelkraft zu erfassen und/oder auszuwerten.

Weiterhin kann die Steuereinrichtung 100 dazu ausgebildet sein, bei Krafteinwirkung des Rakelwerkzeugs 16 auf ein Drucksieb 12, in einer mit dem Drucksieb 12 auf einem Drucktisch 22 aufliegenden Betriebsstellung, über die Sensoreinrichtung 18 eine Rakelkraft zu erfassen und/oder auszuwerten.

Weiterhin kann die Steuereinrichtung 100 dazu ausgebildet sein, bei Krafteinwirkung des Rakelwerkzeugs 16 auf ein Drucksieb 12, frei von einer Kontaktierung zwischen dem Drucksieb 12 und einem Drucktisch 22 und/oder zwischen dem Drucksieb 12 und einer Druckunterlage und/oder zwischen dem Drucksieb 12 und zumindest einem Siebruckwerkstück, über die Sensoreinrichtung 18 eine Rakelkraft zu erfassen und/oder auszuwerten.

Weiterhin kann die Steuereinrichtung 100 dazu ausgebildet sein, bei Krafteinwirkung des Rakelwerkzeugs 16 auf ein Drucksieb 12 und bei einer durch die Krafteinwirkung auf das Drucksieb 12 erzeugten Kontaktierung eines Drucktisches 22 und/oder einer Druckunterlage und/oder zumindest eines Siebruckwerkstücks durch das Drucksieb 12, insbesondere bei elastischer Verformung des Drucksiebs 12, über die Sensoreinrichtung 18 eine Rakelkraft zu erfassen und/oder auszuwerten.

Die Steuereinrichtung 100 kann dazu ausgebildet sein, während einer mittels der Stelleinrichtung 66 erfolgenden Absenkbewegung des Rakelwerkzeugs 16 über die Sensoreinrichtung 18 eine Rakelkraftzunahme zu erfassen und/oder auszuwerten. Somit ist die Steuereinrichtung 100 also in der Lage, mithilfe der Sensoreinrichtung 18 die Zunahme von Rakelkräften zuverlässig zu erfassen und/oder auszuwerten.

Weiterhin kann die Steuereinrichtung 100 dazu ausgebildet sein, während einer mittels der Stelleinrichtung 66 ausschließlich auf das Drucksieb 12 erfolgenden Absenkbewegung des Rakelwerkzeugs 16, insbesondere frei von einer Kontaktierung eines Drucktisches 22 und/oder einer Druckunterlage und/oder zumindest eines Siebdruckwerkstücks durch das Drucksieb 12, über die Sensoreinrichtung (18) eine Rakelkraftzunahme zu erfassen und/oder auszuwerten.

Ferner kann die Steuereinrichtung 100 dazu ausgebildet sein, während einer mittels der Stelleinrichtung 66 auf das Drucksieb 12 erfolgenden Absenkbewegung des Rakelwerkzeugs 16, in einer mit dem Drucksieb 12 auf einem Drucktisch 22 aufliegenden Betriebsstellung, über die Sensoreinrichtung 18 eine Rakelkraftzunahme zu erfassen und/oder auszuwerten.

Weiterhin kann die Steuereinrichtung 100 dazu ausgebildet ist, während einer mittels der Stelleinrichtung 66 auf einem Drucktisch 22 und/oder auf eine Druckunterlage, insbesondere in einer siebfreien Anordnung, über die Sensoreinrichtung 18 eine Rakelkraftzunahme zu erfassen und/oder auszuwerten.

Ferner kann die Steuereinrichtung 100 dazu ausgebildet sein, bei einem mittels der Sensoreinrichtung 18 erfassten Beginn einer Rakelkraftzunahme während der Absenkung des Rakelwerkzeugs 16 eine Absenkbewegung durch die Stelleinrichtung 66 zu beenden. Folglich kann die Steuereinrichtung 100 dazu dienen, bei Erreichen einer bestimmten oder einer vorbestimmten Rakelkraft während der Absenkung des Rakelwerkzeugs 16 eben diese Absenkung zu beenden. Dies kann der Schonung des Rakelwerkzeugs 16 beziehungsweise der Rakelvorrichtung 14 als auch des Drucksiebs 12 und/oder des Drucktisches 22 dienen.

Die Steuereinrichtung 100 kann ferner dazu ausgebildet sein, bei einem mittels der Sensoreinrichtung 18 erfassten Beginn einer Rakelkraftzunahme während der Absenkung des Rakelwerkzeugs 16 eine Rakelhöhe automatisch oder teilautomatisch zu referenzieren. Das kann bedeuten, dass die Steuereinrichtung 100 anhand einer beginnenden Rakelkraftzunahme beziehungsweise anhand der beginnenden Zunahme der Rakelkraft während der Absenkung des Rakelwerkzeugs 16 eine etwaige Rakelhöhe, beispielsweise eine Soll-Höhe oder Sollposition des Rakelwerkzeugs 16, als Referenz festlegt, die wiederum für nachfolgende Prozesse als Referenz dienen kann.

Des Weiteren ist es möglich, dass die Steuereinrichtung 100 dazu ausgebildet ist, während einer mittels der Stelleinrichtung 66 erfolgenden Absenkbewegung des Rakelwerkzeugs 16 über die Sensoreinrichtung 18 eine Rakelkraftabweichung entlang einer Längserstreckung L des Rakelwerkzeugs 16 zu erfassen und/oder auszuwerten. Dementsprechend kann die Steuereinrichtung 100 entlang der Längserstreckung L des Rakelwerkzeugs 16 Rakelkräfte erfassen, miteinander vergleichen und/oder auswerten. Dadurch ist es zum Beispiel möglich, mithilfe der Steuereinrichtung 100 eine gleichmäßige Kraftverteilung entlang einer Längserstreckung L des Rakelwerkzeugs 16 zu begünstigen, so dass die Kraft des Rakelwerkzeugs 16 auf das Drucksieb 12 und/oder auf den Drucktisch 22 und/oder auf die jeweiligen Werkstücke entlang der Längserstreckung L des Rakelwerkzeugs 16 gleichbleibend beziehungsweise konstant ist.

Auch kann die Steuereinrichtung 100 dazu ausgebildet sein, bei einer mittels der Sensoreinrichtung 18 erfassten Rakelkraftabweichung entlang einer Längserstreckung L des Rakelwerkzeugs 16 automatisch oder teilautomatisch eine Neigungsjustierung mittels der Justiereinrichtung 28 auszuführen. Auf diese Weise kann mit nur geringem Handhabungsaufwand mithilfe der Justiereinrichtung 28 und mithilfe der Sensoreinrichtung 18 die räumliche Ausrichtung des Rakelwerkzeugs 16 gezielt eingestellt und/oder korrigiert werden, sodass die jeweils gewünschte Rakelkraft beziehungsweise Rakelkraftverteilung entlang einer Längserstreckung L des Rakelwerkzeugs 16 und/oder entlang der gesamten Länge des Rakelwerkzeugs 16 eingestellt werden kann. Die automatische oder teilautomatische Einstellung beziehungsweise Neigungsjustierung und/oder Korrektur lässt sich mit geringem Handhabungsaufwand vornehmen.

Zudem kann vorgesehen sein, dass die Steuereinrichtung 100 dazu ausgebildet ist, bei Erfassung einer entlang einer Längserstreckung L des Rakelwerkzeugs 16 gleichmäßigen und/oder innerhalb einer Toleranz befindlichen Rakelkraftverteilung die Neigungslage des Rakelwerkzeugs 16 zu referenzieren. Folglich kann die Steuereinrichtung 100 eine derart vorgenommene Referenzierung für nachfolgende Druck- beziehungsweise Rakelvorgänge mittels des Rakelwerkzeugs 16 nutzen. Insbesondere kann sich ausgehend von einer Referenzierten Neigungslage des Rakelwerkzeugs 16 entweder kein weiterer Einstellaufwand oder ein nur verringerter Einstellaufwand ergeben, da die gewünschte Rakelkraftverteilung bereits vorliegt oder mit geringem Einstellaufwand erzielt werden kann.

Außerdem kann die Steuereinrichtung 100 dazu ausgebildet sein, bei Erfassung einer entlang einer Längserstreckung L des Rakelwerkzeugs 16 gleichmäßigen und/oder innerhalb einer Toleranz befindlichen Rakelkraftverteilung die Neigungslage des Rakelwerkzeugs 16 automatisch oder teilautomatisch zu fixieren.

Folglich kann die Steuereinrichtung 100 dazu ausgebildet sein, beispielsweise zumindest eine Fixiereinrichtung 44, 46 der Rakelvorrichtung 14 zur Fixierung einer durch die Justiereinrichtung 28 justierten Neigungslage des Rakelwerkzeugs 16 und/oder zur Justierung einer durch die Justiereinrichtung 28 justierten translatorischen Justierlage zu aktivieren und/oder dergestalt zu betätigen, dass die zumindest eine Fixiereinrichtung 44, 46 eine Neigungslage des Rakelwerkzeugs 16 oder eine translatorische Justierlage arretiert beziehungsweise fixiert. Dadurch, dass diese Fixierung automatisch oder teilautomatisch erfolgen kann, können menschliche Bedienfehler zumindest verringert und auch ein etwaiger Handhabungsaufwand geringgehalten werden.

Weiterhin kann die Steuereinrichtung 100 dazu ausgebildet sein, während einer mittels der Rakelbewegungsvorrichtung 72 erfolgenden Bewegung der Rakelvorrichtung 14 entlang einer in Horizontalrichtung verlaufenden Rakelbewegungsrichtung R über die Sensoreinrichtung 18 eine Rakelkraft und/oder eine Rakelkraftabweichung in Längsrichtung L des Rakelwerkzeugs 16 zu erfassen und/oder auszuwerten. Somit kann die Steuereinrichtung 100 während der Bewegung der Rakelvorrichtung 14 mithilfe der Sensoreinrichtung 18 eine Rakelkraft und/oder eine Rakelkraftabweichung in Längsrichtung L des Rakelwerkzeugs 16 erkennen und die daraus gewonnen Informationen und/oder Daten können in die weitere oder nachfolgende Prozessführung einfließen oder als Einflussparameter für eine etwaige Steuerung und/oder Regelung durch die Steuereinrichtung 100 genutzt werden. Dadurch ist eine Verbesserung von Druckergebnissen während des Betriebes der Rakelvorrichtung 14 möglich.

Eine voranstehend und auch nachfolgend beschriebene Erfassung und/oder Auswertung durch die Steuereinrichtung 100 kann in bevorzugter Weise bei ausschließlicher Krafteinwirkung des Rakelwerkzeugs 16 auf das Drucksieb 12 und/oder bei einer durch die Krafteinwirkung des Rakelwerkzeugs 16 auf das Drucksieb 12 erzeugten Kontaktierung eines Drucktisches 22 und/oder einer Druckunterlage und/oder zumindest eines Siebruckwerkstücks durch das Drucksieb 12 erfolgen.

Bei einer weiteren Ausgestaltung kann die Steuereinrichtung 100 dazu ausgebildet sein, während einer mittels der Rakelbewegungseinrichtung 72 erfolgenden Bewegung der Rakelvorrichtung 14 entlang einer in Horizontalrichtung verlaufenden Rakelbewegungsrichtung R über die Sensoreinrichtung 18 eine Rakelkraftveränderung in Abhängigkeit der Rakelposition entlang der Rakelbewegungsrichtung R zu erfassen und/oder auszuwerten. Somit ist eine Rakelkraftveränderung während des Verschiebens beziehungsweise Verfahrens des Rakelwerkzeugs 16 oberhalb des Drucksiebes 12 beziehungsweise des Drucktisches 22 erfassbar und/oder auswertbar. Die Steuereinrichtung kann mithin während des Verschiebens und/oder Verfahrens der Rakelvorrichtung 14 beziehungsweise während des Verschiebens und/oder Verfahrens des Rakelwerkzeugs 16 Veränderungen der Rakelkraft in Abhängigkeit der Rakelposition oberhalb des Drucksiebes 12 beziehungsweise des Drucktisches 22 erkennen und/oder auswerten. Die derart gewonnenen Informationen und/oder Daten können in die weitere oder nachfolgende Prozessführung einfließen oder als Einflussparameter für eine etwaige Steuerung und/oder Regelung durch die Steuereinrichtung 100 genutzt werden. Somit können Rakelkraftveränderungen während des Verschiebens und/oder Verfahrens des Rakelwerkzeugs 16 oberhalb des Drucksiebes 12 beziehungsweise des Drucktisches 22 in geeigneter Weise berücksichtigt werden und die jeweiligen Druckergebnisse lassen sich verbessern.

Ebenfalls kann die Steuereinrichtung 100 dazu ausgebildet sein, während einer mittels der Rakelbewegungseinrichtung 72 erfolgenden Bewegung der Rakelvorrichtung 14 entlang einer in Horizontalrichtung verlaufenden Rakelbewegungsrichtung R über die Sensoreinrichtung 18 eine Veränderung der Rakelkraftabweichung in Längsrichtung L des Rakelwerkzeugs 16 in Abhängigkeit der Rakelposition entlang der Rakelbewegungsrichtung R zu erfassen und/oder auszuwerten. Folglich kann die Steuereinrichtung 100 während der Bewegung der Rakelvorrichtung 14 mithilfe der Sensoreinrichtung 18 Veränderungen in der Rakelkraftabweichung in Längsrichtung L des Rakelwerkzeugs 16 in Abhängigkeit der Rakelposition erkennen und/oder auswerten. Beispielsweise kann eine Vergrößerung und/oder eine Verkleinerung und/oder eine gleichbleibende der Rakelkraftabweichung in Längsrichtung L des Rakelwerkzeugs 16 in geeigneter Weise während einer Rakelbewegung entlang einer in Horizontalrichtung verlaufenden Rakelbewegungsrichtung R erfasst werden. Die hierdurch gewonnenen Informationen und/oder Daten können wiederum in die weitere oder nachfolgende Prozessführung einfließen oder als Einflussparameter für eine etwaige Steuerung und/oder Regelung durch die Steuereinrichtung 100 genutzt werden. Die Druckergebnisse lassen sich hierdurch weiter verbessern.

Außerdem kann die Steuereinrichtung 100 dazu ausgebildet sein, während einer mittels der Rakelbewegungseinrichtung 72 erfolgenden Bewegung der Rakelvorrichtung 14 entlang der Rakelbewegungsrichtung R und/oder während eines Siebdruckvorgangs eine fortlaufende und/oder wiederkehrende Erfassung von Rakelkräften und/oder von Rakelkraftabweichungen in Längsrichtung L des Rakelwerkzeugs 16 vorzunehmen. Somit kann eine kontinuierliche Überwachung von Rakelkräften und/oder von Rakelkraftabweichungen während einer Bewegung der Rakelvorrichtung 14 mithilfe der Steuereinrichtung 100 realisiert und eine weiter verbesserte Datenbasis für die nachfolgende Prozessführung, weitere Siebdruckvorgänge und/oder nachfolgend vorzunehmende Justierungen der Ausrichtung und/oder Neigungslage des Rakelwerkzeugs 16 geschaffen werden.

Ferner kann die Steuereinrichtung 100 dazu ausgebildet sein, Messdaten von fortlaufenden und/oder wiederkehrenden Erfassungen während einer mittels der Rakelbewegungseinrichtung 72 erfolgenden Bewegung der Rakelvorrichtung 14 entlang der Rakelbewegungsrichtung R und/oder während eines Druckvorgangs zu speichern und/oder auszuwerten. Dementsprechend kann die Steuereinrichtung 100 Messdaten für eine weitere Verarbeitung speichern und/oder diese auswerten. Insbesondere bei Messdaten von fortlaufenden und/oder wiederkehrenden Erfassungen können weitere Erkenntnisse, wie zum Beispiel der Verschleiß des Drucksiebs 12 und/oder des Rakelwerkzeugs 16 beziehungsweise der Rakelvorrichtung 14, ermittelt werden. Anhand derartiger Daten können geeignete Maßnahmen für nachfolgende Druckvorgänge initiiert werden, um die Druckqualität zu verbessern oder aufrecht zu erhalten.

Auch kann die Steuereinrichtung 100 dazu ausgebildet sein, während einer mittels der Stelleinrichtung 66 erfolgenden Absenkbewegung des Rakelwerkzeugs 16, in einer siebfreien Anordnung und/oder bei Krafteinwirkung des Rakelwerkzeugs 16 unmittelbar auf einen Drucktisch 22 und/oder in einer mit dem Drucksieb 12 auf einem Drucktisch 22 aufliegenden Anordnung, über die Sensoreinrichtung 18 den Verlauf einer Rakelkraftzunahme in Abhängigkeit eines Absenkweges zu erfassen und/oder auszuwerten. Durch eine solche Ausgestaltung kann die Kraftzunahme beziehungsweise das Verhalten des Rakelwerkzeugs im Zuge der Zunahme der Rakelkraft frei von Einflüssen eines Drucksiebs 12 ermittelt werden. Die daraus gewonnenen Erkenntnisse und Informationen können in vorteilhafter Weise für die Einstellung der Neigungslage des Rakelwerkzeugs 16 und/oder für die Steuerung einer Absenkbewegung bei Vorhandensein eines Drucksiebs 12 und/oder für Druckvorgänge beziehungsweise Rakelbewegungen mittels einer Rakelbewegungseinrichtung 72 genutzt werden.

Ferner kann die Steuereinrichtung 100 dazu ausgebildet sein, während einer mittels der Stelleinrichtung 66 erfolgenden Absenkbewegung des Rakelwerkzeugs 16 auf das Drucksieb 12, frei von einer Kontaktierung eines Drucktisches 22 und/oder einer Druckunterlage und/oder eines Siebdruckwerkstücks durch das Drucksieb 12, über die Sensoreinrichtung 18 den Verlauf einer Rakelkraftzunahme in Abhängigkeit eines Absenkweges zu erfassen und/oder auszuwerten.

Außerdem kann die Steuereinrichtung 100 dazu ausgebildet sein, mittels der Sensoreinrichtung 18 und/oder aus erfassten und/oder abgespeicherten Sensordaten der Sensoreinrichtung 18 eine Siebrückstellkraft und/oder eine Siebspannung des Drucksiebs 12 zu ermitteln, insbesondere eine relative Siebrückstellkraft und/oder eine relative Siebspannung des Drucksiebs 12. Folglich kann mithilfe der Steuereinrichtung 100 auf den Verschleiß beziehungsweise die Alterung des Drucksiebs 12 oder auf etwaige Beschädigungen oder Fertigungsmängel des Drucksiebs 12 rückgeschlossen werden. Bei einer verhältnismäßig geringen Siebrückstellkraft und/oder Siebspannung beziehungsweise bei nach Kontaktierung des Drucksiebs 12 nur langsam ansteigenden Rakelkräften kann auf einen hohen Verschleiß des Drucksiebs 12 geschlossen werden.

Ferner kann die Steuereinrichtung 100 dazu ausgebildet sein, während einer mittels der Stelleinrichtung 66 erfolgenden Absenkbewegung des Rakelwerkzeugs 16 den Beginn einer Rakelkraftzunahme zu erfassen und/oder den bei Beginn der Rakelkraftzunahme vorliegenden Absenkweg des Rakelwerkzeugs 16 als Messreferenzstartpunkt für die Erfassung einer weiteren Rakelkraftzunahme und/oder für die Erfassung einer Siebrückstellkraft und/oder einer Siebspannung und/oder einer Referenzsiebrückstellkraft und/oder einer Referenzsiebspannung und/oder einer Siebalterung festzulegen. Somit kann also durch Erfassung des Beginns der Rakelkraftzunahme auf einen ersten Kontakt mit dem Drucksieb 12 oder mit einem Drucktisch 22 rückgeschlossen werden. Ein solcher Kontaktpunkt kann in vorteilhafter als Messreferenzstartpunkt genutzt werden und es kann auf diese Weise eine besonders präzise Referenzmessung oder auch Überwachungsmessung vorgenommen werden. Beispielsweise kann die Position, ab welcher die Rakelkraftzunahme beginnt, als Messreferenzstartpunkt für die Erfassung einer Referenzsiebrückstellkraft und/oder einer Referenzsiebspannung festgelegt und/oder als Messreferenzstartpunkt für Messungen der Siebrückstellkraft und/oder Siebspannung im Laufe der Lebensdauer eines Drucksiebs 12 festgelegt werden.

Des Weiteren kann die Steuereinrichtung 100 dazu ausgebildet sein, ausgehend von dem Messreferenzstartpunkt das Rakelwerkzeugs 16 mittels der Stelleinrichtung 66 weiter abzusenken und eine weitere Rakelkraftzunahme in Abhängigkeit des Absenkwegs zu erfassen und auf Grundlage der weiteren Rakelkraftzunahme eine Siebrückstellkraft und/oder eine Siebspannung und/oder eine Referenzsiebrückstellkraft und/oder eine Referenzsiebspannung und/oder eine Siebalterung zu ermitteln. Mithin kann die Steuereinrichtung 100 ausgehend von dem Messreferenzstartpunkt und bei einem weiteren Absenken der Stelleinrichtung 66 anhand der Zunahme der Rakelkraft die Siebrückstellkraft und/oder Siebspannung und/oder die Elastizität des Drucksiebes 12 ermitteln. Eine bei einem intakten Drucksieb 12 ab dem Messreferenzstartpunkt erfolgte Erfassung der Siebrückstellkraft und/oder Siebspannung beziehungsweise der Rakelkraftzunahme in Abhängigkeit des weiteren Absenkwegs kann dabei als Referenzerfassung dienen und für spätere Auswertungen und/oder Vergleiche mit erneuten Siebrückstellkraftmessungen und/oder Siebspannungsmessungen herangezogen werden. Während der Nutzungsdauer des jeweiligen Drucksiebs 12 kann hierdurch in vorteilhafter Weise der Verschleiß beziehungsweis die Alterung des Drucksiebs 12 überwacht werden.

Zudem ist es möglich, dass die Steuereinrichtung 100 dazu ausgebildet ist, eine Bestimmung der Siebrückstellkraft und/oder der Siebspannung des Drucksiebs 12 an mehreren Positionen entlang einer in Horizontalrichtung verlaufenden Rakelbewegungsrichtung R vorzunehmen, insbesondere in oder im Bereich einer Mitte des Drucksiebs 12 und/oder angrenzend an einem Drucksiebrand oder an den Drucksiebrändern. Dementsprechend kann über die gesamte Fläche beziehungsweise das gesamte Drucklayout des Drucksiebes 12 der Verschleiß des Drucksiebes 12 erfasst werden. Mithin können mehrere Messpunkte für die Siebrückstellkraft und/oder Siebspannung des Drucksiebs 12 ermittelt beziehungsweise verwendet werden, anhand welcher auf den Zustand des Drucksiebs 12 Rückschlüsse gezogen werden können, und zwar hinsichtlich des Verschleißes des Drucksiebs 12. Die Erfassungssicherheit und Erfassungsgenauigkeit lässt sich hierdurch weiter verbessern.

Des Weiteren kann die Steuereinrichtung 100 dazu ausgebildet sein, eine Bestimmung der Siebrückstellkraft und/oder der Siebspannung zwischen Druckvorgängen vorzunehmen und/oder periodisch zu wiederholen und/oder zur Bestimmung des Siebverschleißes und/oder der Siebalterung periodisch zu wiederholen. Somit ist gemäß vorbestimmbarer oder vorbestimmter Prozessabläufe von der Steuereinrichtung 100 der Siebverschleiß oder die Siebalterung bestimmbar. Anhand des jeweiligen Ergebnisses kann mit hoher Sicherheit eine Mindestdruckqualität der Vorrichtung 10 sichergestellt werden.

Ferner kann die Steuereinrichtung 100 dazu ausgebildet sein, eine Bestimmung der Siebspannung und/oder Siebrückstellkraft mittels der Sensoreinrichtung 18 und unter Einbeziehung einer Absprunghöhe zwischen dem Drucksieb 12 und einem Drucktisch 22 und/oder einer Druckunterlage und/oder zumindest einem Siebdruckwerkstück und/oder unter Einbeziehung eines Absenkweges der Stelleinrichtung 66 zu ermitteln.

Ferner kann die Steuereinrichtung 100 dazu ausgebildet sein, mittels der Sensoreinrichtung 18 und/oder aus erfassten und/oder abgespeicherten Sensordaten der Sensoreinrichtung 18 eine Auftragskraft, die von dem Rakelwerkzeug 16 über das Drucksieb 12 wirksam auf einen Drucktisch 22 und/oder auf eine Druckunterlage und/oder auf zumindest ein Siebdruckwerkstück übertragen wird, zu ermitteln.

Ferner kann die Steuereinrichtung 100 dazu ausgebildet sein, die Auftragskraft aus einer Differenz der durch die Sensoreinrichtung 18 erfassten Rakelkraft sowie einer vorbekannten und/oder ermittelten Siebrückstellkraft des Drucksiebs 12 zu ermitteln.

Weiterhin kann die Steuereinrichtung 100 dazu ausgebildet sein, die Auftragskraft während der Durchführung eines Druckvorgangs konstant zu halten.

Weiterhin kann die Steuereinrichtung 100 dazu ausgebildet sein, mehrere Druckvorgänge mit gleichen Auftragskräften durchzuführen und/oder Abweichungen der Auftragskräfte zwischen mehrere Druckvorgängen unterhalb eines vordefinierten Grenzwertes zu halten.

Ferner kann die Steuereinrichtung 100 dazu ausgebildet sein, eine Auftragskraftabweichung entlang einer Längserstreckung L des Rakelwerkzeugs 16 zu erfassen und/oder auszuwerten.

Ferner kann die Steuereinrichtung 100 dazu ausgebildet sein, eine Bestimmung der Auftragskraft mittels der Sensoreinrichtung 18 und unter Einbeziehung einer Absprunghöhe zwischen dem Drucksieb 12 und einem Drucktisch 22 und/oder einer Druckunterlage und/oder zumindest einem Siebdruckwerkstück und/oder unter Einbeziehung eines Absenkweges der Stelleinrichtung 66 zu ermitteln.

Ferner kann die Steuereinrichtung 100 und/oder die Stelleinrichtung 66 dazu ausgebildet sein, das Rakelwerkzeug 16 während der Durchführung eines Druckvorgangs auf einer festgelegten Höhenposition zu halten. Durch Halten einer festgelegten Höhenposition kann ein kontinuierliches, gleichbleibendes beziehungsweise gleichmäßiges Druckbild gewährleistet werden.

Ferner kann eine festgelegte Höhenposition während der Durchführung eines Druckvorgangs mittels der Stelleinrichtung 66 und/oder der Steuereinrichtung 100 fixiert und/oder unverändert aufrechterhalten bleiben. Auf diese Weise kann ein kontinuierliches, gleichbleibendes beziehungsweise gleichmäßiges Druckbild über das gesamte Drucklayout eines Drucksiebs 12 mit weiter erhöhter Sicherheit gewährleistet werden.

Auch kann die Steuereinrichtung 100 dazu ausgebildet sein, die Höhenposition des Rakelwerkzeugs 16 während der Durchführung eines Druckvorgangs kraftbasiert zu steuern und/oder zu regeln. Eine kraftbasierte Steuerung und/oder Regelung hat den Vorteil, dass Druckmasse mit einer entlang der Rakelrichtung R gleichbleibenden Kraft oder einem gleichbleibenden Druck durch das Drucksieb 12 hindurchgepresst werden kann. Kraftschwankungen können hierdurch vorteilhaft ausgeglichen werden. Es lässt sich damit vermeiden, dass beispielsweise lokal eine zu große Menge oder auch zu geringe Menge an Druckmasse durch das Drucksieb 12 gepresst wird oder es zu lokalen Kraft- oder Spannungsspitzen kommt, durch die Beschädigungen entstehen.

Ferner kann vorgesehen sein, dass die Steuereinrichtung 100 und/oder die Stelleinrichtung 66 dazu ausgebildet ist, eine festgelegte Rakelkraft und/oder eine festgelegte und wirksame Auftragskraft während der Durchführung eines Druckvorgangs zu halten. Dies hat den Vorteil, dass mit weiter erhöhter Sicherheit über das gesamte Drucklayout des Drucksiebs 12 eine konstant bleibende Kraft ausgeübt werden kann und ein damit ein besonders gleichmäßiges Druckbild erzeugt werden kann. Schwankungen in der Rakelkraft können somit in besonders vorteilhafter Weise ausgeglichen werden. Hierdurch kann eine besonders hohe Druckqualität gewährleistet werden.

Zudem ist es möglich, dass die Steuereinrichtung 100 dazu ausgebildet ist, Messdaten von fortlaufenden und/oder wiederkehrenden Erfassungen der Sensoreinrichtung 18 während einer mittels der Rakelbewegungseinrichtung 72 erfolgenden Bewegung der Rakelvorrichtung 14 entlang der Rakelbewegungsrichtung R und/oder während eines Druckvorgangs in Mittelwerte umzurechnen und/oder abzuspeichern und/oder zu verarbeiten. Mithilfe der Umrechnung und/oder Abspeicherung und/oder Verarbeitung von erfassten Messdaten in Mittelwerte kann in vorteilhafter Weise eine geeignete Datenbasis für nachfolgende Steuer- und Regelprozesse durch die Steuereinrichtung 100 geschaffen werden und ein insgesamt geringer Rechenaufwand wird gewährleistet. Intensive Rechenvorgänge der Steuereinrichtung 100 sind hierdurch reduzierbar und zum anderen kann ein besonders gleichmäßiges Druckbild weiter begünstigt werden. Zudem kann auf diese Weise Speicherplatz für Messwerte und Messdaten eingespart werden.

Außerdem kann die Steuereinrichtung 100 dazu ausgebildet sein, Messdaten von fortlaufenden und/oder wiederkehrenden Erfassungen von einzelnen Kraftmesssensoren 24, 26 während einer mittels der Rakelbewegungseinrichtung 72 erfolgenden Bewegung der Rakelvorrichtung 16 entlang der Rakelbewegungsrichtung R und/oder während eines Druckvorgangs in Mittelwerte umzurechnen und/oder abzuspeichern und/oder zu verarbeiten. Die Informationsgüte durch die Differenzierung von Daten einzelner Kraftmesssensoren 24, 26 kann auf diese Weise verbessert werden. Gleichzeitig kann die zu verarbeitende Datenmenge reduziert und die Verarbeitung, Speicherung und Umrechnung von Daten beziehungsweise Messwerten beschleunigt werden.

Ferner kann die Steuereinrichtung 100 dazu ausgebildet sein, die Höhenposition und/oder Ausrichtung und/oder Neigungslage des Drucksiebs 12 nach Abschluss eines Druckvorgangs und/oder vor Beginn eines Druckvorgangs zu steuern und/oder zu regeln. Auf diese Weise ist die Steuereinrichtung 100 in der Lage, das Drucksieb 12 in seiner räumlichen Ausrichtung dahingehend einzustellen, dass beispielsweise ein konstanter Druck der Rakelvorrichtung 14 beziehungsweise deren Rakelwerkzeugs 16 gewährleistbar ist. Die Ausrichtung des Drucksiebs 12 kann auf die Ausrichtung des Rakelwerkzeugs 16 angepasst werden oder eine Steuerung und/oder Regelung kann unter Berücksichtigung der Ausrichtung des Drucksiebs 12 und des Rakelwerkzeugs 16 erfolgen. Ein hochqualitatives Druckbild über das gesamte Drucklayout eines Drucksiebs 12 kann hierdurch mit weiter verbesserter Sicherheit erreicht werden.

Des Weiteren kann die Steuereinrichtung 100 dazu ausgebildet sein, die Höhenposition und/oder Ausrichtung und/oder Neigungslage des Drucksiebs 12 in Abhängigkeit von gespeicherten und/oder verarbeiteten Messdaten der Sensoreinrichtung 18 und/oder einzelner Kraftmesssensoren 24, 26 und/oder in Abhängigkeit einer ermittelten Siebspannung und/oder Siebrückstellkraft und/oder Auftragskraft zu steuern und/oder zu regeln. Demzufolge ist es möglich, über die Höhenposition, Ausrichtung und/oder Neigungslage des Drucksiebs 12 anhand von Messdaten der Sensoreinrichtung 18 die räumliche Orientierung des Drucksiebes 12 zu steuern und/oder zu regeln. Über Rückmeldung der Sensoreinrichtung 18 kann beispielsweise die räumliche Ausrichtung des Drucksiebes 12 so angepasst werden, dass eine Rakelkraft auf das Drucksieb 12 und über das gesamte Drucklayout oder die gesamte Fläche des Drucksiebs 12 konstant ist oder - je nach gewünschter Prozessführung oder gewünschten Prozessparametern - Abweichungen aufweist.

Ferner ist es möglich, dass die Steuereinrichtung 100 dazu ausgebildet ist, die Höhenposition und/oder Ausrichtung und/oder Neigungslage des Drucksiebs 12 während der Durchführung eines Druckvorgangs kraftbasiert zu steuern und/oder zu regeln. Auf diese Weise ist die Steuereinrichtung 100 in der Lage, die räumliche Ausrichtung des Drucksiebs 12 anhand von gemessenen Kräften, die beispielsweise auf die Rakelvorrichtung 14 beziehungsweise auf das Rakelwerkzeug 16 einwirken, flexibel während eines Druck- beziehungsweise Rakelvorgangs anzupassen beziehungsweise einzustellen. Die Fertigungsgenauigkeit und -flexibilität kann hierdurch weiter verbessert werden

Zudem kann die Steuereinrichtung 100 dazu ausgebildet sein, die Höhenposition und/oder Ausrichtung und/oder Neigungslage des Drucksiebs 12 in Abhängigkeit von Messdaten fortlaufender und/oder wiederkehrender Erfassungen der Sensoreinrichtung 18 und/oder einzelner Kraftmesssensoren 24, 26 und/oder in Abhängigkeit einer ermittelten Siebspannung und/oder Siebrückstellkraft und/oder Auftragskraft während einer mittels der Rakelbewegungseinrichtung 72 erfolgenden Bewegung der Rakelvorrichtung 14 entlang der Rakelbewegungsrichtung R und/oder während eines Druckvorgangs zu steuern und/oder zu regeln. Durch eine solche Ausgestaltung der Steuereinrichtung 100 kann mithin während des Betriebs der Vorrichtung 10 beziehungsweise während einer Bewegung der Rakelvorrichtung 14 mithilfe der Rakelbewegungseinrichtung 72 die räumliche Lage und/oder Ausrichtung des Drucksiebs 12 anhand erfasster Messdaten der Sensoreinrichtung 18 angepasst und/oder gesteuert und/oder geregelt werden. Die Präzision eines Druckvorgangs kann auf diese Weise noch weiter verbessert werden.

Es kann weiterhin vorgesehen sein, dass die Steuereinrichtung 100 dazu ausgebildet ist, eine Rakelkraft und/oder Auftragskraft mittels der Stelleinrichtung 66 in Abhängigkeit einer Bauteilhöhe und/oder in Abhängigkeit der Schichtanzahl bereits gedruckter Bauteilschichten einzustellen. Die Höhe eines bereits erfolgten Druckaufbaus beziehungsweise Werkstücks und/oder die Schichtanzahl bereits gedruckter Bauteilschichten kann auf diese Weise vorteilhaft für die weitere Prozessführung beziehungsweise die weitere Steuerung und/oder Regelung mittels der Steuereinrichtung 100 genutzt werden. Soweit die bereits aufgebaute Bauteilhöhe einen nennenswerten Einfluss auf den Druck weiterer Druckschichten beziehungsweise auf den Druckmassenauftrag durch das Drucksieb 12 hat, kann dies durch Einstellung der Rakelkraft und/oder Auftragskraft mittels der Stelleinrichtung 66 in geeigneter Weise ausgeglichen werden.

Weiterhin kann Steuereinrichtung 100 dazu ausgebildet sein, eine Rakelkraft ausgehend von einer Start-Rakelkraft und/oder Start-Auftragskraft schichtweise und proportional abzusenken bis zu einer Grenzschicht und/oder mit Erreichen einer Grenzschicht die Rakelkraft und/oder Start-Auftragskraft für den Druck weiterer Druckschichten unverändert aufrechtzuerhalten. Auf diese Weise kann sichergestellt werden, dass Siebdruckbauteile entlang der gesamten Höhe im Wesentlichen gleichbleibende Schichtdicken aufweisen. Die Druckpräzision kann auf diese Weise noch weiter verbessert und die Gefahr von Beschädigungen bereits gedruckter Schichten verringert werden.

Ferner kann die Steuereinrichtung 100 dazu ausgebildet sein, auf Grundlage einer ermittelten Siebrückstellkraftkurve und/oder Siebspannungskurve, einer ermittelten Rakelblattflexibilität, einer ermittelten Rakelkraft über den Druckverlauf in Rakelbewegungsrichtung R, einer Absprunghöhe zwischen Drucksieb 12 und einem Drucktisch 22 oder einer Bauteiloberfläche und/oder einer Höhe des Drucksiebs 12 eine Auftragskraft auf die unterhalb des Drucksiebs 12 befindlichen Siebdruckwerkstücke zu ermitteln, insbesondere als Liniendruck zu ermitteln. Eine solche Ermittlung kann in vorteilhafter Weise dazu dienen, qualitativ hochwertige Siebdruckbauteile zu erstellen, bei denen eine kontinuierliche beziehungsweise gleichbleibende Druckschichtdicke von Schicht zu Schicht gewährleistet wird. Die Gewährleistung gleichbleibender Druckschichtdicken kann zu einer verbesserten Bauteilpräzision führen.

Des Weiteren ist es möglich, dass die Steuereinrichtung 100 dazu ausgebildet ist, auf Grundlage eines mittels der Sensoreinrichtung 18 erfassten IST-Kräfteverlaufs während eines Siebdruckvorgangs eine gesteuerte und/oder geregelte Anpassung der Auftragskraft und/oder Rakelkraft und/oder der Rakelgeschwindigkeit entlang einer Rakelbewegungsrichtung R und/oder einer Absprunghöhe und/oder einer Siebliftfunktionalität vorzunehmen. Die Anpassung der Rakelkraft und/oder der Rakelgeschwindigkeit mittels eines erfassten IST-Kräfteverlaufs dient dazu, die Prozessparameter für einen laufenden Druckvorgang und/oder für zumindest einen nachfolgenden Druckvorgang geeignet anzupassen. Die Erzeugung hochpräziser Siebdruckbauteile kann auf diese Weise mit einer weiter erhöhten Sicherheit erfolgen. Etwaige Druckschichten können besonders genaue Dicken aufweisen. Insbesondere bei einem erfassten IST-Kräfteverlauf kann in Echtzeit in den jeweiligen Druckvorgang eingegriffen werden und in der Folge lassen sich Einstellungen vornehmen, durch die das zu erstellende Siebdruckbauteil mit erhöhter Präzision gefertigt werden kann.

Vorgesehen sein kann auch, dass die Steuereinrichtung 100 dazu ausgebildet ist, auf Grundlage eines mittels der Sensoreinrichtung 18 erfassten IST-Kräfteverlaufs während eines Siebdruckvorgangs und/oder einer erfassten Auftragskraft und/oder Siebrückstellkraft und/oder Siebspannung eine gesteuerte und/oder geregelte Anpassung einer Sieblagenausrichtung und/oder Siebhöhenausrichtung vorzunehmen. Somit kann die Steuereinrichtung 100 im Betrieb oder während des Betriebs der Vorrichtung 10 durch beispielsweise eine Veränderung der räumlichen Lage des Drucksiebs 12 eine zumindest abschnittsweise oder stellenweise Anpassung der Rakelkraft des Rakelwerkzeugs 16 auf das Drucksieb 12 gewährleisten. Somit kann die Fertigungspräzision erhöht und ein Ausgleich von Ungenauigkeiten vorangegangener Druckvorgänge sichergestellt werden. Im Ergebnis lassen sich hierdurch Siebdruckwerkstücke mit weiter erhöhter Genauigkeit herstellen.

Eine erfindungsgemäße Vorrichtung 10 zur Herstellung von dreidimensionalen Siebdruckwerkstücken, insbesondere einer 3D-Siebdruckanlage, kann, wie voranstehend beschrieben, ein Drucksieb 12 und eine Rakelvorrichtung 14 zum Fluten des Drucksiebs 12 mit einer Druckmasse und/oder zum Pressen von Druckmasse durch das Drucksieb 12 aufweisen. Dabei kann die Rakelvorrichtung 14 wenigstens ein Rakelwerkzeug 16, eine Sensoreinrichtung 18 zur Erfassung von auf das Rakelwerkzeug 16 wirkenden Rakelkräften sowie eine Steuereinrichtung 100 zur Auswertung und/oder Speicherung von Sensordaten der Sensoreinrichtung 18 aufweisen. Die Steuereinrichtung 100 kann dazu ausgebildet sein, mittels der Sensoreinrichtung 18 und/oder aus erfassten und/oder abgespeicherten Sensordaten der Sensoreinrichtung 18 eine Siebrückstellkraft und/oder Siebspannung des Drucksiebs 12 zu ermitteln.

Durch die Ermittlung der Siebrückstellkraft und/oder Siebspannung des Drucksiebs 12 kann insbesondere die Siebalterung beziehungsweise der Verschleiß erfasst werden und die Rakelvorrichtung 14 kann entsprechend der ermittelten Siebrückstellkraft und/oder Siebspannung nachjustiert werden, um insbesondere um eine erfasste Siebalterung oder einen Verschleiß zu kompensieren. Die Standzeiten der Komponenten, die Fertigungsgenauigkeit sowie auch die Produktivität lassen sich hierdurch verbessern.

Eine erfindungsgemäße Rakelvorrichtung 14, 15, insbesondere für eine Vorrichtung 10 zur Herstellung von dreidimensionalen Siebdruckwerkstücken, wie oben geschildert, und/oder für eine 3D-Siebdruckanlage, kann wenigstens ein Rakelwerkzeug 16 zum Fluten eines Drucksiebs 12 mit einer Druckmasse und/oder zum Pressen von Druckmasse durch ein Drucksieb 12 aufweisen. Außerdem kann die Rakelvorrichtung 14, 15 mit einer Sensoreinrichtung 18 zur Erfassung von auf das Rakelwerkzeug 16 wirkenden Rakelkräften ausgestattet sein, wobei die Sensoreinrichtung 18 zur Erfassung einer Rakelkraftabweichung entlang einer Längserstreckung L des Rakelwerkzeugs 16 ausgebildet sein kann.

Bei einem erfindungsgemäßen Verfahren zur Herstellung von dreidimensionalen Siebdruckwerkstücken, insbesondere mit einer voranstehend beschriebenen Vorrichtung 10 zur Herstellung von dreidimensionalen Siebdruckwerkstücken, die insbesondere als 3D-Siebdruckanlage ausgebildet sein kann, kann mittels einer Rakelvorrichtung 14 ein Drucksieb 12 mit einer Druckmasse geflutet werden und/oder mittels einer Rakelvorrichtung 14 Druckmasse durch ein Drucksieb 12 gepresst werden. Ferner kann mittels einer Sensoreinrichtung 18 eine auf ein Rakelwerkzeug 16 der Rakelvorrichtung 14 wirkende Rakelkraft durch eine Sensoreinrichtung 18 erfasst werden. Schließlich kann durch die Sensoreinrichtung 18 eine Rakelkraftabweichung entlang einer Längserstreckung L des Rakelwerkzeugs 16 erfasst werden.

Die Vorrichtung 10 kann in besonders vorteilhafter Weise für die Entwicklung und/oder für die Herstellung großer Stückzahlen von Arzneimitteln ausgebildet und/oder eingerichtet sein. Ebenso kann ein voranstehend beschriebenes Verfahren für die Herstellung großer Stückzahlen von Arzneimitteln ausgeführt werden.

### BEZUGSZEICHENLISTE

- 10: Vorrichtung
- 12: Drucksieb
- 14: Rakelvorrichtung
- 15: Rakelvorrichtung
- 16: Rakelwerkzeug
- 18: Sensoreinrichtung
- 20: Druckeinrichtung
- 22: Drucktisch
- 24: Kraftmesssensor
- 26: Kraftmesssensor
- 28: Justiereinrichtung
- 30: Justierschraube
- 32: Justierschraube
- 34: Rakellagerung
- 36: Federlagerung
- 38: Federlagerung
- 40: Langlochführung
- 42: Langlochführung
- 44: Fixiereinrichtung
- 45: Fixierschraube
- 46: Fixiereinrichtung
- 47: Fixierschraube
- 48: Justierhalterung
- 50: Tragstruktur
- 51: Ausnehmung
- 52: Befestigungssystem
- 53: Lagerstift
- 54: Knebelschraube
- 56: Knebelschraube
- 58: Rakelblatt
- 60: Rakelaufnahme
- 62: Rakelseitenfläche
- 64: Kopplungsabschnitt
- 66: Stelleinrichtung
- 68: elektrischer oder elektromechanischer Linearantrieb
- 70: pneumatische Linearantrieb
- 72: Rakelbewegungseinrichtung
- 74: Linearführung
- 76: Linearführung
- 78: Querträger
- 80: Stützeinrichtung
- 82: Stützeinrichtung
- 84: Sensorhalterung

- L: Längserstreckung
- N: Neigungsachse
- R: Rakelbewegungsrichtung

## Patentansprüche

1. Vorrichtung (10) zur Herstellung von dreidimensionalen Siebdruckwerkstücken, insbesondere 3D-Siebdruckanlage, mit einem Drucksieb (12) und mit einer Rakelvorrichtung (15) zum Fluten des Drucksiebs (12) mit einer Druckmasse und/oder zum Pressen von Druckmasse durch das Drucksieb (12), wobei die Rakelvorrichtung (14) wenigstens ein Rakelwerkzeug (16), eine Sensoreinrichtung (18) zur Erfassung von auf das Rakelwerkzeug (16) wirkenden Rakelkräften sowie eine Steuereinrichtung (100) zur Auswertung und/oder Speicherung von Sensordaten der Sensoreinrichtung (18) aufweist, wobei die Steuereinrichtung (100) dazu ausgebildet ist, mittels der Sensoreinrichtung (18) und/oder aus erfassten und/oder abgespeicherten Sensordaten der Sensoreinrichtung (18) eine Siebrückstellkraft und/oder Siebspannung des Drucksiebs (12) zu ermitteln.

2. Vorrichtung (10) nach Anspruch 1, **dadurch gekennzeichnet, dass** die Steuereinrichtung (100) dazu ausgebildet ist, mittels der Sensoreinrichtung (18) und/oder aus erfassten und/oder abgespeicherten Sensordaten der Sensoreinrichtung (18) und/oder auf Grundlage einer Siebrückstellkraft und/oder Siebspannung oder mehrerer Siebrückstellkräfte und/oder Siebspannungen einen Siebverschleiß und/oder eine Siebalterung zu ermitteln.

3. Vorrichtung (10) nach einem der voranstehenden Ansprüche, **dadurch gekennzeichnet, dass** die Steuereinrichtung (100) dazu ausgebildet ist, eine Bestimmung der Siebrückstellkraft und/oder Siebspannung und/oder eine Bestimmung der Siebrückstellkraftänderung und/oder Siebspannungsänderung während der Durchführung eines Druckvorgangs vorzunehmen.

4. Vorrichtung (10) nach einem der voranstehenden Ansprüche, **dadurch gekennzeichnet, dass** die Steuereinrichtung (100) dazu ausgebildet ist, die Höhenposition und/oder Ausrichtung und/oder Neigungslage des Drucksiebs (12) in Abhängigkeit von gespeicherten und/oder verarbeiteten Messdaten der Sensoreinrichtung (18) und/oder einzelner Kraftmesssensoren (24, 26) und/oder in Abhängigkeit einer ermittelten Siebrückstellkraft und/oder Siebspannung und/oder Auftragskraft und/oder Siebalterung zu steuern und/oder zu regeln.

5. Vorrichtung (10) nach einem der voranstehenden Ansprüche, **dadurch gekennzeichnet, dass** die Steuereinrichtung (100) dazu ausgebildet ist, die Höhenposition und/oder Ausrichtung und/oder Neigungslage des Drucksiebs (12) während der Durchführung eines Druckvorgangs kraftbasiert zu steuern und/oder zu regeln.

6. Vorrichtung (10) nach einem der voranstehenden Ansprüche, **dadurch gekennzeichnet, dass** die Rakelvorrichtung (14) eine Stelleinrichtung (66) zur Bewegung des Rakelwerkzeugs (16) zwischen einer angehobenen Ausgangsstellung und zumindest einer abgesenkten Betriebsstellung aufweist.

7. Vorrichtung (10) nach Anspruch 6, **dadurch gekennzeichnet, dass** die Steuereinrichtung (100) dazu ausgebildet ist, während einer mittels der Stelleinrichtung (66) erfolgenden Absenkbewegung des Rakelwerkzeugs (16) über die Sensoreinrichtung (18) eine Rakelkraftzunahme zu erfassen und/oder auszuwerten.

8. Vorrichtung (10) nach einem der Ansprüche 6 oder 7, **dadurch gekennzeichnet, dass** die Steuereinrichtung (100) dazu ausgebildet ist, während einer mittels der Stelleinrichtung (66) ausschließlich auf das Drucksieb (12) erfolgenden Absenkbewegung des Rakelwerkzeugs (16), insbesondere frei von einer Kontaktierung eines Drucktischs (22) und/oder einer Druckunterlage und/oder zumindest eines Siebdruckwerkstücks durch das Drucksieb (12), über die Sensoreinrichtung (18) eine Rakelkraftzunahme zu erfassen und/oder auszuwerten.

9. Vorrichtung (10) nach einem der Ansprüche 6 bis 8, **dadurch gekennzeichnet, dass** die Steuereinrichtung (100) dazu ausgebildet ist, während einer mittels der Stelleinrichtung (66) auf das Drucksieb (12) erfolgenden Absenkbewegung des Rakelwerkzeugs (16), in einer mit dem Drucksieb (12) auf einem Drucktisch (22) aufliegenden Betriebsstellung, über die Sensoreinrichtung (18) eine Rakelkraftzunahme zu erfassen und/oder auszuwerten.

10. Vorrichtung (10) nach einem der Ansprüche 6 bis 9, **dadurch gekennzeichnet, dass** die Steuereinrichtung (100) dazu ausgebildet ist, während einer mittels der Stelleinrichtung (66) auf einem Drucktisch (22) und/oder auf eine Druckunterlage, insbesondere in einer siebfreien Anordnung, über die Sensoreinrichtung (18) eine Rakelkraftzunahme zu erfassen und/oder auszuwerten.

11. Vorrichtung (10) nach einem der voranstehenden Ansprüche, **dadurch gekennzeichnet, dass** die Steuereinrichtung (100) dazu ausgebildet ist, mittels der Sensoreinrichtung (18) und/oder aus erfassten und/oder abgespeicherten Sensordaten der Sensoreinrichtung (18) eine Auftragskraft, die von dem Rakelwerkzeug (16) über das Drucksieb (12) wirksam auf einen Drucktisch (22) und/oder auf eine Druckunterlage und/oder auf zumindest ein Siebdruckwerkstück übertragen wird, zu ermitteln.

12. Vorrichtung (10) nach Anspruch 11, **dadurch gekennzeichnet, dass** die Steuereinrichtung (100) dazu ausgebildet ist, die Auftragskraft aus einer Differenz der durch die Sensoreinrichtung (18) erfassten Rakelkraft sowie einer vorbekannten und/oder ermittelten Siebrückstellkraft des Drucksiebs (12) zu ermitteln.

13. Vorrichtung (10) zur Herstellung von dreidimensionalen Siebdruckwerkstücken, insbesondere 3D-Siebdruckanlage, mit einem Drucksieb (12) und mit einer Rakelvorrichtung (14) zum Fluten des Drucksiebs (12) mit einer Druckmasse und/oder zum Pressen von Druckmasse durch das Drucksieb (12), wobei die Rakelvorrichtung (14) wenigstens ein Rakelwerkzeug (16), eine Sensoreinrichtung (18) zur Erfassung von auf das Rakelwerkzeug (16) wirkenden Rakelkräften sowie eine Steuereinrichtung (100) zur Auswertung und/oder Speicherung von Sensordaten der Sensoreinrichtung (18) aufweist, wobei die Steuereinrichtung (100) dazu ausgebildet ist, mittels der Sensoreinrichtung (18) und/oder aus erfassten und/oder abgespeicherten Sensordaten der Sensoreinrichtung (18) eine Auftragskraft, die von dem Rakelwerkzeug (16) über das Drucksieb (12) wirksam auf einen Drucktisch (22) und/oder auf eine Druckunterlage und/oder auf zumindest ein Siebdruckwerkstück übertragen wird, zu ermitteln.

14. Rakelvorrichtung (15), insbesondere für eine Vorrichtung (10) zur Herstellung von dreidimensionalen Siebdruckwerkstücken gemäß einem der voranstehenden Ansprüche und/oder für eine 3D-Siebdruckanlage, mit wenigstens einem Rakelwerkzeug (16) zum Fluten eines Drucksiebs (12) mit einer Druckmasse und/oder zum Pressen von Druckmasse durch ein Drucksieb (12) und mit einer Sensoreinrichtung (18) zur Erfassung von auf das Rakelwerkzeug (16) wirkenden Rakelkräften, wobei die Sensoreinrichtung (18) zur Erfassung einer Siebrückstellkraft und/oder Siebspannung und/oder Siebalterung ausgebildet ist.

15. Verfahren zur Herstellung von dreidimensionalen Siebdruckwerkstücken, insbesondere mit einer Vorrichtung (10) zur Herstellung von Siebdruckwerkstücken und/oder einer 3D-Siebdruckanlage, bei dem mittels einer Rakelvorrichtung (15) ein Drucksieb (12) mit einer Druckmasse geflutet wird und/oder bei dem mittels einer Rakelvorrichtung (15) Druckmasse durch ein Drucksieb (12) gepresst wird, wobei mittels einer Sensoreinrichtung (18) eine auf ein Rakelwerkzeug (16) der Rakelvorrichtung (15) wirkende Rakelkraft erfasst wird und wobei durch eine Steuereinrichtung (100) aus erfassten und/oder abgespeicherten Sensordaten der Sensoreinrichtung (18) eine Siebrückstellkraft und/oder Siebspannung des Drucksiebs (12) zu ermittelt wird.
